(19) Europäisches Patentamt
European Patent Office
Office européen des brevets

(11) EP 1 732 260 A1

(12) EUROPEAN PATENT APPLICATION
published in accordance with Art. 158(3) EPC

(43) Date of publication:
**13.12.2006 Bulletin 2006/50**

(21) Application number: **05710513.2**

(22) Date of filing: **22.02.2005**

(51) Int Cl.:
***H04L 9/08*** *(2006.01)* ***G06F 12/14*** *(2006.01)*

(86) International application number:
**PCT/JP2005/002787**

(87) International publication number:
**WO 2005/099167 (20.10.2005 Gazette 2005/42)**

(84) Designated Contracting States:
**DE FR GB**

(30) Priority: **31.03.2004 JP 2004102039**

(71) Applicant: **SONY CORPORATION**
**Tokyo 141-0001 (JP)**

(72) Inventor: **ASANO, Tomoyuki,**
**c/o Sony Corporation**
**Tokyo 141-0001 (JP)**

(74) Representative: **Nicholls, Michael John**
**J.A. KEMP & CO.**
**14, South Square**
**Gray's Inn**
**London WC1R 5JJ (GB)**

# (54) INFORMATION PROCESSING METHOD, DECRYPTION METHOD, INFORMATION PROCESSING DEVICE, AND COMPUTER PROGRAM

(57) A configuration by which amounts of information to be stored in equipment for decrypting a ciphertext can be reduced in a ciphertext supplying configuration to which a tree structure based on a SD scheme is applied. An intermediate label from which special subset corresponding labels among labels respectively corresponding to subsets set based on the SD scheme or a LSD scheme is set, to enable other intermediate labels to be calculated by applying a trap-door one-way permutation F based on a value of a single intermediate label. A receiver supplies special subset-non-corresponding labels and the single intermediate label. A receiver calculates the other intermediate labels by executing the trap-door one-way permutation F on the intermediate label held thereby, from which all necessary labels can be calculated.

FIG. 19

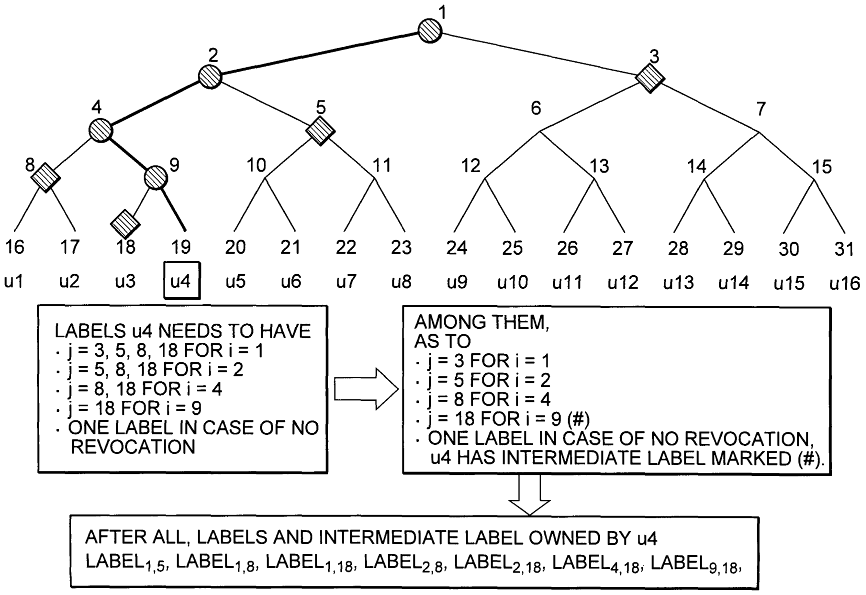


EP 1 732 260 A1

## Description

### Technical Field

The present invention relates to an information processing method, a decryption processing method, an information processing apparatus, and a computer program. More particularly, the present invention relates to an information processing method, a decryption processing method, an information processing apparatus, and a computer program, which enable efficient and secure information distribution while reducing amounts of secret information such as labels which a receiver needs to hold safely, in a Subset Difference (SD) scheme and a Layered Subset Difference (LSD) scheme which are currently known in a Broadcast Encryption scheme to which a hierarchical tree structure is applied.

### Background Art

Recently, various kinds of software data including audio data, e.g., music, image data, e.g., movies, game programs and various application programs (these are hereinafter referred to as contents) have been circulated through networks such as the Internet, or through various information recording media including compact discs (CDs), digital versatile disks (DVDs), mini disks (MDs). These circulated contents are reproduced and used by a reproducing apparatus such as a personal computer (PC), a player, or game equipment which is owned by users.

Rights of distribution or the like of many contents such as music data and image data are generally held by their creators or their distributors. Consequently, at the time of the distribution of these contents, a configuration for setting certain restricted access is generally adopted, that is to say, only the authorized users are permitted to use the contents for preventing unauthorized duplication or the like.

In particular, in recent years, recording devices and storage media for digitally recording information have been gaining popularity. By means of such digital recording devices and storage media, for example, it is possible to repeat recording and reproducing without deteriorating images and sounds, and thus problems, such as distribution of fraudulently copied contents through the Internet, and unauthorized copying of recording media such as a compact disc-recordable (CD-R) have been addressed.

As a method for preventing such unauthorized use of contents, there is a system in which a key for decoding contents or encrypted contents is encrypted and distributed for enabling only specific authorized users or authorized devices to decode the distributed data. For example, a configuration adopting a hierarchical tree structure, which is an embodiment of the Broadcast Encryption scheme, is known.

Processing of supplying encryption data such as encryption keys, using a hierarchical tree structure is described with reference to the attached drawings.

A hierarchical tree structure shown in Fig. 1 uses a binary tree. The lowermost layer of the binary tree is called a leaf, and each of portions including an apex, each branch portion and the leaf is called a node. In the binary tree hierarchical tree structure shown in Fig. 1, the leaves are denoted by 8-15, and the nodes are denoted by 1-15, and further the root is denoted by 1.

Information processing apparatus such as a player, a receiver as content utilization equipment are assigned to the leaves 8-15 in the binary tree hierarchical tree structure one by one.

Moreover, node keys are assigned to the nodes (including the leaves) 1-15 of the tree one by one. The node keys assigned to the leaves 8-15 are sometimes called leaf keys.

An information processing apparatus corresponding to each of the leaves is given node keys which are assigned to nodes in a path from the corresponding leaf to the root. In the configuration of Fig. 1, there are eight information processing apparatus assigned to the leaves 8-15 severally, and a node key is assigned to each of the nodes 1-15. An information processing apparatus 101 corresponding to the leaf 8 is given four node keys assigned to the nodes 1, 2, 4, 8. Moreover, an information processing apparatus 102 corresponding to the leaf 12 are given four node keys assigned to the nodes 1, 3, 6, 12. Each information processing apparatus keeps these node keys in storage safely.

A method for transmitting the information which only a selected information processing apparatus can obtain, by means of a setting that involves the distribution processing of the node keys is described with reference to Fig. 2. For example, there is supposed a configuration, in which content such as specific music, image data encrypted to be an encrypted content is circulated in a state obtainable by everybody by means of a broadcast distribution or a recording medium such as a DVD storing the content, and a key (content key Kc) for decoding the encrypted content is provided only to a specific user, i.e. a user or an information processing apparatus having an authorized right of using the content.

Suppose that an information processing apparatus assigned to the leaf 14 shown in Fig. 2 is excluded (revoked) as an unauthorized apparatus, and that the other information processing apparatuses are authorized information processing apparatuses. In this case, a ciphertext by which the information processing apparatus assigned to the leaf 14 cannot obtain the content key Kc, but the other information processing apparatuses can obtain the content key Kc, is generated, and the ciphertext is distributed through a network or by means of a recording medium storing the ciphertext.

In this case, the content key may be encrypted for transmission by using node keys owned jointly by as many information processing apparatuses as possible, i.e., node keys located at the upper part of the tree, among node keys other than ones (marked × in Fig. 2) owned by the information processing apparatus to be revoked (excluded).

In the example shown in Fig. 2, the node keys at the nodes 2, 6, 15 are used for enciphering the content key Kc to generate a set of ciphertexts to be provided. Namely, ciphertexts of E ($NK_2$, Kc), E ($NK_6$, Kc) and E ($NK_{15}$, Kc) are generated, and are provided while distributed through a network or stored in a recording medium. It should be noted that E(A, B) means data B encrypted by a key A. Moreover, NKn denotes an nth node key shown in the drawing. Consequently, the above formulae indicate a set of three ciphertexts including the encryption data E ($NK_2$, Kc) produced by encrypting the content key Kc with a node key $NK_2$, the encryption data E($NK_6$, Kc) produced by encrypting the content key Kc with a node key $NK_6$, and the encryption data E ($NK_{15}$, Kc) produced by encrypting the content key Kc with a node key $NK_{15}$.

If the three ciphertexts are produced and then transmitted to all of the information processing apparatus through, e. g. , a broadcast communication path, information processing apparatus not to be revoked (ones corresponding to the leaves 8-13 and 15 shown in Fig. 2) each can decode any of the ciphertexts with a node key owned by itself to obtain the content key Kc. However, the revoked (excluded) information processing apparatus corresponding to the leaf 14 does not hold any of the three node keys $NK_2$, $NK_6$ and $NK_{15}$ applied to the three ciphertexts. Consequently, even if the information processing apparatus receives the ciphertexts, the apparatus cannot perform the decoding processing of the ciphertexts, and thus the apparatus cannot obtain the content key Kc.

The above-mentioned Broadcast Encryption scheme is called a Complete Subtree scheme. If information is to be distributed using such a tree structure, there is a shortcoming such that the number of messages to be broadcast increases with increasing the number of information processing apparatuses (user equipment) corresponding to the leaves. As another shortcoming, key information such as node keys to be stored securely by each information processing apparatus (user equipment) is also increased.

As techniques for resolving such shortcomings, a Subset Difference (SD) scheme and a Layered Subset Difference (LSD) scheme being a refinement of the former, have so far been proposed. The SD scheme is disclosed in, e.g., Non-Patent Document 1, and the LSD scheme is disclosed in, e.g., Non-Patent Document 2.

In either of the schemes, supposing that the total number of receivers (users) of a Broadcast Encryption system is set to N and that the number of receivers which are to be excluded (revoked), i.e. , which are unable to receive broadcast secret information is set to r, the number of broadcast messages equals O (r), which is a number smaller than that in the above-mentioned Complete Subtree scheme and the like, and thus superior.

However, the number of keys (labels) to be held by each receiver in its safe memory equals $O(\log^2 N)$ in the SD scheme, and $O(\log^{1+\varepsilon} N)$ in the LSD scheme, where ε is an arbitrary integer. This number of keys is larger than that in other schemes such as the Complete Subtree scheme, and thus its reduction has been a problem to be solved. It should be noted that throughout the present Description, the base of log is 2 unless otherwise mentioned.

[Non-Patent Document 1] Advances in Cryptography - Crypto 2001, Lecture Notes in Computer Science 2139, Springer, 2001, pp.41-62 (D. Naor, M. Naor and J. Lotspiech, "Revocation and Tracing Schemes for Stateless Receivers")

[Non-Patent Document 2] Advances in Cryptography - Crypto 2002, Lecture Notes in Computer Science 2442, Springer, 2002, pp.47-60 (D. Halevy and A. Schamir, "The LSD Broadcast Encryption Scheme")

Disclosure of the Invention

[Issue to be Solved by the Invention]

The present invention has been made in view of such circumstances, and an object thereof is to provide an information processing method, a decryption processing method, information processing apparatus, and a computer program, which enable a reduction in amounts of secret information, such as labels, which receivers need to hold securely, and thus allowing efficient and secure information distribution when applying a one-way permutation tree based on a trap-door one-way permutation, described hereinafter, to the Subset Difference (SD) scheme and the Layered Subset Difference (LSD) scheme which are recognized as relatively efficient configurations in information distribution configurations adopting a hierarchical tree structure which is one embodiment of the Broadcast Encryption scheme.

[Means for Solving the Issue]

A first aspect of the present invention is
an information processing method for generating a hierarchical tree applied to ciphertext supplying processing in which only specific selected equipment can perform decryption using a Broadcast Encryption scheme based on a hierarchical tree configuration, the information processing method being characterized by including:

an intermediate label generating step of generating intermediate labels (IL), which are defined as having values that allow to calculate, by operation processing, values of labels corresponding to selected part of special subsets, among labels (LABEL) respectively corresponding to subsets based on a SD (Subset Difference) scheme to which the hierarchical tree is applied, and that allow to calculate values of other intermediate labels by applying a trap-door one-way permutation F based on a value of at least one of the intermediate labels;
a label generating step of generating the labels corresponding to the special subsets by performing operation processing based on the intermediate labels, and further generating the labels not corresponding to the special subsets by the operation based on the generated labels; and
a labels-for-supply determining step of determining labels for supply to receivers corresponding to terminal nodes of the hierarchical tree, the labels including
a special subset-noncorresponding label that does not corresponding to the special subset, and
an intermediate label from which the label corresponding to the special subset can be calculated by operation processing.

Furthermore, in an embodiment of the information processing method according to the present invention, the information processing method is characterized by further including a ciphertext generating step of generating ciphertexts by executing encryption processing while selectively applying subset keys derived from the respective labels corresponding to the subsets, which are generated in the label generating step, for supplying to the receiver.
Furthermore, in an embodiment of the information processing method according to the present invention, the label generating step is characterized by including a step of calculating the values of the labels corresponding to the special subsets by performing hash processing on the intermediate labels.
Furthermore, in an embodiment of the information processing method according to the present invention, the label generating step is characterized by including a step of generating other labels by pseudo-random number generating processing performed on the values of the labels corresponding to the special subsets.
Furthermore, in an embodiment of the information processing method according to the present invention, the intermediate label generating step is characterized by being a step of selecting a value $x_1 \in Z^*_M$ randomly, in a hierarchical tree with 2N-1 nodes, calculating node-corresponding values $x_1$ to $X_{2N-1}$ in the hierarchical tree with 2N-1 nodes, by applying either of the following equations, to which an inverse permutation $F^{-1}$ of a trap-door one-way permutation F is applied, while incrementing i by one up to i = 2 to 2N-1 using i as a counter, and further setting calculated values as the values of the intermediate labels (IL) from which the special subset-corresponding labels can be calculated:

[Equation 5]

$$x_i = (x_{\lfloor i/2 \rfloor} + i)^d \bmod M$$

where $\lfloor i \rfloor$ represents the largest integer equal to i or less, and

[Equation 6]

$$x_i = (x_{\lfloor i/2 \rfloor} + h(i))^d \bmod M$$

where $\lfloor i \rfloor$ represents the largest integer equal to i or less,
where M, d are a modulus M and a secret exponent d as cryptographic parameters.
Furthermore, in an embodiment of the information processing method according to the present invention, the special subset selected in the intermediate label generating step is characterized by being at least one of a first special subset and a second special subset, the first special subset being one of subsets $S_{i,j}$ and having a direct descendant parent-child relationship between a node i and a node j, the subsets $S_{i,j}$ being defined as subsets that are obtained by excluding a subtree rooted at the node j that is lower than the node i from a subtree rooted at the node i in the hierarchical tree, the second special subset being a subset $S_{1,\phi}$ defined as an entire-tree set having a root including all leaves of the hierarchical tree as a top.

Furthermore, in an embodiment of the information processing method according to the present invention, the labels-for-supply determining step is characterized by being a step of specifying one of the intermediate labels for supply to the receiver corresponding to the terminal node of the hierarchical tree as being an intermediate label corresponding to a lowermost one of subsets $S_{i,j}$ constituting the first special subset(s).

Furthermore, in an embodiment of the information processing method according to the present invention, the intermediate label generating step is characterized by being a step of setting labels corresponding to selected part of special subsets, among labels (LABEL) respectively corresponding to subsets set in accordance with a Basic LSD (Basic Layered Subset Difference) scheme having a subset management configuration based on layers separated by a single Special Level set in the hierarchical tree, as values calculable from the intermediate labels (IL) corresponding to the special subsets.

Furthermore, in an embodiment of the information processing method according to the present invention, the intermediate label generating step is characterized by being a step of setting labels corresponding to selected part of special subsets, among labels (LABEL) respectively corresponding to subsets set in accordance with a General LSD (General Layered Subset Difference) scheme having a subset management configuration based on layers separated by a plurality of Special Levels set in the hierarchical tree, as values calculable from the intermediate labels (IL) corresponding to the special subsets.

Furthermore, a second aspect of the present invention is

a decryption processing method for executing decrypting processing of ciphertexts encrypted by subset keys respectively corresponding to subsets set based on a SD (Subset Difference) scheme which is a Broadcast Encryption scheme based on a hierarchical tree configuration, and the decryption processing method is characterized by including:

a ciphertext selecting step of selecting a ciphertext generated by applying a subset key derivable by pseudo-random number generating processing based on a label held therein or a label calculable from an intermediate label held therein, from the ciphertexts;

a label calculating step of calculating a label corresponding to a special subset by executing operation processing on the intermediate label held if the subset key to be applied to the ciphertext cannot be derived by the pseudo-random number generating processing based on the label held;

a step of generating the subset key by the pseudo-random number generating processing based on the label held or the label calculated; and

a decrypting step of executing the decrypting processing of the ciphertext by applying the generated subset key.

Furthermore, in an embodiment of the decryption processing method according to the present invention, the label calculating step is characterized by including a step of calculating another intermediate label by executing a trap-door one-way permutation F on the intermediate label held.

Furthermore, in an embodiment of the decryption processing method according to the present invention, the label calculating step is characterized by including a step of executing calculation of the label by performing hash processing on the intermediate label held or the another intermediate label obtained by executing the trap-door one-way permutation F on the intermediate label held.

Furthermore, in an embodiment of the decryption processing method according to the present invention, the label calculating step is characterized in that: the subset key to be applied to the ciphertext is a subset key calculable by the pseudo-random number generating processing based on a label corresponding to a first special subset or a second special subset, the first special subset being one of subsets $S_{i,j}$ and having a direct descendant parent-child relationship between a node i and a node j, the subsets $S_{i,j}$ being defined as subsets that are obtained by excluding a subtree rooted at the node j that is lower than the node i from a subtree rooted at the node i in the hierarchical tree, the second special subset being a subset $S_{1,\phi}$ defined as an entire-tree set having a root including all leaves of the hierarchical tree as a top. The label calculating step is further characterized by being a step of calculating the label corresponding to the special subset by performing operation processing on the intermediate label held, if the label corresponding to the special subset is not held.

Furthermore, in an embodiment of the decryption processing method according to the present invention, the label calculating step is characterized by being a step of calculating a label corresponding to a special subset including nodes in a path from a node to which a receiver for executing the decrypting processing is assigned to a root in the hierarchical tree, by performing operation processing on the intermediate label held.

Furthermore, a third aspect of the present invention is

an information processing method for executing generating processing of ciphertexts in which only specific selected equipment can perform decryption using a Broadcast Encryption scheme based on a hierarchical tree configuration, and the information processing method is characterized by including

a ciphertext generating step of generating ciphertexts by executing encryption processing while selectively applying subset keys respectively corresponding to subsets set based on a SD (Subset Difference) scheme to which a hierarchical tree is applied;
wherein the subset keys to be applied in the ciphertext generating step are subset keys calculable from the labels (LABEL) respectively corresponding to the subsets, and are set such that values of labels corresponding to selected part of special subsets can be calculated by operation processing based on intermediate labels (IL) and that the intermediate labels allow to calculate values of other intermediate labels by applying a trap-door one-way permutation F based on a value of at least one intermediate label.

Furthermore, in an embodiment of the information processing method according to the present invention, the information processing method is characterized by further including a subset key generating step of generating subset keys, wherein the subset key generating step is processing of generating the subset keys by pseudo-random number generating processing based on the labels (LABEL) respectively corresponding to the subsets.

Furthermore, in an embodiment of the information processing method according to the present invention, the information processing method is characterized by further including a subset key generating step of generating subset keys, wherein the subset key generating step includes: an intermediate label generating step of generating the intermediate labels corresponding to the special subsets based on an operation expression to which an inverse permutation $F^{-1}$ of a trap-door one-way permutation F using $x_1 \in Z^*_M$, and a modulus M and a secret exponent d as cryptographic parameters is applied; a label generating step of generating labels corresponding to the special subsets by operation processing based on the intermediate labels, and further generating labels not corresponding to the special subsets by an operation based on the generated labels; and a step of calculating the subset keys by operation processing based on the labels.

Furthermore, in an embodiment of the information processing method according to the present invention, the special subset selected in the intermediate label generating step is characterized by being at least one of a first special subset and a second special subset, the first special subset being one of subsets $S_{i,j}$ and having a direct descendant parent-child relationship between a node i and a node j, the subsets $S_{i,j}$ being defined as subsets that are obtained by excluding a subtree rooted at the node j that is lower than the node i from a subtree rooted at the node i in the hierarchical tree, the second special subset being a subset $S_{1,\phi}$ defined as an entire-tree set having a root including all leaves of the hierarchical tree as a top.

Furthermore, in an embodiment of the information processing method according to the present invention, the intermediate label generating step is characterized by being a step of setting values of labels corresponding to selected part of special subsets, among labels (LABEL) corresponding to subsets set based on a Basic LSD (Basic Layered Subset Difference) scheme having a subset management configuration based on layers separated by a single Special Level set in the hierarchical tree, as values calculable from the intermediate labels (IL) corresponding to the special subsets.

Furthermore, in an embodiment of the information processing method according to the present invention, the intermediate label generating step is characterized by being a step of setting values of labels corresponding to selected part of special subsets, among labels (LABEL) corresponding to subsets set based on a General LSD (General Layered Subset Difference) scheme having a subset management configuration based on layers separated by a plurality of Special Levels set in the hierarchical tree, as values calculable from the intermediate labels (IL) corresponding to the special subsets.

Furthermore, a fourth aspect of the present invention is
an information processing apparatus for generating a hierarchical tree applied to ciphertext supplying processing in which only specific selected equipment can perform decryption using a Broadcast Encryption scheme based on a hierarchical tree configuration, and the information processing apparatus is characterized by including:

intermediate label generating means for generating intermediate labels (IL), which are defined as having values that allow to calculate, by operation processing, values of labels corresponding to selected part of special subsets, among labels (LABEL) respectively corresponding to subsets based on a SD (Subset Difference) scheme to which the hierarchical tree is applied, and that allows to calculate values of other intermediate labels by applying a trap-door one-way permutation F based on a value of at least one of the intermediate label;
label generating means for generating the labels corresponding to the special subsets by operation processing based on the intermediate labels, and further generating labels not corresponding to the special subsets by an operation based on the generated labels; and
labels-for-supply determining means for determining labels for supply to receivers corresponding to terminal nodes of the hierarchical tree, the labels including
a special subset-noncorresponding label that does not corresponding to the special subset, and
an intermediate label from which label corresponding to the special subset can be calculated by operation processing.

Furthermore, in an embodiment of the information processing apparatus according to the present invention, the information processing apparatus is characterized by further including ciphertext generating means for generating ciphertexts by executing encryption processing while selectively applying subset keys derived from the respective labels corresponding to subsets, which are generated by the label generating means, for supplying to the receiver.

Furthermore, in an embodiment of the information processing apparatus according to the present invention, the label generating means is characterized by being configured to calculate the values of the labels corresponding to the special subsets by performing hash processing on the intermediate labels.

Furthermore, in an embodiment of the information processing apparatus according to the present invention, the label generating means is characterized by being configured to generate other labels by pseudo-random number generating processing performed on the values of the labels corresponding to the special subsets.

Furthermore, in an embodiment of the information processing apparatus according to the present invention, the intermediate label generating means is characterized by being configured to select a value $x_1 \in Z^*_M$ randomly, in a hierarchical tree with 2N-1 nodes, calculating node-corresponding values $x_1$ to $x_{2N-1}$ in the hierarchical tree with 2N-1 nodes by applying either of the following equations, to which an inverse permutation $F^{-1}$ of a trap-door one-way permutation F is applied, while incrementing i by one up to i = 2 to 2N-1 using i as a counter, and further set calculated values as the values of the intermediate labels (IL) from which the special subset-corresponding labels can be calculated:

[Equation 7]

$$x_i = (x_{\lfloor i/2 \rfloor} + i)^d \bmod M$$

where $\lfloor i \rfloor$ represents the largest integer equal to i or less, or

[Equation 8]

$$x_i = (x_{\lfloor i/2 \rfloor} + h(i))^d \bmod M$$

where $\lfloor i \rfloor$ represents the largest integer equal to i or less,
where M, d are a modulus M and a secret exponent d as cryptographic parameters.

Furthermore, in an embodiment of the information processing apparatus according to the present invention, the special subset selected in the intermediate label generating means is characterized by being at least one of a first special subset and a second special subset, the first special subset being one of subsets $S_{i,j}$ and having a direct descendant parent-child relationship between a node i and a node j, the subsets $S_{i,j}$ being defined as subsets that are obtained by excluding a subtree rooted at the node j that is lower than the node i from a subtree rooted at the node i in the hierarchical tree, the second special subset being a subset $S_{1,\phi}$ defined as an entire-tree set having a root including all leaves of the hierarchical tree as a top.

Furthermore, in an embodiment of the information processing apparatus according to the present invention, the labels-for-supply determining means is characterized by being configured to specify one of the intermediate labels for supply to the receiver corresponding to the terminal node of the hierarchical tree as being an intermediate label corresponding to a lowermost one of subsets $S_{i,j}$ constituting the first special subset(s).

Furthermore, in an embodiment of the information processing apparatus according to the present invention, the intermediate label generating means is characterized by being configured to set labels corresponding to selected part of special subsets, among labels (LABEL) respectively corresponding to subsets set in accordance with a Basic LSD (Basic Layered Subset Difference) scheme having a subset management configuration based on layers separated by a single Special Level set in the hierarchical tree, as values calculable from the intermediate labels (IL) corresponding to the special subsets.

Furthermore, in an embodiment of the information processing apparatus according to the present invention, the intermediate label generating means is characterized by being configured to set labels corresponding to selected part of special subsets, among labels (LABEL) respectively corresponding to subsets set in accordance with a General LSD (General Layered Subset Difference) scheme having a subset management configuration based on layers separated by a plurality of Special Levels set in the hierarchical tree, as values calculable from the intermediate labels (IL) corresponding to the special subsets.

Furthermore, a fifth aspect of the present invention is an information processing apparatus for executing decrypting processing of ciphertexts encrypted by subset keys respectively corresponding to subsets set based on a SD (Subset Difference) scheme which is a Broadcast Encryption scheme based on a hierarchical tree configuration, and the information processing apparatus is characterized by including:

ciphertext selecting means for selecting a ciphertext generated by applying a subset key derivable by pseudo-random number generating processing based on a label held therein or a label calculable from an intermediate label held therein, from the ciphertexts;
label calculating means for calculating a label corresponding to a special subset by executing operation processing on the intermediate label held if the subset key to be applied to the ciphertext cannot be derived by the pseudo-random number generating processing based on the label held;
means for generating the subset key by the pseudo-random number generating processing based on the label held or the label calculated; and
decrypting means for executing the decrypting processing of the ciphertext by applying the generated subset key.

Furthermore, in an embodiment of the information processing apparatus according to the present invention, the label calculating means is characterized by being configured to calculate another intermediate label by executing a trap-door one-way permutation F on the intermediate label held.

Furthermore, in an embodiment of the information processing apparatus according to the present invention, the label calculating means is characterized by being configured to execute calculation of the label by performing hash processing on the intermediate label held or the another intermediate label obtained by executing the trap-door one-way permutation F on the intermediate label held.

Furthermore, in an embodiment of the information processing apparatus according to the present invention, the label generating means is characterized in that: the subset key to be applied to the ciphertext is a subset key calculable by the pseudo-random number generating processing based on a label corresponding to either a first special subset or a second special subset, the first special subset being one of subsets $S_{i,j}$ and having a direct descendant parent-child relationship between a node i and a node j, the subsets $S_{i,j}$ being defined as subsets that are obtained by excluding a subtree rooted at the node j that is lower than the node i from a subtree rooted at the node i in the hierarchical tree, the second special subset being a subset $S_{i,\phi}$ defined as an entire-tree set having a root including all leaves of the hierarchical tree as a top. The label generating means is characterized by being configured to calculate the label corresponding to the special subset by operation processing on the intermediate label held, if the label corresponding to the special subset is not held.

Furthermore, in an embodiment of the information processing apparatus according to the present invention, the label calculating means is characterized by being configured to calculate a label corresponding to a special subset including nodes in a path from a node to which a receiver for executing the decrypting processing is assigned to a root in the hierarchical tree, by performing operation processing on the intermediate label held.

Furthermore, a sixth aspect of the present invention is an information processing apparatus for executing generating processing of ciphertexts in which only specific selected equipment can perform decryption using a Broadcast Encryption scheme based on a hierarchical tree configuration, and the information processing apparatus is characterized by including:

ciphertext generating means for generating ciphertexts by executing encryption processing while selectively applying subset keys respectively corresponding to subsets set based on a SD (Subset Difference) scheme, to which a hierarchical tree is applied,
wherein the subset keys to be applied in the ciphertext generating means are subset keys calculable from the labels (LABEL) respectively corresponding to the subsets, and set such that values of labels corresponding to selected part of special subsets can be calculated by operation processing based on intermediate labels (IL) and that the intermediate labels allow to calculate values of other intermediate labels by applying a trap-door one-way permutation F based on a value of at least one intermediate label.

Furthermore, in an embodiment of the information processing apparatus according to the present invention, the information processing apparatus is characterized by further including
subset key generating means for generating the subset keys,
wherein the subset key generating means is
configured to generate the subset keys by pseudo-random number generating processing based on the labels (LABEL) respectively corresponding to the subsets.

Furthermore, in an embodiment of the information processing apparatus according to the present invention, the information processing apparatus is characterized by further including subset key generating means for generating the subset keys, wherein the subset key generating means is configured to generate the intermediate labels corresponding to the special subsets based on an operation expression to which an inverse permutation $F^{-1}$ of a trap-door one-way permutation F using $x_1 \in Z^*_M$, and a modulus M and a secret exponent d as cryptographic parameters is applied, generate the labels corresponding to the special subsets by operation processing based on the intermediate labels, further generate labels not corresponding to the special subsets by an operation based on the generated labels, and calculate the subset keys by performing operation processing based on the generated labels.

Furthermore, in an embodiment of the information processing apparatus according to the present invention, the special subset is characterized by being at least one of a first special subset and a second special subset, the first special subset being one of subsets $S_{i,j}$ and having a direct descendant parent-child relationship between a node i and a node j, the subsets $S_{i,j}$ being defined as subsets that are obtained by excluding a subtree rooted at the node j that is lower than the node i from a subtree rooted at the node i in the hierarchical tree, the second special subset being a subset $S_{1,\phi}$ defined as an entire-tree set having a root including all leaves of the hierarchical tree as a top.

Furthermore, in an embodiment of the information processing apparatus according to the present invention, the subset is characterized by being a subset set according to a Basic LSD (Basic Layered Subset Difference) scheme having a subset management configuration based on layers separated by a single Special Level set in the hierarchical tree.

Furthermore, in an embodiment of the information processing apparatus according to the present invention, the subset is characterized by being a subset set according to a General LSD (General Layered Subset Difference) scheme having a subset management configuration based on layers separated by a plurality of Special Levels set in the hierarchical tree.

Furthermore, a seventh aspect of the present invention is a computer program for generating a hierarchical tree applied to ciphertext supplying processing in which only specific selected equipment can perform decryption using a Broadcast Encryption scheme based on a hierarchical tree configuration, and the computer program is characterized by including:

an intermediate label generating step of generating intermediate labels (IL), which are defined as having values that allow to calculate, by operation processing, values of labels corresponding to selected part of special subsets, among labels (LABEL) respectively corresponding to subsets based on a SD (Subset Difference) scheme to which the hierarchical tree is applied, and that allows to calculate values of other intermediate labels by applying a trap-door one-way permutation F based on a value of at least one of the intermediate label;

a label generating step of generating the labels corresponding to the special subsets by operation processing based on the intermediate labels, and further generating labels not corresponding to the special subsets by an operation based on the generated labels; and

a labels-for-supply determining step of determining labels for supply to receivers corresponding to terminal nodes of the hierarchical tree, the labels including

a special subset-noncorresponding label that does not corresponding to the special subset, and

an intermediate label from which label corresponding to the special subset can be calculated by operation processing.

An eighth aspect of the present invention is a computer program for executing decrypting processing of ciphertexts encrypted by subset keys respectively corresponding to subsets set based on a SD (Subset Difference) scheme which is a Broadcast Encryption scheme based on a hierarchical tree configuration, and the computer program is characterized by including:

a ciphertext selecting step of selecting a ciphertext generated by applying a subset key derivable by pseudo-random number generating processing based on a label held therein or a label calculable from an intermediate label held therein, from the ciphertexts;

a label calculating step of calculating a label corresponding to a special subset by executing operation processing on the intermediate label held if the subset key to be applied to the ciphertext cannot be derived by the pseudo-random number generating processing based on the label held;

a step of generating the subset key by the pseudo-random number generating processing based on the label held or the label calculated; and

a decrypting step of executing the decrypting processing of the ciphertext by applying the generated subset key.

Furthermore, a ninth aspect of the present invention is a computer program for executing generating processing of ciphertexts in which only specific selected equipment can perform decryption using a Broadcast Encryption scheme based on a hierarchical tree configuration, and the computer program is characterized by including

a ciphertext generating step of generating ciphertexts by executing encryption processing while selectively applying subset keys respectively corresponding to subsets set based on a SD (Subset Difference) scheme to which a hierarchical tree is applied;

wherein the subset keys to be applied in the ciphertext generating step are subset keys calculable from the labels (LABEL) respectively corresponding to the subsets, and are set such that values of labels corresponding to selected part of special subsets can be calculated by operation processing based on intermediate labels (IL) and that the intermediate labels allow to calculate values of other intermediate labels by applying a trap-door one-way permutation F based on a value of at least one intermediate label.

It should be noted that the computer program of the present invention is a computer program that can be provided by a storage medium, s communication medium, e.g., a storage medium such as a CD or an FD, an MO, or a communication medium such as a network, provided in a computer-readable form to, e.g., a general-purpose computer system that can execute various program codes. By providing such a program in a computer-readable form, processing according to the program is realized on the computer system.

Further objects, features and advantages of the present invention will become apparent from a more detailed description that is based on a later-described embodiment of the present invention and accompanying drawings. It should be noted that the system used in the present Description means a logical set configuration of a plurality of apparatus, and is not limited to one wherein apparatus each having its own configuration are grouped within the same enclosure.

[Effects of the Invention]

According to the configuration of the present invention, a one-way permutation tree based on a single trap-door one-way permutation is applied further to a Subset Difference (SD) scheme, and a Layered Subset Difference (LSD) scheme which are deemed to be relatively efficient configurations in information distribution configurations adopting a hierarchical tree structure being one embodiment of a Broadcast Encryption scheme, whereby amounts of information each receiver should hold safely can be reduced.

Furthermore, in the configuration of the present invention, intermediate labels which are intermediate labels (IL) set as values from which values of labels corresponding to selected part of special subsets, among labels (LABEL) corresponding to subsets set based on the SD scheme or the LSD scheme to which the hierarchical tree is applied, can be calculated by operation processing, and these intermediate labels have values from which values of other intermediate labels can be calculated by applying a trap-door one-way permutation F based on a value of at least one intermediate label. Since it is configured such that a receiver is given, in addition to labels not corresponding to the special subsets, one intermediate label fromwhich the labels corresponding to the special subsets can be derived, the number of labels supplied to the receiver in the conventional SD scheme or LSD scheme can be reduced. As to the reduced labels, the other intermediate labels can be calculated by executing the trap-door one-way permutation F on the intermediate label held by the receiver, whereby processing on all the subsets settable based on the conventional SD or LSD scheme can be performed. As a result of applying the configuration of the present invention, a reduction in amounts of information (labels) each receiver should hold can be realized.

[Brief Description of Drawings]

[Fig. 1] It is a view for illustrating a binary tree hierarchical tree structure.
[Fig. 2] It is a view for illustrating a method by which the information obtainable only by selected information processing apparatus is transmitted in a binary tree hierarchical tree structure.
[Fig. 3] It is a view for illustrating a hierarchical tree structure which is applied in a Complete Subtree (CS) scheme and in which each of nodes bifurcates.
[Fig. 4] It is a view for illustrating node keys owned by a receiver assigned to a leaf, in the Complete Subtree (CS) scheme.
[Fig. 5] It is a view for illustrating how secret information is selectively supplied only to nonrevoked receivers in the CS scheme.
[Fig. 6] It is a view for illustrating the definition of a subset in a Subset Difference (SD) scheme.
[Fig. 7] It is a view for illustrating the setting and configuration of labels in the Subset Difference (SD) scheme.
[Fig. 8] It is a view for illustrating the setting of subsets in the Subset Difference (SD) scheme.
[Fig. 9] It is a view showing labels to be held by each receiver given that the total number of receivers is set to N=16 in the SD scheme.
[Fig. 10] It is a view for illustrating details of the labels to be held by each receiver in the SD scheme.
[Fig. 11] It is a view for illustrating details of the labels to be held by each receiver in the SD scheme.
[Fig. 12] It is a view for illustrating details of subsets to which a specific receiver u4 belongs, in the SD scheme.
[Fig. 13] It is a view for illustrating the configuration of a one-way permutation tree.
[Fig. 14] It is a flow diagram for illustrating an algorithm for setting 2N-1 node-corresponding values corresponding to nodes in the one-way permutation tree.

[Fig. 15] It is a view for illustrating a node number setting example in which identifiers (numbers) are sequentially given to a root denoted by 1 and its lower nodes in terms of "breadth first order".

[Fig. 16] It is a view for illustrating a configuration example of a first special subset $SS_{P(y),S(y)}$ in which nodes bear a parent-child relationship.

[Fig. 17] It is a view showing correspondence between the labels corresponding to special subsets and the values $x_1, x_2, \cdots, x_{2N-1}$ used as 2N-1 intermediate labels calculated by the algorithm illustrated with reference to Fig. 14.

[Fig. 18] It is a view for illustrating correspondence between an intermediate label and a label in the subset corresponding to Fig. 16.

[Fig. 19] It is a view for illustrating determining processing of labels for supply to a receiver.

[Fig. 20] It is a flow diagram showing setup processing.

[Fig. 21] It is a view showing subsets used to revoke receivers u5, u11, u12 in a hierarchical tree configuration in which the total number of receivers is set to N=16.

[Fig. 22] It is a view showing a flow for illustrating a procedure for information distributing processing.

[Fig. 23] It is a view for illustrating a specific example of subset key deriving processing.

[Fig. 24] It is a view showing a flowchart for illustrating a procedure executed by a receiver, as to subset key acquiring and ciphertext decrypting processing from reception of ciphertexts.

[Fig. 25] It is a flow diagram for illustrating a detailed procedure for the subset key deriving processing by a receiver, in the SD scheme to which the one-way permutation tree is applied.

[Fig. 26] It is a view for illustrating the configuration of an information processing apparatus for executing label determining processing, ciphertext generating processing.

[Fig. 27] It is a view for illustrating the functional configuration of an information processing apparatus as a receiver for executing the ciphertext decrypting processing.

[Fig. 28] It is a view showing a block diagram as a hardware configuration example of the information processing apparatus.

[Fig. 29] It is a view for illustrating a Basic LSD scheme.

[Fig. 30] It is a view for illustrating the number of labels to be held by each of receivers in the Basic LSD scheme.

[Fig. 31] It is a view for illustrating a configuration for reducing the number of labels in the Basic LSD scheme using the one-way permutation tree.

Best Modes for Carrying Out the Invention

Below, details of an information processing method, a decryption processing method, an information processing apparatus, and a computer program are described with reference to the drawings.

It should be noted that the description is given in accordance with the following items.

1. Outline of Complete Subtree (CS) scheme
2. Outline of Subset Difference (SD) scheme
3. Configuration for reducing the number of labels in the SD scheme using a one-way permutation tree
4. Method example for configuring a one-way permutation tree
5. Information distributing processing example to which the one-way permutation tree is applied
6. Outline of Basic Layered Subset Difference (Basic LSD) scheme
7. Configuration for reducing the number of labels in the Basic LSD scheme using the one-way permutation tree
8. Outline of General Layered Subset Difference (General LSD) scheme
9. Configuration for reducing the number of labels in the General LSD scheme using the one-way permutation tree

[1. Outline of Complete Subtree (CS) scheme]

First, a Complete Subtree (CS) scheme is outlined, which is known as the Broadcast Encryption scheme to which an existing hierarchical tree structure is applied.

It should be noted that in the following description, it is supposed that the total number N of information processing apparatus (receivers) set so as to correspond to leaves of a hierarchical tree structure equals 2 to an nth power, for ease of description. Moreover, throughout the following description, the base of a function log is 2 in all instances. It should be noted that equipment assigned to the leaves of the hierarchical tree structure may include various information processing apparatus, such as, e.g., PCs, portable terminals, as long as they are capable of executing decrypting processing of secret information, hereinafter described. Here, the equipment is referred to collectively as receivers. Furthermore, ciphertext distributing processing in the present invention is construed to include not only ciphertext supplying processing by means of communication via a communication network, but also processing of supplying ciphertexts stored in a recording medium.

It should be noted that below-listed symbols are used in the following description.

P (i) : The parent node of a node i, and its node number
S(i): The sibling node of the node i (i.e., a node different from the node i and having the same parent as the node i), and its node number
LC(i): A child node on the left side of the node i, and its node number
RC (i) : A child node on the right side of the node i, and its node number

(1) Complete Subtree (CS) scheme

The Complete Subtree (CS) scheme is basically equivalent to the configuration described in the Background Art section. As shown in Fig. 3, a binary tree in which each of nodes bifurcates is used as a hierarchical tree structure. Fig. 3 shows an example in which the number of receivers is N=16. The receivers are assigned to leaves of this binary tree (u1-u16 in Fig. 3), respectively. Moreover, any node of the tree is used to represent "a set consisting of receivers assigned to leaves of a subtree rooted at the top of the node". A node i 201 in Fig. 3 represents a set consisting of the receivers u5 and u6.
A key (node key) is defined for any configuration node of the binary tree shown in Fig. 3. Each receiver is given node keys assigned to nodes in a path from a leaf to which it is assigned to the root (apex) of the tree, and the receiver holds these node keys in a secure memory. The defining of the tree, the defining of the node keys, the assigning of the receivers, the distributing of the node keys and the like are performed by a reliable management center called "Trusted Center (TC) ".
As shown in Fig. 4, sixteen receivers u1-u16 are assigned to the hierarchical tree, and there are thirty-one nodes 1-31. The receiver u4 is given five node keys assigned to the nodes 1, 2, 4, 9, 19. Namely, supposing that the total number of receivers is N, each receiver holds log N+1 node keys.
Referring to Fig. 5, how secret information (e.g., a content key for decrypting an encrypted content) is transmitted to nonrevoked receivers using this setting is described. It is supposed here that the management center (TC) is a transmitter of the secret information. Now, let receivers u2, u11, u12 be receivers to be revoked. Namely, by excluding (revoking) the receivers u2, u11, u12 as unauthorized equipment, only receivers other than these are enabled to receive the information securely, i.e., to perform decryption based on ciphertexts broadcast.
When the management center (TC) transmits the secret information, the management center does not use, as encryption keys, node keys respectively assigned to nodes in paths from leaves to which the revoked receivers u2, u11, u12 are assigned to the root of the tree, but generates and broadcasts a set of ciphertexts.
The node keys respectively assigned to the leaves or nodes in the paths from the leaves to which the revoked receivers u2, u11, u12 are assigned to the root of the tree are keys owned by these receivers to be revoked, and thus, if these keys are used, the revoked equipment can obtain the secret information. Therefore, the transmitter does not use these keys, but generates and broadcasts a set of ciphertexts.
When the nodes in the paths from the leaves to which the revoked receivers u2, u11, u12 are assigned to the root of the tree, as well as the paths are excluded from the tree, one or more subtrees remain, which are, e.g., a subtree rooted at a node 5, and a subtree rooted at a node 12.
The transmitter of the secret information transmits a set of ciphertexts into which the secret information is encrypted using node keys assigned to the nodes nearest to the roots of these subtrees, i.e., nodes 5, 7, 9, 12, 16 in the example shown in Fig. 5. For example, supposing that the secret information for transmission is a content key Kc to be applied to decryption of the encrypted content, and that the node keys assigned to the nodes 5, 7, 9, 12, 16 are NK5, NK7, NK9, NK12, NK16, the transmitter of the secret information generates a set of ciphertexts
E(NK5, Kc), E(NK7, Kc), E(NK9, Kc), E(NK12, Kc), E(NK16, Kc),
and distributes the generated ciphertext set via a network or supplies a recording medium storing it. It should be noted that E(A, B) means data B encrypted by a key A.
The above-mentioned set of ciphertexts cannot be decrypted only by the revoked receivers u2, u11, u12, but can be decrypted by the other receivers. By generating and transmitting such a ciphertext set, efficient and secure transmission of secret information can be implemented.
Each receiver can obtain the secret information by decrypting one of the transmitted ciphertexts which it can decrypt, i.e., one ciphertext encrypted using the node key corresponding to a node in a path from a leaf to which it is assigned to the root. In the above example, holding a node key for the node 9, the receiver u4 can decrypt the ciphertext E (NK9, Kc) encrypted using this key. In this way, there always be one ciphertext a nonrevoked receiver can decrypt in the ciphertext set.

[2. Outline of Subset Difference (SD) scheme]

As mentioned above, in the Complete Subtree (CS) scheme, each node of a hierarchical tree is used to represent "a set consisting of receivers assigned to leaves of a subtree rooted at the node". By contrast, in a Subset Difference (SD) scheme, two nodes i, j (where i is an ancestor node of j) of a hierarchical tree are used to represent "a set obtained by subtracting (a set consisting of leaves of a subtree rooted at the node j) from (a set consisting of leaves of a subtree rooted at the node i)" .

For example, a set $S_{i,j}$ defined by a node i 231 and a node j 232 of Fig. 6 is obtained by subtracting u5, u6 from a set of receivers u1-u8. Namely, $S_{i,j}$ = {u1, u2, u3, u4, u7, u8}. Such a set is defined as to all the pairs of nodes i,j where the node i is an ancestor of the node j (i.e., the node j is not the same as the node i, and the node i exists in a path from the node j to the root).

Any subset key $SK_{i,j}$ is set as a key corresponding to any subset $S_{i,j}$. The subset key $SK_{i,j}$ is set as a key shared in common by the subset $S_{i,j}$ = {u1, u2, u3, u4, u7, u8} obtained by excluding u5, u6 from the set of u1-u8, and by transmitting information in which the secret information is encrypted using the subset key $SK_{i,j}$ as an encryption key, decryption can be implemented only by the subset $S_{i,j}$ = {u1, u2, u3, u4, u7, u8}, and thus u5, u6 can be revoked (excluded).

Under such a setting, the number of sets to which a single receiver belongs equals a number O (N) indicated by the following expression.

[Equation 9]

$$\sum_{k=1}^{\log N} (2^k - k) = O(N)$$

Therefore, when a key (subset key) is assigned to each of the sets (subsets) independently, each receiver need to hold O (N) subset keys securely. However, the number of subset keys increases tremendously as the total number N of receivers increases, and consequently, it is actually difficult to have each equipment hold these tremendous amounts of information securely.

To overcome this difficulty, the following technique has been devised in the Subset Difference (SD) scheme. Similarly to the above-mentioned Complete Subtree (CS) scheme, it is supposed that the management center (TC) performs the defining of a hierarchical tree, the defining of subsets, the defining and distributing of keys and the like.

First, as shown in Fig. 7 (A), the management center (TC), paying attention to a certain internal node (i.e., a node which is not a leaf) i, randomly selects a C-bit value S by giving the node i a label LABELi.

Next, as shown in Fig. 7 (B), LABELi = S is inputted to a C-bit-input 3C-bit-output pseudo-random number generator G. The output is divided into C-bit parts from the left (from the highest-order bit side), and they are denoted as $G_L(S)$, $G_M(S)$, $G_R(S)$, respectively. Then, a child node k on the left side of the node i shown in Fig. 7 (A) is given a label $G_L(S)$, and a child node on the right side of the node i is given a label $G_R(S)$.

Now, as to the node k being the child node on the left side of the node i in Fig. 7, given the node i being set as the initial point, a label $LABEL_{i,k}$ of the node k is $LABEL_{i,k} = G_L(S)$. Let this be T. Next, the label $LABEL_{i,k}$ of the node k, i.e., $LABEL_{i,k} = G_L(S) = T$ is inputted this time to the pseudo-random number generator G shown in Fig. 7 (B), and $G_L$ (T), $G_M(T)$, $G_R(T)$ into which the output is divided as the C-bit parts from the left are set as follows.

$G_L(T)$ = a label $LABEL_{i,LC(k)}$ of a child node LC(k) on the left side of the node k given the node i being the initial point

$G_M(T)$ = a key (this is supposed to be a subset key $SK_{i,k}$ corresponding to a set $S_{i,k}$) of the node k given the node i being the initial point

$G_R(T)$ = a label $LABEL_{i,RC(k)}$ of a child node RC(k) on the right side of the node k given the node i being the initial point

By repeating this processing, labels are produced, which correspond to all the nodes which are descendants of the node i given the node i being the initial point. It should be noted that according to the above-mentioned definition, any set $S_{i,i}$ is a null set, and when the node i is set as the initial point, a key for the node i is not needed. Thus, it should be reminded that $G_M(S)$ being the middle part of an output obtained by inputting any $LABEL_i$ into the pseudo-random number generator G is not used.

Let this be indicated using the example of Fig. 7 (A). The label S of the node i being the initial point is determined. $G_R(S)$ is the label of the child node on the right side of the node i given the node i being the initial point. Furthermore, $G_L(G_R(S))$ obtained by inputting $G_R(S)$ into the pseudo-random number generator G is a label $LABEL_{i,j}$ of a node j given the node i being the initial point. The processing of producing labels corresponding to all the nodes which are descendants of the node i given the node i being the initial point is performed on all the internal nodes i.

These steps of the processing are performed by the management center (TC) at the time of a system setup. The pseudo-random number generator (or a pseudo-random number generating function) G is specified and published by the management center (TC). Thus, by using this, a receiver given the $LABEL_{i,j}$ is enabled to calculate labels $LABEL_{i,n}$ for all the nodes which are descendants of the node j given the node i being the initial point, and calculate subset keys $SK_{i,n}$ for the node j and its descendant nodes n given the node i being the initial point.

As a result of such a setting, as shown in Fig. 8 (A), a certain receiver u needs to hold only labels of nodes a, b, c, which are nodes directly branching from nodes in a path from a leaf u to which the receiver is assigned to a node i given the node i being the initial point, as to any internal node i in a path from the leaf u to the root of a tree.

Subset keys for these nodes a, b, c and their descendant nodes, given the node i being the initial point, can be produced. In Fig. 8 (A), by paying attention to the node i, there are three nodes a, b, c which are directly branching from the nodes in the path from u to i. Thus, the receiver u is given these three labels from the management center (TC) during its system setup and holds them.

The leaf u can obtain a subset key $SK_{i,a}$ corresponding to a subset $S_{i,a}$ by processing with the pseudo-random number generator G based on a label $LABEL_{i,a}$ of the node a. Namely,

$$G_M(LABEL_{i,a}) = SK_{i,a}$$

The subset $S_{i,a}$ is, as shown in Fig. 8 (a), a subset in which leaves of a subtree rooted at the node a are set as revoked equipment. Thus, the subset $S_{i,a}$ is a subset in which only leaves of a subtree rooted at the node i excluding the leaves of the subtree rooted at the node a are set as leaves to which information is to be distributed.

Moreover, the leaf u can obtain a subset key $SK_{i,b}$ corresponding to a subset $S_{i,b}$ by processing with the pseudo-random number generator G based on a label $LABEL_{i,b}$ of the node b. Namely,

$$G_M(LABEL_{i,b}) = SK_{i,b}$$

The subset $S_{i,b}$ is, as shown in Fig. 8 (b), a subset in which leaves of a subtree rooted at the node b are set as revoked equipment. Thus, the subset $S_{i,b}$ is a subset in which only leaves of a subtree rooted at the node i excluding the leaves of the subtree rooted at the node b are set as leaves to which information is to be distributed.

Moreover, the leaf u can obtain a subset key $SK_{i,c}$ corresponding to a subset $S_{i,c}$ by processing with the pseudo-random number generator G based on a label $LABEL_{i,c}$ of the node c. Namely,

$$G_M(LABEL_{i,c}) = SK_{i,c}$$

The subset $S_{i,c}$ is, as shown in Fig. 8 (c), a subset in which the node c (leaf c) is set as revoked equipment. Thus, the subset $S_{i,c}$ is a subset in which only leaves of a subtree rooted at the node i excluding the leaf c are set as leaves to which information is to be distributed.

In addition to these three configurations, there can be various other configurations for revoking leaves except the leaf u in the hierarchical tree in which i is set as the initial point. For example, if only a leaf d 251 of Fig. 8 (a) is to be revoked, it is required to set a subset $S_{i,d}$, and apply a subset key $SK_{i,d}$. However, a key corresponding to any node, leaf, i.e., a subset key can be generated by pseudo-random number generating processing based on a higher rank label. Therefore, the leaf u can generate the subset key $SK_{i,d}$ for revocation of the leaf d 251 based on the label $LABEL_{i,a}$ of the node a held by the leaf u.

This applies similarly to the other subset configurations. As shown in Fig. 8 (A), as to any internal node i in the path from the leaf to which the certain receiver u is assigned to the root of the tree, the certain receiver u may have to hold only the labels of the nodes a, b, c, which are nodes directly branching from the nodes in the path from this leaf u to i, given the node i being the initial point.

Fig. 9 is a view showing labels to be held by each of receivers if the total number of receivers is set to N=16. Now, let a receiver u4 be considered. Each of internal nodes 1, 2, 4, 9 in a path to the root 1 from a node 19 being a leaf to which it is assigned is the initial point (node i). If the node 1 is set as the initial point, nodes directly branching from the nodes in the path from the node 19 to the node 1 are four nodes 3, 5, 8, 18, and thus the receiver u4 holds four labels, namely,

$LABEL_{1,3}$,
$LABEL_{1,5}$,
$LABEL_{1,8}$,

$LABEL_{1,18}$

Similarly, if the node 2 is set as the initial point, the receiver u4 holds three labels

$LABEL_{2,5}$,

$LABEL_{2,8}$,

$LABEL_{2,18}$

If the node 4 is set as the initial point, the receiver u4 holds two labels

$LABEL_{4,8}$,

$LABEL_{4,18}$

If the node 9 is set as the initial point, the receiver u4 holds one label

$LABEL_{9,18}$

Moreover, the receiver u4 holds one label

$LABEL_{1,\phi}$

which corresponds to a set (this is denoted as a subset $S_{1,\phi}$) used in a special case where there is no receiver to be revoked and thus including all the receivers.

Namely, LABELs which u4 holds in the configuration of Fig. 9 can be rearranged as follows.

Four labels, which are j = 3, 5, 8, 18 for i = 1

Three labels, which are j = 5, 8, 18 for i = 2

Two labels, which are j = 8, 18 for i = 4

One label, which is j = 18 for i = 9

One LABEL for the case of no revocation

Thus, there are eleven labels overall.

Here, to give consistency to the description, it is arranged such that u4 has the label corresponding to the subset $S_{1,\phi}$. However, instead of the label, it may otherwise be arranged such that u4 directly holds a subset key corresponding to the subset $S_{1,\phi}$.

As mentioned above, as to any internal node in a leaf-to-root path, each receiver need to hold as many labels as heights of the internal nodes, plus one special label. Thus, given the number of transmitters/receivers being N, the number of labels each receiver holds equals a number obtained by calculation with the following expression.

[Equation 10]

$$1+\sum_{k=1}^{\log N} k = \frac{1}{2}\log^2 N + \frac{1}{2}\log N + 1$$

Each receiver holds the number of labels indicated by the above expression, and can produce a necessary subset key by using the published pseudo-random number generating function G. The receiver need to hold these labels securely.

[3. Configuration for reducing the number of labels in the SD scheme using a one-way permutation tree]

Next, a configuration for reducing the number of labels in the Subset Difference (SD) scheme using a one-way permutation tree according to the present invention is described. Observing the above-mentioned Subset Difference (SD) scheme, one can understand the following.

Namely, there are cases where labels $LABEL_{i,j}$ are

(A) given directly to the receiver by the management center (TC), and

(B) derived from a label other than those by the receiver using the pseudo-random number generator G.

However, as to any label for which the nodes i and j bear a parent-child relationship (having a distance of 1, i.e., being continuous in hierarchy), the above case (B) does not exist, and there can exist only the case (A) where the labels $LABEL_{i,j}$ are given directly to the receiver by the management center (TC).

The reason therefor is as follows. Namely, in order for a certain receiver to produce the $LABEL_{i,j}$ using the pseudo-random number generator G, the receiver need to know a $LABEL_{i,k}$ produced by using a node k which is an ancestor of the node j. However, since the nodes i, j bear a parent-child relationship, there exists no such node k which is an ancestor of the node j and a descendant of the node i, nor is any receiver given the $LABEL_i$.

A description is given with reference to a configuration example of Fig. 10. A $LABEL_{2,8}$ is given directly to a receiver u4 by the management center (TC), but not given directly to a receiver u5. The receiver u5 calculates, from a $LABEL_{2,4}$ given by the management center (TC), $G_L(LABEL_{2,4})$ using the pseudo-random number generator G to derive the $LABEL_{2,8}$.

By contrast, as shown in Fig. 11, a $LABEL_{2,5}$ in which a node 2 and a node 5 bear a parent-child relationship is given directly to receivers u1, u2, u3, u4 belonging to a subset $S_{2,5}$. Since receivers other than these do not belong to that set, they cannot derive the $LABEL_{2,5}$ even by calculation. Namely, such a label is only given directly to the receivers by the management center (TS), and is never derived by using the pseudo-random number generator G.

Moreover, in the SD scheme, when a certain node i is the parent node of two different nodes j, k, and the node j is the parent node of a node n different from them, one can see that a receiver belonging to any subset $S_{j,n}$ always belong to any subset $S_{i,k}$.

For example, as shown in Fig. 12, a receiver U4 belonging to a subset $S_{9,18}$ also belongs to any of subsets $S_{4,8}$, $S_{2,5}$, $S_{1,3}$. Namely,

$$S_{9,18} = \{u4\}$$

$$S_{4,8} = \{u3,\ u4\}$$

$$S_{2,5} = \{u1,\ u2,\ u3,\ u4\}$$

$$S_{1,3} = \{u1,\ u2,\ u3,\ u4,\ u5,\ u6,\ u7,\ u8\}$$

Moreover, a receiver u3, which is other than the receiver u4 belonging to the subset $S_{4,8}$ also belongs to any of the subsets $S_{2,5}$, $S_{1,3}$.

In the present invention, the number of labels to be held by a receiver is reduced by applying a tree structure for keys to which a trap-door one-way permutation is applied, i.e., by applying a one-way permutation tree, to any label $LABEL_{i,j}$ in which the nodes i and j bear a parent-child relationship and to the label $LABEL_{1,\phi}$ corresponding to the subset $S_{1,\phi}$ being a set used in the special case where there is no receiver to be revoked and thus including all the receivers.

In the above-mentioned Subset Difference (SD) scheme, each receiver holds a total of log N labels $LABEL_{i,j}$ for each of which a node i and a node j bear a parent-child relationship, one for each internal node in a path from a leaf to which the receiver is assigned to the root of a tree. In the present invention, by applying a one-way permutation tree, it is set such that a total of log N+1 labels, which are these labels $LABEL_{i,j}$ plus the label $LABEL_{1,\phi}$ corresponding to the subset $S_{1,\phi}$ being a set used in the special case where there is no receiver to be revoked and thus including all the receivers, can be derived from a single value, whereby the number of labels to be held by the receiver is reduced.

In the original SD scheme, as already described with reference to Fig. 9, the receiver u4 needed to hold a total of eleven labels securely. Namely,
four labels, which are j = 3, 5, 8, 18 for i = 1
$LABEL_{1,3}$,
$LABEL_{1,5}$,
$LABEL_{1,8}$,
$LABEL_{1,18}$,
three labels, which are j = 5, 8, 18 for i = 2
$LABEL_{2,5}$,
$LABEL_{2,8}$,
$LABEL_{2,18}$,
two labels, which are j = 8, 18 for i = 4
$LABEL_{4,8}$,
$LABEL_{4,18}$,
one label, which is j = 18 for i = 9
$LABEL_{9,18}$, and
one LABEL for the case of no revocation

$LABEL_{1,\phi}$ By applying the configuration of the present invention, the receiver need to hold the following labels, i.e., the labels in each of which the nodes i, j bear a parent-child relationship, namely,
$LABEL_{1,3}$,
$LABEL_{2,5}$,
$LABEL_{4,8}$,
$LABEL_{9,18}$,
and also, the LABEL for the case of no revocation
$LABEL_{1,\phi}$,
The receiver need to store these labels. In the present invention, by applying a one-way permutation tree, it is set such that a total of log N+1 labels, which are these labels and the label $LABEL_{1,\phi}$ corresponding to the subset $S_{1,\phi}$ being a set used in the special case where there is no receiver to be revoked and thus including all the receivers, can be derived from a single value, whereby the number of labels to be held by the receiver is reduced.

It should be noted that the term "trap-door one-way permutation" means permutation processing y = F(x) in which it is simple to calculate y from x, but it is difficult to perform a reverse calculation. Namely, processing of calculating x from y can be performed only by one who knows a certain piece of secret information (trap door), but it is difficult (almost impossible) for one who does not know this secret information (trap door) to perform the processing.

[4. Configuration example of a one-way permutation tree]

Below, an information distribution configuration is described, which is based on a hierarchical tree configuration using a one-way permutation tree according to the present invention. It should be noted that the term "one-way permutation tree" used in the present Description is not a generic term but is a term used for the description of the present invention, and thus a term that defines a tree structure having a certain feature.

The definition of the term "one-way permutation tree" is described.
A complete binary tree with N leaves is defined as follows to be a one-way permutation tree. As shown in Fig. 13, if the root being the highest rank node is set to 1, and further nodes subsequent thereto are given node numbers 2, 3, ···, 2N-1 sequentially from the left as to higher-rank ones in terms of "breadth first order", a value $x_i$ (i = 1, 2, ···, 2N-1) is set as a value corresponding to a node i, i.e., a node-corresponding value, and a tree structure in which the following expression is established as to i = 1, 2, ···, N-1 is defined as a one-way permutation tree.

[Equation 11]

$$x_i = F^{-1}(x_{\lfloor i/2 \rfloor} + i)$$

where $\lfloor i \rfloor$ represents the largest integer equal to i or less.
... (Formule 1)
In the above expression, $F^{-1}$ is the inverse permutation of a trap-door one-way permutation F.
It should be noted that RSA cryptography is named as an example of the trap-door one-way permutation. The RSA cryptography is a cryptosystem which uses
(Public) Permutation $F = x^e \bmod M$
(Secret) Inverse permutation $F^{-1} = x^d \bmod M$
while using a modulus M, a public exponent e, a secret exponent d as parameters. The explanation of the RSA cryptography is introduced in, e.g., A.J. Menezes, P.C. van Oorschot and S.A. Vanstone, "Handbook of Applied Cryptography," CRC Press, 1996.

Moreover, as another example, the one-way permutation tree may be defined as a tree structure to which a one-way function h, such as a hash function, is applied, instead of the above expression (Formula 1). Namely, as a tree structure in which the following expression is established may be a one-way permutation tree.

[Equation 12]

$$x_i = F^{-1}(x_{\lfloor i/2 \rfloor} + h(i))$$

where $\lfloor i \rfloor$ represents the largest integer equal to i or less.

... (Formule 2)

The function h is a function for producing an output having a certain length to an input of an arbitrary length. It is a function y = H (x) in which y can be calculated from x easily, but its reverse calculation is difficult. Such a function is called a one-way function or hash function, including typically known ones such as MD4, MD5, and SHA-1 producing a 160-bit output.

These functions are also introduced in the above-referred "Handbook of Applied Cryptography".

A setting relationship among the node-corresponding value $x_i$ set so as to correspond to any configuration node i of the one-way permutation tree, an operation (f) corresponding to the permutation F applied to the calculation of each node-corresponding value, and an operation ($f^{-1}$) corresponding to the inverse permutation $F^{-1}$ is such as shown in Fig. 13, when indicated diagrammatically.

As shown in the drawing, from a value of a certain node, a value of its parent node can be calculated by the operation f using a forward permutation F of the trap-door one-way permutation, and reversely, from a value of a certain node, a value of a child node thereof can be calculated by the operation $f^{-1}$ using the inverse permutation $F^{-1}$. It should be reminded here that the inverse permutation can actually be performed only by one who knows the trap door (secrecy), and is difficult for one who does not know it to perform.

Using the RSA cryptography, which is one of the trap-door one-way permutations, an algorithm for producing the one-way permutation tree which is a binary tree with N leaves is described with reference to Fig. 14.

First, in step S101, a number $x_1 \in Z^*_M$ is randomly selected. It should be noted that $x_1 \in Z^*_M$ means that $x_1$ is the generator of a cyclic group $Z^*_M$.

Next, in steps S102-S105, a node-corresponding value $x_i$ is calculated according to the following expression (Formula 3), while incrementing i by 1 up to i = 2, ..., 2N-1 using i as a counter.

[Equation 13]

$$x_i = (x_{\lfloor i/2 \rfloor} + i)^d \bmod M$$

where $\lfloor i \rfloor$ represents the largest integer equal to i or less.

... (Formule 3)

The above expression (Formula 3) is equivalent to performing the operation $f^{-1}$ equivalent to the inverse permutation in Fig. 13 sequentially from the higher nodes.

In steps S102-S105, when the node-corresponding value $x_i$ has been calculated according to the above expression (Formula 3), while incrementing i by 1 up to i = 2, ···, 2N-1 using i as a counter, the algorithm ends in step S106 by outputting 2N-1 numbers $x_1, x_2, ..., x_{2N-1}$, each having |M| bits. Each value $x_i$ equals a value corresponding to a node i of the one-way permutation tree, i.e., a node-corresponding value. It should be reminded here that the total number of nodes of a complete binary tree with N leaves is 2N-1.

It should be noted that the operation of calculating the node-corresponding values, applied to step S10 in the processing flow shown in Fig. 14 may otherwise be configured to be executed by applying the hash function h, and thus applying the following expression (Formula 4).

[Equation 14]

$$x_i = (x_{\lfloor i/2 \rfloor} + h(i))^d \bmod M$$

where $\lfloor i \rfloor$ represents the largest integer equal to i or less.

... (Formule 4)

[5. Information distributing processing example to which the one-way permutation tree is applied]

Next, an information distributing processing example to which the above-mentioned one-way permutation tree is applied is described. Below, a description is given sequentially as to

(5-1) Setup processing

(5-2) Information distributing processing

(5-3) Receiving and decrypting processing

(5-1) Setup processing

Setup processing is performed only once at the time of start-up of a system. Information distributing, and receiving and decrypting processing is thereafter executed every time information to be transmitted occurs. For example, the latter processing is repeated every time content-stored recording media, such as DVD disks having a new content stored therein, are created and distributed to users, or every time an encrypted content is distributed via the Internet.
The setup processing is executed by the following steps 1-4. Each of the steps is described.

a. Step 1

First, the management center (TC) defines a hierarchical tree which is a binary tree with N leaves. It should be noted that this hierarchical tree is different from the above-mentioned one-way permutation tree. An identifier corresponding to any node in the hierarchical tree is set as k (k = 1, 2, ..., 2N-1). However, the root is set to 1, and as to its lower nodes, the identifiers (numbers) are given sequentially in terms of breadth first order. Namely, setting of node numbers (y) such as shown in Fig. 15 is performed. As a result of this processing, the node numbers y = 1 to 2N-1 are set to the respective nodes in the binary tree.
Receivers um (m= 1, 2, ···, N) are assigned to the respective leaves of the tree. In the example of Fig. 15, sixteen receivers u1-u16 are assigned to the node numbers y = 16 to 31.
Next, as to any internal node i (i = 1, 2, ···, N-1), any subset $S_{i,j}$ corresponding to any node j, which is a descendant of the node i is defined. Moreover, of all the above-defined subsets $S_{i,j}$, any in which the nodes i and j bear a parent-child relationship is denoted as a first special subset (Special Subset) $SS_{i,j}$. It should be reminded here that each node of the tree excluding the root has the only one parent node, and thus that j, which takes n = 2, 3, ···, 2N-1, is used only once as j in a $SS_{i,j}$. Additionally, a second special subset $SS'_{1,\phi}$ used where there is no receiver to be revoked and thus including all the receivers, is also defined.

b. Step 2

The management center (TC) generates a modulus M, a public exponent e, a secret exponent d, which are parameters of the RSA cryptography, and publish the modulus M and the public exponent e. It is supposed here that the size of the modulus M is |M| bits. For example, |M|bits = 1024 bits. Additionally, the management center selects and publishes a pseudo-random number generator G and a hash function H which outputs C bits (e.g., 128 bits). The pseudo-random number generator G is the pseudo-random number generator G described with reference to Fig. 7 above, which outputs a 3C-bit pseudo-random number from a C-bit input, and is thus similar to the pseudo-random number generator applied in the above-mentioned SD scheme and explained in the literature by Noar et al.
Next, by inputting
the number of leaves = N,
the modulus M, the secret exponent d, which are parameters of the RSA cryptography, the management center (TC) generates the one-way permutation tree being a binary tree with N leaves, according to the algorithm described with reference to the flow of Fig. 14 above, to calculate the value $x_i$ corresponding to each node i. Note here that either of the above-mentioned expressions (Formula 3) and (Formula 4) is applied in calculating the value $x_i$ corresponding to each node i.
The management center (TC) sets the value $x_1$ determined in the above-mentioned processing as an intermediate label IL as data for generating the second special subset $SS'_{1,\phi}$ used where there is no receiver to be revoked and thus including all the receivers. Namely,

$$IL_{1,\phi} = x_1$$

The label of the second special subset $SS'_{1,\phi}$ is set as a $LABEL_{1,\phi}$, and the $LABEL_{1,\phi}$ is supposed to be a value obtained by hash processing (H) the above-mentioned $IL_{1,\phi}$. Namely,

$$LABEL_{1,\phi} = H(IL_{1,\phi})$$

Furthermore, as to labels corresponding to the first special subsets $SS_{i,j}$ in each of which the nodes i and j bear a parent-child relationship, among all the subsets $S_{i,j}$, intermediate labels $IL_{i,j}$ as their generator data are determined as follows. Namely, a value $x_y$ (y = 2, 3, ..., 2N-1) excluding the root-corresponding value $x_1$ among the values $x_1$ to $x_{2N-1}$ set as the values corresponding to the nodes 1 to 2N-1 by the above-mentioned processing (see Fig. 14) is set as an intermediate label $IL_{P(y),S(y)}$ corresponding to a first special subset $SS_{P(y),S(y)}$ specified by the sibling node and the parent node of a node y. Namely,

$$x_y = IL_{P(y),S(y)}$$

where P(i) is the parent node of the node i, and S(i) is the sibling node of the node i.

A specific example is shown in Fig. 16. In Fig. 16, $x_y$ as a node-corresponding value is assigned to a node y 301. It should be noted that all the node-corresponding values including $x_y$ are values satisfying the above-mentioned expression (Formula 1), and thus

$$x_y = IL_{P(y),S(y)}$$

The parent node of the node y 301 is a P(y) 302, and its sibling node is a S (y) 303. The first special subset $SS_{P(y),S(y)}$ specified by the sibling node S (y) 303 and the parent node P (y) 302 of the node y 301 is a subset $SS_{P(y),S(y)}$ 310 shown in Fig. 16.

At this time, a label corresponding to the subset $SS_{P(y),S(y)}$ is a $LABEL_{P(y),S(y)}$, and the $LABEL_{P(y),S(y)}$ is set as a hashed value based on the intermediate label $IL_{P(y),S(y)}$ (this equals the node-corresponding value $x_y$ of the node y 301). Namely,

$$LABEL_{P(y),S(y)} = H(IL_{P(y),S(y)})$$

The above-mentioned expression is equivalent to

$$LABEL_{P(y),S(y)} = H(x_y)$$

When indicated by a general expression, a label $LABEL_{i,j}$ corresponding to any first special subset $SS_{i,j}$ (where j = 2, 3, ..., 2N-1 as mentioned above) in which the nodes i and j bear a parent-child relationship, among all the subsets $S_{i,j}$, takes a hashed value based on the corresponding intermediate label $IL_{i,j}$. Namely, it is calculated as

$$LABEL_{i,j} = H(IL_{i,j})$$

It should be noted that, as mentioned above, the label $LABEL_{1,\phi}$ of the second special subset $SS'_{1,\phi}$ used where there is no receiver to be revoked and thus including all the receivers can also be calculated by hash processing (H) the corresponding intermediate label $IL_{1,\phi}$. Namely,

$$LABEL_{1,\phi} = H(IL_{1,\phi})$$

It should be noted that although the example in which hash processing is applied to the intermediate label-based label calculating processing has been described in the present embodiment, it may alternatively be configured to apply operation processing other than hash processing, provided that the processing is preferably based on a one-way function.

In step 2, the management center executes processing of setting

(a) the label $LABEL_{1,\phi}$ of the second special subset $SS'_{1,\phi}$ used where there is no receiver to be revoked and thus corresponding to the entire tree including all the receivers, and
(b) a label $LABEL_{i,j}$ corresponding to any first special subset $SS_{i,j}$ (where j = 2, 3, ..., 2N-1 as mentioned above) in which the nodes i and j bear a parent-child relationship, i.e.,
the labels corresponding to the special subsets mentioned in (a), (b) above respectively as
the hashed value of the intermediate label $IL_{1,\phi}$,
the hashed value of any intermediate label $IL_{i,j}$

It should be noted that the value of each intermediate label is a node-corresponding value $x_i$, which is a value calculated according to the algorithm described with reference to Fig. 14 above, and thus a value satisfying the above-mentioned expression (Formula 3 or Formula 4). Namely,

$$IL_{1,\phi} = x_1$$

Moreover, for y = 1, 2, ···, N-1

$$IL_{y,2y} = x_{2y+1}$$

$$IL_{y,2y+1} = x_{2y}$$

A processing example is shown in Fig. 17, for setting a node-corresponding value $x_i$ as an intermediate label (IL), which is data for generating (a) the label $LABEL_{1,\phi}$ of the second special subset $SS'_{1,\phi}$ used where there is no receiver to be revoked and thus corresponding to the entire tree including all the receivers, and (b) the label $LABEL_{i,j}$ corresponding to any first special subset $SS_{i,j}$ (where j = 2, 3, ..., 2N-1 as mentioned above) in which the nodes i and j bear a parent-child relationship.

In Fig. 17, [i $x_k$ j] represents

$$x_k = IL_{i,j}$$

where i is an ancestor of j.
For example, [1 $x_3$ 2] represents

$$x_3 = IL_{1,2}$$

In this way, the node-corresponding values $x_i$ are set as the values corresponding to the intermediate labels from which the labels of the above-mentioned first special subsets $SS_i$, and second special subset $SS'_{1,\phi}$ can be calculated.

The management center (TC) calculates the hashed values based on the set intermediate labels, to determine (a) the label $LABEL_{1,\phi}$ of the second special subset $SS'_{1,\phi}$ used where there is no receiver to be revoked and thus corresponding to the entire tree including all the receivers, and (b) the label $LABEL_{i,j}$ corresponding to any first special subset $SS_{i,j}$ (where j = 2, 3, ..., 2N-1 as mentioned above) in which the nodes i and j bear a parent-child relationship.

A specific example corresponding to Fig. 16 described above is shown in Fig. 18. Let the node y 301 be given a node number 8 as shown in the drawing. A node-corresponding value $x_8$ is assigned to the node y 301. The parent node of the node y 301 is the P(y) 302 with a node number 4, and the node number of its sibling node S (y) 303 is 9. The first special subset $SS_{P(y),S(y)}$ specified by the sibling node S (y) 303 and the parent node P (y) 302 of the node y 301 is a subset $SS_{4,9}$ 310 shown in Fig. 16. At this time, an intermediate label as data for generating a label corresponding to the subset $SS_{4,9}$ 310 is

$$x_8 = IL_{P(y),S(y)}$$
$$= IL_{4,9}$$

The label corresponding to the subset $SS_{4,9}$ 310 is a $LABEL_{4,9}$, and the $LABEL_{4,9}$ is set as a hashed value based on the intermediate label $IL_{4,9}$ (this equals the node-corresponding value $x_8$ of the node y 301). Namely,

$$LABEL_{4,9} = H(IL_{4,9})$$

The above expression is equivalent to

$$LABEL_{4,9} = H(x_8)$$

As mentioned above, the management center determines in step 2,

(a) the label $LABEL_{1,\phi}$ of the second special subset $SS'_{1,\phi}$ used where there is no receiver to be revoked and thus corresponding to the entire tree including all the receivers, and
(b) the label $LABEL_{i,j}$ corresponding to any first special subset $SS_{i,j}$ (where j = 2, 3, ···, 2N-1 as mentioned above) in which the nodes i and j bear a parent-child relationship.

Each of the labels is calculated as the hashed value of an intermediate label being equal to its node-corresponding value.

c. Step 3

Next, the management center (TC) inputs the label $LABEL_{i,j}$ of a first special subset $SS_{i,j}$ in which the nodes i and j bear a parent-child relationship, into the pseudo-random number generator G, to obtain labels $LABEL_{i,LC(j)}$ and $LABEL_{i,RC(j)}$ of the child nodes of the node j given the node i being the initial point.

Namely, $G_L(LABEL_{i,j})$ representing the higher-order C bits of a 3C-bit random number obtained by inputting the C-bit $LABEL_{i,j}$ into the pseudo-random number generator G is set as a label $LABEL_{i,LC(j)}$ of a (non-special) subset $S_{i,LC(j)}$ corresponding to the left child node LC (j) of the node j given the node i being the initial point. Additionally, $G_R(LABEL_{i,j})$ representing the lower-order C bits of the 3C-bit random number obtained by inputting the C-bit $LABEL_{i,j}$ into the pseudo-random number generator G is set as a label $LABEL_{i,RC(j)}$ of a (non-special) subset $S_{i,RC(j)}$ corresponding to the right child node RC(j) of the node j given the node i being the initial point. Namely, the labels are set respectively as

$$LABEL_{i,LC(j)} = G_L(LABEL_{i,j})$$

$$LABEL_{i,RC(j)} = G_R(LABEL_{i,j})$$

Furthermore, by repeatedly inputting these outputs (labels) into the pseudo-random number generator G, labels corresponding to all the nodes which are descendants of the node j given the node i being the initial point are obtained. This processing is performed on the labels of all the special subsets $SS_{i,j}$, to obtain labels of all the subsets $S_{i,j}$ defined in step 1.

d. Step 4

Next, the management center (TC) determines labels for supply to a receiver, i.e., labels to be held by a receiver um.

First, labels given to the receiver um in the original SD scheme are selected as tentatively selected labels. They are the labels $LABEL_{i,j}$ of the subsets $S_{i,j}$ each of which initiates at any internal node i in a path m (path-m) from a leaf to which the receiver um is assigned to the root and each of which corresponds to a node j directly branching from nodes in a path from the leaf to i, and the label $LABEL_{1,\phi}$ corresponding to the above-mentioned second special subset $SS'_{1,\phi}$.

Referring to Fig. 19 and the followings, determining processing of the labels for supply to a receiver is described. For example, as the tentatively selected labels for a receiver u4 corresponding to a node number 19 of Fig. 19, eleven labels are selected, which are $LABEL_{1,3}$, $LABEL_{1,5}$, $LABEL_{1,8}$, $LABEL_{1,18}$, $LABEL_{2,5}$, $LABEL_{2,8}$, $LABEL_{2,18}$, $LABEL_{4,8}$, $LABEL_{4,18}$, $LABEL_{9,18}$, $LABEL_{1,\phi}$.

The management center (TC) re-selects labels for supply to the receiver um from these tentatively selected labels. It should be noted that of the above-mentioned eleven tentatively selected labels, labels of first special subsets $SS_{i,j}$ in each of which the nodes I and j bear a parent-child relationship are four labels $LABEL_{1,3}$, $LABEL_{2,5}$, $LABEL_{4,8}$, $LABEL_{9,18}$.

Of these tentatively selected labels, the management center (TC) specifies labels obtained by excluding those corresponding to the above-mentioned first and second special subsets, as finally selected labels for, i.e., the labels for supply to, the receiver u4.

Furthermore, the management center (TC) gives the receiver the intermediate label $IL_{P(j),S(j)}$ of the special subset $SS_{P(j),S(j)}$ which initiates at the parent node P(j) of a leaf j to which the receiver is assigned and which corresponds to the sibling node S(j) of j. In the above example, the management center (TC) gives an $IL_{9,18}$ to the receiver u4. The receiver keeps the given labels and intermediate label securely.

Namely, first, as the labels which the receiver u4 needs to have, labels $LABEL_{i,j}$ having the following i,j pairs are specified as the tentatively selected labels.

j = 3, 5, 8, 18 for i = 1
j = 5, 8, 18 for i = 2
j = 8, 18 for i = 4
j = 18 for i = 9
One LABEL for the case of no revocation

Next, from the above-mentioned eleven tentatively selected labels, labels obtained by excluding those corresponding to the above-mentioned first and second subsets, and a single intermediate label are specified as the finally selected labels for, i.e., the labels for supply to, the receiver u4. Namely, labels $LABEL_{i,j}$ having the following i,j pairs are specified as the labels for supply.

j = 5, 8, 18 for i = 1
j = 8, 18 for i = 2
j = 18 for i = 4
Intermediate label $IL_{9,18}$

The above six labels and one intermediate label are specified as the labels for supply.

It should be noted that in any receiver um other than the receiver u4 shown in the above example, six labels and one intermediate label are given in the N = 16 setting configuration, although the combination of the six labels and one intermediate label given varies from one receiver to another.

It should be noted that one intermediate label set as a label for supply to a receiver um is the intermediate label $IL_{i,j}$ corresponding to the first special subset defined by the ancestor nearest to the receiver um in a hierarchical tree, i.e., one of the first special subsets $SS_{i,j}$ (where j = 2, 3, ···, 2N-1 as mentioned above) in each of which the nodes i and j bear a parent-child relationship. Namely, one of the intermediate labels for supply to the receiver corresponding to a leaf in the hierarchical tree is the intermediate label corresponding to the lowermost one of the above-mentioned first special subsets $S_{i,j}$.

A flow of the processing performed by the management center (TC) in the above setup is shown in Fig. 20. First, in step S201, a hierarchical tree (HKT) configuration is defined. In step S202, subsets are defined so as to correspond to the hierarchical tree set. The subsets may be defined arbitrarily. The subsets may be set such that any leaf can be revoked individually, or such that specific leaves are grouped into a revocation unit in accordance with information to be distributed, for example.

Next, in step S203, parameters are set and a one-way permutation tree is generated. Here, the number of leaves = N, the modulus M and the secret exponent d being the parameters of the RSA cryptography are inputted as parameters, to generate the one-way permutation tree which is a binary tree with N leaves, according to the algorithm described with reference to the flow of Fig. 14 above, to calculate the value $x_i$ corresponding to each node i. Note here that either of the expressions (Formula 3) and (Formula 4) is applied to the calculation of the value $x_i$ corresponding to each node i.

In step S204, the node-corresponding values $x_i$ are set as the values of the intermediate labels, and the labels corresponding to the special subsets are calculated based on these intermediate labels (IL). Namely,

$$IL_{1,\phi} = x_1$$

Moreover, for y = 1, 2, ···, N-1

$$IL_{y,2y} = x_{2y+1}$$

$$IL_{y,2y+1} = x_{2y}$$

The intermediate labels to be obtained here are intermediate labels corresponding to

(a) the second special subset $SS'_{1,\phi}$ used where there is no receiver to be revoked and thus including all the receivers, and
(b) any first special subset $SS_{i,j}$ (where j = 2, 3, ..., 2N-1 as mentioned above) in which the nodes i and j bear a parent-child relationship.
Furthermore, based on these intermediate labels, the labels corresponding to the special subsets are calculated. The labels corresponding to the special subsets are calculated as the hashed values of the intermediate labels.

Next, in step S205, labels not corresponding to the special subsets are calculated based on the labels corresponding to the special subsets. For example, a label $LABEL_{i,j}$ for a first special subset $SS_{i,j}$ is inputted to the pseudo-random number generator G to obtain the labels $LABEL_{i,LC(j)}$ and $LABEL_{i,RC(j)}$ of the child nodes of the node j given the node i being the initial point. By repeatedly executing this processing, all the labels corresponding to the set subsets are calculated.

Next, in step S206, parameters are published. The parameters to be published are, e.g., the modulus M, the public exponent e of the RSA cryptography. Furthermore, in step S207, the pseudo-random number generator G and the hash function H are published. Furthermore, if (Formula 4) is used in step S204, the hash function h is also published.

In step S208, the labels and intermediate label for supply to each receiver set so as to correspond to a leaf of the hierarchical tree are selected. This part of the processing is executed as the two-step processing involving selection of the tentatively selected labels and selection of the labels for supply, as mentioned above.

Namely, first, as the labels (LABEL) a receiver um needs to have, the labels given in the original SD scheme, i.e., the labels $LABEL_{i,j}$ of the subsets $S_{i,j}$ each of which initiates at any internal node i in a path m (path-m) from a leaf to which the receiver um is assigned to the root and each of which corresponds to a node j directly branching from nodes in a path from the leaf to i, and the label $LABEL_{1,\phi}$ corresponding to the above-mentioned second special subset $SS'_{1,\phi}$ are selected as the tentatively selected labels. Thereafter, the labels $LABEL_{i,j}$ and one intermediate label which are obtained by excluding the above-mentioned labels corresponding to the first and second special subsets are set as the labels for supply.

The one intermediate label set as a label for supply is the intermediate label $IL_{i,j}$ corresponding to the first special subset defined by the parent node and the sibling node of a leaf n to which the receiver um is assigned, i.e., the first special subset $S_{i,j}$ (where j = N, N+1, ..., 2N-1 since j is a leaf) in which the node i is the parent node of the leaf n and the node j is the sibling node of the leaf n). For example, the intermediate label for supply to the receiver u4 to which the node number 19 is set as shown in Fig. 19 is the intermediate label $IL_{9,18}$.

In step S209, the labels for supply to the receiver which have been determined in step S208 are supplied to the receiver, after which the processing ends. It should be noted that the labels are supplied either by storing them in a tamper-resistant memory beforehand during manufacture of the receiver, or by using a means such as a secure communication path or medium free from information leakage. Note also that the steps in the processing flow shown in Fig. 20 may not necessarily be in the order indicated.

(5-2) Information distributing processing

Next, details of secret information transmission processing executed after the above-mentioned setup processing are described. Information distribution, i.e., transmission of secret information is performed by the management center (TC) broadcasting at least one ciphertext. Each of the ciphertexts is obtained by encrypting the secret information by one of subset keys. For example, secret information transmitted by the management center is formed as a set of a plurality of ciphertexts obtained by encrypting the same secret information for transmission using different subset keys, respectively.

For example, if the secret information is a key, i.e., a content key Kc, to be applied to decryption of an encrypted content, a set of ciphertexts obtained by encrypting the content key Kc by a plurality of subset keys are generated and supplied. For example, ciphertexts

$E(SK_{a,b}, Kc)$, $E(SK_{c,d}, Kc)$, $E(SK_{e,f}, Kc)$ are generated, and supplied through network distribution or a recording medium storing them. It should be noted that E (A, B) means data B encrypted by a key A. The above example represents a ciphertext set consisting of three ciphertexts encrypted by applying three different subset keys.

The subset keys $SK_{a,b}$, $SK_{c,d}$, $SK_{e,f}$ are subset keys corresponding to subsets selected by the management center (TC), respectively, in order to set specific equipment as revoked equipment.

A receiver other than the equipment for revocation can generate any of the subset keys applied to the encryption of the ciphertexts based on the labels the receiver holds (the labels and one intermediate label), and only an authorized, selected receiver other than the revoked equipment can acquire the content key Kc by decrypting any ciphertext included in $E(SK_{a,b}, Kc)$, $E(SK_{c,d}, Kc)$, $E(SK_{e,f}, Kc)$

Subsets used to revoke receivers u5, u11, u12 in a hierarchical tree configuration in which the total number of receivers is set to N=16 are shown in Fig. 21. The subsets used to revoke the receivers u5, u11, u12 are two subsets, which are $S_{2,20}$ and $S_{3,13}$.

Receivers which are not to be revoked are included in either of the two subsets $S_{2,20}$ and $S_{3,13}$, and the receivers u5, u11, u12 to be revoked are included in none of them. Thus, if secret information is encrypted using subset keys $SK_{2,20}$ and $SK_{3,13}$ corresponding to these subsets and then transmitted, only the receivers not to be revoked can decrypt the ciphertexts to obtain the secret information.

A procedure for the information distributing processing is described with reference to a flow shown in Fig. 22. Each of steps in the flow shown in Fig. 22 is described.

First, in step S301, the management center (TC) selects revoked receivers, i.e., excluded equipment to which secret information for transmission is not supplied. It should be noted that all the receivers are set so as to correspond to the leaves of the hierarchical tree, respectively.

Next, in step 5302, subsets to be applied for distribution of the secret information are determined based on the leaf positions in the hierarchical tree corresponding to the determined revoked receivers. For example, in the example of Fig. 21, the receivers u5, u11, u12 are selected as the revoked receivers, and the subsets to be applied are the two subsets $S_{2,20}$ and $S_{3,13}$.

In step S303, subset keys corresponding to the subsets determined are selected. The management center (TC) holds the subset keys corresponding to the subsets beforehand. For example, in the example of Fig. 21, two subset keys $SK_{2,20}$ and $SK_{3,13}$ corresponding to the two subsets $S_{2,20}$ and $S_{3,13}$. are selected.

Next, in step S304, a ciphertext set is generated by encrypting the secret information while using the subset keys selected in step S303. For example, in the example of Fig. 21, a ciphertext set is generated by encrypting the secret information while using the two subset keys $SK_{2,20}$ and $SK_{3,13}$. In the example of Fig. 21, the following set of ciphertexts $E(SK_{2,20}, Kc)$, $E(SK_{3,13}, Kc)$

is generated by encrypting the secret information (e.g., a content key Kc) while using the two subsets keys $SK_{2,20}$ and $SK_{3,13}$.

In step S305, the ciphertext set generated in step S304 is transmitted (broadcast) to the receivers. The ciphertext set to be transmitted is formed from ciphertexts decryptable only by the receivers other than the revoked equipment. The revoked equipment cannot decrypt any of the ciphertexts, thus enabling secure information distribution.

It should be noted that in transmitting the ciphertext set, subset specifying information included in each ciphertext as information about arrangement of the subset-corresponding ciphertexts may be transmitted together. Each receiver can easily extract the ciphertext to which a subset key generatable by itself is applied, based on this specifying information. As a specific scheme, a configuration using key specifying codes disclosed in, e.g., Japanese Patent Application Publication No. 2001-352322 may be applicable.

It should be noted that the subset keys used for the encryption may be those produced during the setup phase and kept in storage by the management center (TC), or may be derived from the subset-based labels which have been produced during the setup phase and kept in storage, by using the pseudo-random number generator G.

Moreover, it may alternatively be acceptable to keep in storage the parameters $x_1$, M, d during the setup phase, and to derive necessary label and subset key using these parameters every time they are needed. Namely, as subset key generating processing, the intermediate labels corresponding to the special subsets are calculated based on the operation expression to which the inverse permutation $F^{-1}$ of the trap-door one-way permutation F is applied. The trap-door one-way permutation F uses the value $x_1 \in Z^*_M$, the modulus M and the secret exponent d as the cryptographic parameters, all of which have been published by the management center. Then, by performing operation processing based on the intermediate labels, the labels corresponding to the special subsets are generated. Furthermore, the labels not corresponding to the special subsets are generated by the operation based on the generated labels. Furthermore, by operation processing based on the resultant labels, subset keys are calculated. The subset keys may thus be derived.

It shouldbe noted that in the case where there is no receiver to be revoked, the secret information is encrypted using the above-mentioned subset key $SK_{1,\phi}$ for the second special subset $SS'_{1,\phi}$.

(5-3) Receiving and decrypting processing

The receivers not to be revoked belong to either one of the above-mentioned subsets. Thus, if a ciphertext produced using a subset key corresponding to that subset is decrypted, the secret information can be obtained. In order for a receiver to find the ciphertext for decryption, the receiver may only have to use the above-mentioned subset specifying information. After designating the ciphertext, the receiver derives the subset key from a label or the intermediate label which it owns, and decrypts the ciphertext using this subset key. A method for deriving the subset key is described below.

First, a receiver um determines whether or not the node j of the subset $S_{i,j}$ corresponding to any subset key $SK_{i,j}$ to be obtained for application to the ciphertext decrypting processing falls under either of (A) and (B) mentioned below. The receiver judges whether or not the node j

(A) is a descendant of a node k for which the receiver directly has a label $LABEL_{i,k}$ (a case where j = k is included)
(B) matches with a node k which is one of the child nodes of the node i and which is a node not existing in a path from a leaf n to which the receiver is assigned to the root (i.e., the sibling node of the child node of the node i existing in the path), or is a descendant thereof (i.e., the node j is a descendant of the configuration node k of any first subset $SS_{i,k}$ among the subsets for which the receiver um is given labels in the SD scheme).

It should be noted that the node j is deemed to fall under (B) if there is no receiver to be revoked, and thus the subset key $SK_{1,\phi}$ for the second special subset $SS'_{1,\phi}$ is used for encryption.

In the case of (B), intermediate labels of the special subsets $SS_{i,k}$ are derived from the intermediate label $IL_{P(n),S(n)}$ given to the receiver, as described below.

First, in a case of i = P(n), j = k = S(n), the receiver already has this intermediate label, and thus nothing special should be done. Otherwise, the receiver applies the published permutation function F, i.e., the trap-door one-way permutation F, to the intermediate label $IL_{P(n),S(n)}$, whereby intermediate labels corresponding to the higher-rank subsets are sequentially calculated. For the intermediate label $IL_{P(n),\ S(n)}$ owned by the receiver, an intermediate label $IL_{P(P(np)),S(P(n))}$ for a special subset $SS_{P(P(n)),S(P(n))}$ which initiates at the parent node P(P(n)) of the parent node P(n) of a leaf to which the receiver is assigned and which corresponds to the sibling node S(P(n)) of the node P(n) can be obtained by

$$IL_{P(P(n)),S(P(n))} = ((IL_{P(n),S(n)})^e - n) \bmod M \quad \cdots$$

(Formula 5)

This is based on the above-mentioned property of the one-way permutation tree, and is also based on the fact that the following expression is established as to any node-corresponding value xi of the one-way permutation tree, as a result of the above-mentioned expression (Formula 3) having been applied in the calculation of the node-corresponding values.

[Equation 15]

$$x_{\lfloor i/2 \rfloor} = (x_i^e - i) \bmod M$$

where ⌊i⌋ represents the largest integer equal to i or less.

It should be noted that if the above-mentioned expression (Formula 4) using the hash function is applied in calculating the node-corresponding values at the time of the generation of the one-way permutation tree, the intermediate label $IL_{P(P(n)),S(P(n))}$ of the special subset $SS_{P(P(n)),S(P(n))}$ can be obtained by

$$IL_{P(P(n)),S(P(n))} = ((IL_{P(n),S(n)})^e - h(n)) \bmod M \cdots \text{(Formula 6)}$$

By repeatedly performing an operation using the modulus M, the public exponent e in the RSA cryptography as the published parameters, and a node number i, on these outputs, the receiver can obtain all the intermediate labels of the first special subsets among the subsets which it should hold in the SD scheme, up to the subset $SS_{1,2}$, or $SS_{1,3}$. Namely, given a certain node y and its parent node P(y), an intermediate label $IL_{P(P(y)),S(P(y))}$ of a special subset $SS_{P(P(y)),\ S(P(y))}$ which initiates at the parent node P(P(y)) of the node P (y) and which corresponds to the sibling node S(P(y)) of the node P(y) can be obtained by

$$IL_{P(P(y)),S(P(y))} = ((IL_{P(y),S(y)})^e - y) \bmod M \cdots \text{(Formula 7)}$$

It should be noted that if the above-mentioned expression (Formula 4) using the hash function is applied in calculating the node-corresponding values at the time of the generation of the one-way permutation tree, the intermediate label $IL_{P(P(y)),S(P(y))}$ of the special subset $SS_{P(P(y)),S(P(y))}$ can be obtained by

$$IL_{P(P(y)),S(P(y))} = ((IL_{P(y),S(y)})^e - h(y)) \bmod M \cdots \text{(Formula 8)}$$

Note here that the node y includes nodes existing in a path from the leaf to which the receive is assigned to the root.

Moreover, for either of the intermediate label $IL_{1,2}$ and the intermediate label $IL_{1,3}$, the intermediate label $IL_{1,\phi}$ = K corresponding to the second special subset $SS'_{1,\phi}$ can be obtained by the following expressions.

$$IL_{1,\phi} = ((IL_{1,2})^e - 3) \bmod M \cdots \text{(Formula 9)}$$

$$IL_{1,\phi} = ((IL_{1,3})^e - 2) \bmod M \cdots \text{(Formula 10)}$$

Similarly in this case, if the above-mentioned expression (Formula 4) using the hash function is applied in calculating the node-corresponding values at the time of the generation of the one-way permutation tree, the intermediate label $IL_{1,\phi}$ = K corresponding to the second special subset $SS'_{1,\phi}$ can be obtained by the following expressions

$$IL_{1,\phi} = ((IL_{1,2})^e - h(3)) \bmod M \cdots \text{(Formula 11)}$$

$$IL_{1,\phi} = ((IL_{1,3})^e - h(2)) \bmod M \cdots \text{(Formula 12)}$$

for either of the intermediate label $IL_{1,2}$ and $IL_{1,3}$.

Specific intermediate label acquiring processing executed by a receiver is described with reference to Fig. 21.

A receiver u4 assigned to a leaf 19 holds an intermediate label $IL_{9,18}$. By an operation using the modulus M, the public exponent e in the RSA cryptography as the published parameters, and a node number i, an intermediate label $IL_{4,8}$ of a subset $S_{4,8}$ determined by the parent node 4 and the sibling node 8 of a node 9 can be obtained as

$$IL_{4,8} = ((IL_{9,18})^e - 19) \bmod M$$

Similarly, an intermediate label $IL_{2,5}$ of a subset $S_{2,5}$ determined by the parent node 2 and the sibling node 5 of the node 4 can be obtained as

$$IL_{2,5} = ((IL_{4,8})^e - 9) \bmod M$$

By repeating this processing, the receiver u4 can obtain $IL_{1,3}$ and $IL_{1,\phi}$.

As in the above way, once the intermediate labels $IL_{i,k}$ corresponding to any subset $S_{i,k}$ has been derived, the receiver obtains a label $LABEL_{i,k}$ as

$$LABEL_{i,k} = H(IL_{i,k})$$

Then, as described with reference to Fig. 7 above, the label $LABEL_{i,j}$ of a necessary subset $S_{i,j}$ is obtained using the pseudo-random number generator G, and a subset key $SK_{i,j}$ for that subset is obtained by

$$SK_{i,j} = G_M(LABEL_{i,j})$$

to decrypt the ciphertext using this subset key $SK_{i,j}$.

A specific example of subset key deriving processing is described with reference to Fig. 23. As shown in Fig. 23, let it be supposed that receivers u2, u11, u12 are revoked, and that ciphertexts encrypted using subset keys corresponding to a subset $S_{2,17}$ and a subset $S_{3,13}$ are distributed by broadcasting.

A receiver u4 holds six labels $LABEL_{1,5}$, $LABEL_{1,8}$, $LABEL_{1,18}$, $LABEL_{2,8}$, $LABEL_{2,18}$, $LABEL_{4,18}$, and one intermediate label $IL_{9,18}$ from which $IL_{1,\phi}$, $IL_{1,3}$, $IL_{2,5}$, $IL_{4,8}$ can be derived. The receiver u4 corresponds to (A) mentioned above. Namely, the receiver u4 directly holds, for a subset $S_{2,17}$, the label $LABEL_{2,8}$ using a node 8 which is an ancestor of a node 17, and thus, by applying the pseudo-random number generator G to this label as many times as required, the receiver u4 can obtain a subset key $SK_{2,17}$.

Moreover, under the same setting, a receiver u5 holds six labels $LABEL_{1,4}$, $LABEL_{1,11}$, $LABEL_{1,21}$, $LABEL_{2,11}$, $LABEL_{2,21}$, $LABEL_{5,21}$, and one intermediate label $IL_{10,21}$ from which $IL_{1,\phi}$, $IL_{1,3}$, $IL_{2,4}$, $IL_{5,11}$ can be derived. The receiver u5 corresponds to (B) mentioned above. Namely, the receiver u5 does not directly hold any label $LABEL_{2,k}$ using a node k which is an ancestor of the node 17, for the subset $S_{2,17}$. For this reason, the intermediate label $IL_{2,4}$ corresponding to the node 4, which is an ancestor of the node 17, is derived first from the intermediate label $IL_{10,21}$ which it holds, using the above-mentioned technique, and then the label $LABEL_{2,4}$ is obtained, after which by applying the pseudo-random number generator G to this label as many times as required, the subset key $SK_{2,17}$ can be obtained.

If there is no receiver to be revoked at all and thus the second special subset $SS'_{1,\phi}$ is used as the subset, a receiver um obtains the intermediate label $IL_{1,\phi}$ by the above-mentioned processing, and using this intermediate label, the label $LABEL_{1,\phi}$ is calculated as

$$\text{label } LABEL_{1,\phi} = H(IL_{1,\phi})$$

and this is then inputted to the pseudo-random number generator G, to obtain C bits in the middle of its output. Namely, the subset key $SK_{1,\phi}$ corresponding to the subset $S_{1,\phi}$ is obtained by

$$SK_{1,\phi} = G_M(LABEL_{1,\phi})$$

and this is used for decrypting the ciphertext.

A procedure for the subset key acquiring and decrypting processing from reception of ciphertexts which is executed by a receiver is described.

First, in step 401, the receiver determines one of a plurality of ciphertexts it will decrypt, from a ciphertext set consisting of the plurality of ciphertexts. This is processing of extracting a ciphertext encrypted by a subset key which it can generate. Here, the fact that the receiver cannot determine a ciphertext it should decrypt means that the receiver is revoked. This ciphertext selecting processing is executed based on, e.g., the subset specifying information conveyed together with the ciphertexts.

Once the ciphertext has been determined, the receiver derives the subset key used for encrypting that ciphertext, using the above-mentioned technique, in step S402.

A detailed procedure for the subset key deriving processing is described with reference to Fig. 25. First, in step S501, a receiver um determines whether or not the node j of the subset $S_{i,j}$ corresponding to any subset key $SK_{i,j}$ to be obtained for application to the ciphertext decrypting processing

(A) is a descendant of a node k for which the receiver directly has a label $LABEL_{i,k}$ (a case where j = k is included) or (B) matches with a node k which is one of the child nodes of the node i and which is a node not existing in a path from a leaf n to which the receiver is assigned to the root (i.e., the sibling node of the child node of the node i existing in the path), or is a descendant thereof (i.e., the node j is a descendant of the configuration node k of any first subset $SS_{i,k}$ among the subsets for which the receiver um is given labels in the SD scheme).

It should be noted that if there is no receiver to be revoked and thus the subset key $SK_{1,\phi}$ for the second special subset $SS'_{1,\phi}$ is used for encrypting secret information, the node j is deemed to be (B).

In the case of (A), the processing proceeds to step S503, where a necessary subset key is obtained by applying the pseudo-random number generator G as many time as required based on a label owned by the receiver.

In the case of (B), the processing proceeds to step S504, where a necessary intermediate label corresponding to a special subset is calculated by applying the above-mentioned expression (Formula 5) or (Formula 6) based on the intermediate label $IL_{P(n),S(n)}$. Furthermore, in step S505, a label LABEL corresponding to that subset is calculated by performing hash processing on the calculated intermediate label, and in step S506, the necessary subset key is obtained by applying the pseudo-random number generator G based on the label calculated in step S506.

Returning to the flow of Fig. 24, the receiver having derived the subset key by the above-mentioned processing, decrypts, in step S404, the ciphertext selected from the ciphertext set in step S402, using the subset key, to obtain secret information transmitted. The secret information is a content key for decrypting an encrypted content of a television broadcasting system. In this case, the receiver receives the encrypted content, and decrypts it using the content key for output.

Next, referring to Figs. 26, 27, the functional configuration is described of an information processing apparatus for executing the label setting processing, the ciphertext generating processing, and an information processing apparatus as a receiver for executing the ciphertext decrypting processing.

First, referring to Fig. 26, the configuration of an information processing apparatus for executing the label setting processing, the ciphertext generating processing is described. An information processing apparatus 410 has an intermediate label and label generating means 411, a labels-for-supply determining means 412, a ciphertext generating means 413, a ciphertext supplying means 414.

The information processing apparatus 410 is an information processing apparatus for generating a hierarchical tree applied to the ciphertext supplying processing in which only specific selected equipment except excluded (revoked) equipment can perform decryption by applying the Broadcast Encryption scheme based on a hierarchical tree configuration. The intermediate label and label generating means 411 sets, as a hashed value based on an intermediate label, a value of a label corresponding to a special subset, among labels (LABEL) respectively corresponding to the subsets set based on the SD (Subset Difference) scheme to which the hierarchical tree is applied. As a hash function, MD4 or MD5, or SHA-1, or the like may be applicable.

The special subset selected by the intermediate label and label generating means 411 is at least either of

A first special subset which is among subsets $S_{i,j}$ each of which is defined by excluding a subtree rooted at a node j lower than a node i from a subtree rooted at the node i in the hierarchical tree, and in which the nodes i and j bear a direct descendant parent-child relationship in the hierarchical tree, and

the second special subset, which is a subset $S_{1,\phi}$ defined as an entire-tree set including all the leaves in the hierarchical tree and thus rooted at the root.

The intermediate label and label generating means 411 generates, as node-corresponding values of a one-way permutation tree, intermediate labels which enable the labels corresponding to the special subsets, among the labels (LABEL) respectively corresponding to the subsets set based on the SD (Subset Difference) scheme, to be derived using the hash function H.

Specifically, N values $x_N$-$x_{2N-1}$ are determined according to the algorithm described with reference to the flow of Fig. 14 above, to set them as intermediate labels. Namely, in a hierarchical tree having a binary tree configuration with N terminal nodes, first, a number $x_1 \in Z^*_M$ is randomly selected, and a node-corresponding value $x_i$ is calculated according to the above-mentioned expression (Formula 3) or (Formula 4), while incrementing i by 1 using i as a counter, to determine the N values $x_N$-$x_{2N-1}$, and these node-corresponding values $x_i$ are set as the intermediate labels from which the labels of the above-mentioned first special subset $SS_i$ and second special subset $SS'_{1,\phi}$ can be calculated.

Furthermore, the labels of the special subsets are calculated by the hash processing based on the intermediate labels. Thereafter, by the operation in which the pseudo-random number generator G is applied to these labels corresponding to the special subsets, the labels respectively corresponding to the subsets are sequentially calculated. These are the processing which has been described with reference to Fig. 20 above.

The labels-for-supply determining means 412 executes processing of determining labels for supply to a receiver corresponding to each of the terminal nodes of the hierarchical tree. The labels-for-supply determining means 412 determines special subset non-corresponding labels which do not correspond to the special subsets, and one intermediate label corresponding to the special subsets, as the labels for supply to the receiver.

Specific processing by the labels-for-supply determining means 412 is as follows. First, the labels $LABEL_{i,j}$ of the subsets $S_{i,j}$ each of which initiates at any internal node i in a path m (path-m) from a leaf to which a receiver um is assigned to the root, and each of which corresponds to a node j directly branching from nodes in a path from this leaf to i, and the label $LABEL_{1,\phi}$ corresponding to the subset $SS_{1,\phi}$ used where there is no receiver to be revoked and thus corresponding to the entire tree including all the receivers are set as the tentatively selectedlabels. Then, from these tentatively selected labels, the special subset non-corresponding labels which do not correspond to the special subsets are selected as the labels for supply. Furthermore, one intermediate label is selected, from which the labels corresponding to the special subsets can be calculated. These are determined as the final labels for supply to the receiver um.

The ciphertext generating means 413 executes encryption processing by selectively applying subset keys derivable from the labels generated by the intermediate label and label generating means 411, to generate ciphertexts. The ciphertext supplying means 414 supplies the thus generated ciphertexts through a network or a medium storing them.

Next, referring to Fig. 27, the functional configuration of an information processing apparatus as a receiver for executing the ciphertext decrypting processing is described.

An information processing apparatus 420 as a receiver for executing the ciphertext decrypting processing has a ciphertext selecting means 421, a label calculating means 422, a subset key generating means 423, a decrypting means 424, a label memory 425.

The information processing apparatus 420 as a receiver for executing the ciphertext decrypting processing is an information processing apparatus 420 for executing the decrypting processing of ciphertexts encrypted by subset keys respectively corresponding to the subsets set based on the SD (Subset Difference) scheme, which is the Broadcast Encryption scheme based on a hierarchical tree configuration. The ciphertext selecting means 421 selects, from the ciphertexts for processing, a ciphertext generated by applying a subset key derivable by the pseudo-random number generating processing based on the label calculable from a label held in its label memory 425 or from the intermediate label which it holds.

The label calculating means 422 executes, if the subset key applied to the ciphertext is not a subset key derivable by the pseudo-random number generating processing based on the label held, the operation processing based on the intermediate label $IL_{P(n),S(n)}$ given to the receiver is executed to calculate a necessary intermediate label corresponding to a special subset.

Specifically, the necessary intermediate label corresponding to the special subset is calculated by applying the above-mentioned expression (Formula 5) or (Formula 6), based on the intermediate label $IL_{P(n), S(n)}$ stored in the label memory 425. Furthermore, by performing hash processing on the calculated intermediate label, a label LABEL corresponding to that subset is calculated.

The subset key generating means 423 obtains the necessary subset key by applying the pseudo-random number generator G based on the label stored in the label memory 425 or the label LABEL calculated from the intermediate label by the label calculating means 422.

The decrypting means 242 executes the ciphertext decrypting processing based on the subset key calculated by the subset key generating means 423.

In Fig. 28, there is shown a hardware configuration example of an information processing apparatus for executing the label setting processing, the ciphertext generating processing, and an information processing apparatus 500 as a receiver for executing the ciphertext decrypting processing. Blocks enclosed by dotted lines in the drawing are not necessarily equipped. For example, a media interface 507 is equipped if the receiver 500 is an optical disk player or the like. An input/output interface 503 is equipped if the receiver 500 exchanges information with other equipment or receives signals through an antenna. What matters is a secure storage unit 504, in which the labels given by the management center (TC) during the setup phase can be kept in storage securely.

The information processing apparatus 500 includes, as shown in Fig. 28, a controller 501, an operation unit 502, the input/output interface 503, the secure storage unit 504, a main storage unit 505, a display device 506, the media interface 507.

The controller 501 includes, e.g., a CPU having a function of a control unit for executing data processing in accordance with a computer program. The operation unit 502 functions as an exclusive operation unit and an encryption processing unit for, e.g., generating encryption keys, generating random numbers, and performing encryption processing. The unit 502 executes the label and intermediate label calculating processing, the subset key calculating processing based on labels. Furthermore, if the information processing apparatus 500 is an information processing apparatus as a receiver, the unit 502 executes the ciphertext decrypting processing based on subset keys.

The input/output interface 503 is an interface dealing with data input from input means such as a keyboard, a mouse, data output to an external output apparatus, data transmission/reception processing via a network.

If the information processing apparatus 500 is an information processing apparatus as a receiver, the secure storage unit 504 stores data to be held safely or confidentially, such as , e.g., labels, intermediate labels, various IDs given by the management center (TC) during the setup phase.

The secure storage unit 504 stores, e. g. , one intermediate label from which labels (LABEL) corresponding to special subsets selected from subsets can be generated, and labels (LABEL) not corresponding to the special subsets.

If the information processing apparatus 500 is an information processing apparatus as a receiver, the labels generated based on the intermediate label stored in the secure storage unit 504 are the labels (LABEL) corresponding to the special subsets, which specifically are the labels corresponding to the following subsets

(a) a first special subset which is among subsets $S_{i,j}$ each of which is defined by excluding a subtree rooted at a node j lower than a node i from a subtree rooted at the node i in a hierarchical tree, and in which the nodes i and j bear a direct descendant parent-child relationship in the hierarchical tree, and
(b) the second special subset, which is a subset $S_{1,\phi}$ defined as an entire-tree set including all the leaves in the hierarchical tree and thus rooted at the root.

The main storage unit 505 is a memory area used for, e.g., a data processing program executed by the controller 501, temporarily stored processing parameters, a working area for program execution, and the like. The secure storage unit 504 and the main storage unit 505 are memories including, e.g., a RAM, a ROM and the like. The display device 506 is used for outputting decrypted contents and the like. The media interface 507 provides a read/write function for media such as a CD, a DVD, an MD.

[6. Outline of Basic Layered Subset Difference (Basic LSD) scheme]

Next, a Basic Layered Subset Difference (Basic LSD) scheme is outlined.

In the Non-Patent Document 2 (Advances in Cryptography - Crypto 2002, Lecture Notes in Computer Science 2442, Springer, 2002, pp.47-60 (D. Halevy and A. Schamir, "The LSD Broadcast Encryption Scheme")) referred to in the above-mentioned Background Art section, a Layered Subset Difference scheme obtained by improving the SD scheme is proposed. The LSD scheme includes a Basic scheme and a General scheme which is an extension of the Basic scheme. Here, the Basic scheme is described.

The LSD scheme is an extension of the SD scheme, in which the concept of layers is added to the SD scheme. In a tree structure of the SD scheme, a specific height is defined as a special level (Special Level). While there is only one kind of a Special Level in the Basic LSD scheme, a plurality of Special Levels with varying degrees of importance are used in the General LSD scheme.

Now, for ease of description, let $\log^{1/2}N$ be an integer. In the Basic LSD scheme, as shown in Fig. 29, among the levels from the root to leaves of a tree, levels occurring every $\log^{1/2}N$ including a root level and a leaf level are determined to be Special Levels. A hierarchical portion interposed between two adjacent Special Levels (including the Special Levels at both ends) is called a layer. In the example of Fig. 29, the root level, a level including a node k, and the leaf level are Special Levels, and the root level, a level including a node i, and the level including the node k form a single layer. Moreover, the level including the node k, a level including a node j , and the level including the leaves form another layer.

In the Basic LSD scheme, among subsets $S_{i,j}$ defined in the SD scheme, only those satisfying at least one of conditions (1) the node i and the node j belong to the same layer, and (2) the node i is at a Special Level, are defined. By so doing, part of the subsets used in the SD scheme are not defined in the Basic LSD scheme. However, such subsets can be represented by the union of at most two subsets defined in the Basic LSD scheme. For example, in the example of Fig. 29, a subset $S_{i,j}$ is not defined in the Basic LSD scheme, but can be represented as

$$S_{i,j} = S_{i,k} \cup S_{k,j}$$

using a node (node k) on the Special Level nearest to the node i in a path from the node i to the node j.

Namely, instead of one ciphertext encrypted using a subset key $SK_{i,k}$ corresponding to a subset $S_{i,k}$ in the SD scheme, in the Basic LSD scheme, two ciphertexts encrypted using subset keys $SK_{i,k}$ and $SK_{k,j}$ corresponding to subsets $S_{i,k}$ and $S_{k,j}$ are transmitted.

As a result of this technique, the number of ciphertexts to be transmitted increases only two times that in the SD scheme, while the number of labels held by each receiver can be reduced compared with that in the above-mentioned SD scheme.

The number of labels held by each receiver in the SD scheme has been described with reference to Fig. 9 above. Now, the number of labels held by each receiver in the Basic LSD scheme under the same setting is described with reference to Fig. 30. A receiver u4 in Fig. 30 may only have to hold labels $LABEL_{i,j}$ for cases where both i, j belong to the same layer or where i is at a Special Level. Namely, the labels held by the receiver u4 are $LABEL_{1,3}$, $LABEL_{1,5}$, $LABEL_{1,8}$, $LABEL_{1,18}$, $LABEL_{2,5}$, $LABEL_{4,8}$, $LABEL_{9,18}$, $LABEL_{9,18}$. Furthermore, similarly to the SD scheme, the receiver also needs to hold a special label used where there is no receiver to be revoked.

When the total number of receivers is set to N, the total number of labels which each receiver need to hold can be obtained as follows. First, the number of labels per layer equals a number obtained by calculation using the following expression, since there are as many nodes j as the heights of i within the label once the node i has been determined.

[Equation 16]

$$\sum_{i=1}^{\log^{1/2} N} i = \frac{1}{2}(\log N + \log^{1/2} N)$$

Since there are $\log^{1/2}N$ layers in the hierarchical tree, the number of labels per layer of the entire hierarchical tree equals a number obtained by calculation using the following expression.

[Equation 17]

$$\frac{1}{2}(\log^{3/2} N + \log N)$$

Next, let the case where the node i is at a Special Level be considered. Since there are as many nodes j as the heights of i in the entire hierarchical tree, the number of labels in the entire hierarchical tree including any node i being at a Special Level equals a number obtained by calculation using the following expression.

[Equation 18]

$$\sum_{i=1}^{\log^{1/2} N} (\log^{1/2} N) i = \frac{1}{2}(\log^{3/2} N + \log N)$$

Now that the labels for the nodes i being at a Special Level and for nodes j belonging to the same layer have been counted doubly, these labels need to be subtracted. Since there are $\log^{1/2}N$ such combinations per layer, there are log N such combinations overall. When the special label for the case where there is no receiver to be revoked is added to them, the total number of labels each receiver holds in the Basic LSD scheme equals a number given by the following expression.

[Equation 19]

$$\frac{1}{2}(\log^{3/2} N + \log N) + \frac{1}{2}(\log^{3/2} N + \log N) - \log N + 1 = \log^{3/2} N + 1$$

[7. Configuration for reducing the number of labels in the Basic LSD scheme using the one-way permutation tree]

Next, a configuration for reducing the number of labels in the Basic LSD scheme using the one-way permutation tree is described. In the present invention based on the above-mentioned SD scheme, the number of labels owned by each receiver is reduced by the receiver having only one specific intermediate label from which the intermediate labels $IL_{i,j}$ for obtaining the labels $LABEL_{i,j}$ of subsets $S_{i,j}$ in each of which the node i is the parent of the node j can be derived. This technique can be applied similarly to the Basic LSD scheme.

A specific configuration method is substantially the same as that of the above-mentioned embodiment of the present invention. However, if a node i is not at a Special Level when the management center (TC) successively produces the labels $LABEL_{i,j}$ using the pseudo-random number generator G during setup, any label for which a node lower than a Special Level that is immediately below i is j is not used. Consequently, generation of labels can be stopped at that Special Level. Moreover, when the management center distributes the generated labels to each receiver, only labels satisfying the above-mentioned conditions are generated, and thus the management center has to distribute such labels only.

As a setting similar to what has been described with reference to Fig. 30, a specific configuration example for reducing the number of labels in the Basic LSD scheme using the one-way permutation tree is described with reference to Fig. 31. In the Basic LSD scheme, the number of labels a receiver u4 holds should be nine overall, which are $LABEL_{1,3}$, $LABEL_{1,5}$, $LABEL_{1,8}$, $LABEL_{1,18}$, $LABEL_{2,5}$, $LABEL_{4,8}$, $LABEL_{4,18}$, $LABEL_{9,18}$, plus one special label used where there is no receiver to be revoked. By contrast, as in the present invention, when it is designed such that the receiver holds one intermediate label $IL_{9,18}$ from which the intermediate labels $IL_{i,j}$ and the $IL_{1,\phi}$ respectively corresponding to the special subsets used where nodes i, j bear a parent-child relationship and where there is no receiver to be revoked can be derived, the receiver may only have to hold five labels overall, which are four labels $LABEL_{1,5}$, $LABEL_{1,8}$, $LABEL_{1,18}$, $LABEL_{4,18}$, and one intermediate label $IL_{9,18}$.

The number of labels which can be reduced by the present invention given the total number of receivers being N is considered. In a Basic LSD scheme to which the present invention is not applied, how many labels $LABEL_{i,j}$, in each of which the nodes i, j bear a parent-child relationship, should be held by each receiver is considered.

When the nodes i, j bear a parent-child relationship, the following three cases can be considered.

(A) The node i is at a Special Level.
(B) The node j is at a Special Level.
(C) Neither the node i nor the node j is at a Special Level.

If the nodes i, j bear a parent-child relationship (i.e., they are adjacent to each other) in any of the above cases, i and j belong to the same layer. Namely, the subset $S_{i,j}$ satisfies either condition required to be defined in the Basic LSD scheme. Namely, such subsets are defined and used in the Basic LSD scheme, and thus a receiver needs to hold the $LABEL_{i,J}$ corresponding thereto.

For a certain receiver, such nodes i, j are determined as follows. Namely, there are so many such nodes i, j as to cover the height of a tree given that the total number of nodes i in the tree equals the height of the tree (i.e. , all the nodes in a path from a leaf to which the receiver is assigned to the root, excluding the leaves), and once i has been determined, only one j is determined (the node which is a child of i and which does not exist in the path). Thus, there exist so many nodes i, j as to cover the height of the tree, i.e., log N nodes i, j.

By designing such that these log N labels and one special label are generated from one intermediate label using the present invention, the number of labels held by a receiver can be reduced by

$$\log N+1 - 1 = \log N$$

As mentioned above, the total number of labels a receiver holds in the Basic LSD scheme was

$$\log^{3/2} N+1$$

and thus, by applying the present invention, this can be reduced to

$$\log^{3/2} N - \log N+1$$

[8. Outline of General Layered Subset Difference (General LSD) scheme]

Next, a General Layered Subset Difference (General LSD) scheme is outlined.
While one kind of a Special Level is used in the Basic LSD, a plurality of Special Levels having different degrees of importance are used in the General LSD scheme.
Similarly to what is proposed in the literature proposing the LSD scheme, in a hierarchical tree, a path from the root to a node j via a node i is considered as a single graph. The root and the node j of the tree are the end points. Nodes of the tree are nodes of the graph. One of the nodes other than the end points is the node i. In this graph, each node is represented by its distance from the root. This distance is represented as a d digit number in base b (where b = ($\log^{1/d}$N)). For example, the root is represented as 0 ... 00. A node next thereto (a child node of the root in the hierarchical tree structure) is represented as 0 ... 01.
A subset $S_{i,j}$ is considered to be the final change from any node i to any node j, in combinations of defined transformations (changes from one node to another). A defined transformation represents a defined subset, and individual changes required for the final transition indicate defined subsets required to represent the subset $S_{i,j}$ in terms of segments. As disclosed in the original literature, when nodes i, $k_1$, $k_2$, ···, $k_{d-1}$, j exist in a path of a tree in this order, a subset $S_{i,j}$ in the SD scheme is indicated by the following expression in the General LSD scheme.

[Equation 20]

$$S_{i,j} = S_{i,k_1} \cup S_{k_1,k_2} \cup \cdots \cup S_{k_{d-1},j}$$

Namely, the subset $S_{i,j}$ in the SD scheme is represented by the union of at most d subsets in the General LSD scheme.
In the General LSD scheme, when a node i is represented as $\vec{x}$ a $\vec{0}$(where a is the rightmost nonzero digits, $\vec{x}$ is a sequence of arbitrary digits, and $\vec{0}$ is a sequence of zeros), all changes of i to j if j is represented either by $\overrightarrow{x+1}$ 0 $\vec{0}$, or $\vec{x}$ a' $\vec{y}$ (where a' > a, and $\vec{y}$ is a sequence of arbitrary digits of the same length as $\vec{x}$) are defined. Namely, the subset $S_{i,j}$ being represented by any such i,j pair is defined.
In the above way, a level represented by two-digit numbers ending (at the rightmost) with 0 when d = 2 in the General LSD scheme is considered as a Special Level in the Basic LSD scheme. In the General LSD scheme, the number of rightmost trailing zeros in the representation of a node i determines the degree of importance of that level, and a node j could be any node (including nodes at both ends) from i+1 to a first node having a higher degree of importance than i. Under such a setting, let i and j be that i = 825917, j = 864563. Then, a change from i to j, i.e., the subset $S_{i,j}$ in the SD scheme can be represented as four transformations defined in the General LSD scheme, i.e., 825917 → 825920 → 826000 → 830000 → 864563.
Namely, supposing that $k_1$ = 825920, $k_2$= 826000, $k_3$ = 830000, then the subset $S_{i,j}$ is indicated by the following expression. Namely,

[Equation 20]

$$S_{i,j} = S_{i,k_1} \bigcup S_{k_1,k_2} \bigcup S_{k_2,k_3} \bigcup S_{k_3,j}$$

In order to transmit secret information to receivers belonging to the above-mentioned subsets $S_{i,j}$ of the SD scheme, four ciphertexts encrypted by subset keys corresponding to subsets indicated by the following expression are transmitted.

[Equation 21]

$$S_{i,k_1}, S_{k_1,k_2}, S_{k_2,k_3}, S_{k_3,j}$$

The number of labels to be held by each receiver in the General LSD scheme decreases with increasing parameter d, to finally obtain

$$O(\log^{1+\varepsilon} N)$$

where ε = 1/d. Also, at this time, the upper limit of the number of ciphertexts to be transmitted is

$$d(2r - 1)$$

For details, reference should be made to the above-mentioned literature.

[9. Configuration for reducing the number of labels in the General LSD scheme using the one-way permutation tree]

Next, a configuration for reducing the number of labels in the General LSD scheme using the one-way permutation tree is described. The above-mentioned technique for reducing the number of labels held by a receiver, using the one-way permutation tree in the Basic LSD scheme, can also be applied to the General LSD scheme. Specifically, the Basic LSD scheme and the General LSD scheme differ only in their conditions to be satisfied by any defined subset, but they do not differ as far as the one-way permutation tree is used.

Also in the General LSD scheme, a receiver um needs to hold a label $LABEL_{i,j}$ corresponding to any subset $S_{i,j}$ in which the nodes i, j bear a parent-child relationship, among the labels defined in the SD scheme and given to the receiver. The reason is that even if i takes any value, a change to a node j (i.e., i+1) which is a child thereof falls under the above-mentioned condition for a defined transformation. Namely, similarly to the Basic LSD scheme, for a certain receiver, there are log N labels in which nodes i, j bear a parent-child relationship, among the labels to be held by the receiver. By designing such that these labels and the special label are produced from one intermediate label, a reduction of as many as log N labels can be implemented. The number of labels to be held by each receiver in the original General LSD scheme was

$$O(\log^{1+\varepsilon} N)$$

(where ε is an arbitrary integer), and thus, log N labels can be reduced therefrom.

Originally, the number of labels which each receiver should hold in the General LSD scheme is set to a number smaller than that in the SD scheme or in the Basic LSD scheme. From this setting, a number of labels similar to the number in the SD scheme or in the Basic LSD scheme can further be subtracted, and thus, in this sense, the effect of reduction is further significant.

The present invention has been described in great detail with reference to specific embodiments in the foregoing. However, it is obvious that those skilled in the art can make modifications to or substitutions for the embodiment without departing from the scope and spirit of the present invention. Namely, the present invention has been disclosed by way of examples, and thus should not be construed in a restrictive sense. In order to judge the scope and spirit of the present invention, the appended claims should be taken into consideration.

It should be noted that a series of processing described in the Description can be performed by hardware, or software, or a configuration having both combined. In a case of performing the processing depending on software, the processing can be performed by installing a program having recorded processing sequences therein to a memory within a computer incorporated into dedicated hardware, for execution, or by installing the program into a general-purpose computer that can perform various processing, for execution.

For example, the program can be recorded on a hard disk and a ROM (Read Only Memory) as recording media beforehand. Alternatively, the program can be stored (recorded) temporarily or permanently on a removable recording medium, such as a flexible disk, a CD-ROM (Compact Disc Read Only Memory), a MO (Magneto optical) disc, a DVD (Digital Versatile Disc), a magnetic disk, a semiconductor memory. Such a removable recording medium can be provided as so-called package software.

It should be noted that the program can be installed to the computer from a removable recording medium such as mentioned above, and additionally, through wireless transmission to the computer from a download site, wired transmission to the computer via a network such as a LAN (Local Area Network), the Internet to allow the computer to receive the thus transmitted program for installation in a storage medium such as a hard disk incorporated therein.

It should be noted that the various processing described in the Description is performed not only time-sequentially according to the description, but also parallelly or individually according to the processing capacity of an apparatus that performs processing, or as necessary. Further, the system used in the present Description means a logical set configuration of a plurality of apparatus, and is not limited to one wherein apparatus each having its own configuration are grouped within the same enclosure.

Industrial Applicability

According to the configuration of the present invention, a one-way permutation tree based on a single trap-door one-way permutation is applied further to a Subset Difference (SD) scheme, and a Layered Subset Difference (LSD) scheme which are deemed to be relatively efficient configurations in information distribution configurations adopting a hierarchical tree structure being one embodiment of a Broadcast Encryption scheme, whereby amounts of information each receiver should hold safely can be reduced.

Furthermore, in the configuration of the present invention, intermediate labels which are intermediate labels (IL) set as values from which values of labels corresponding to selected part of special subsets, among labels (LABEL) corresponding to subsets set based on the SD scheme or the LSD scheme to which the hierarchical tree is applied, can be calculated by operation processing, and these intermediate labels have values from which values of other intermediate labels can be calculated by applying a trap-door one-way permutation F based on a value of at least one intermediate label. Since it is configured such that a receiver is given, in addition to labels not corresponding to the special subsets, one intermediate label from which the labels corresponding to the special subsets can be derived, the number of labels supplied to the receiver in the conventional SD scheme or LSD scheme can be reduced. As to the reduced labels, the other intermediate labels can be calculated by executing the trap-door one-way permutation F on the intermediate label held by the receiver, whereby processing on all the subsets settable based on the conventional SD or LSD scheme can be performed. As a result of applying the configuration of the present invention, a reduction in amounts of information (labels) each receiver should hold can be realized.

## Claims

1. An information processing method for generating a hierarchical tree applied to ciphertext supplying processing in which only specific selected equipment canperformdecryption using a Broadcast Encryption scheme based on a hierarchical tree configuration, the information processing method being
**characterized by** comprising:

   an intermediate label generating step of generating intermediate labels (IL), which are defined as having values that allow to calculate, by operation processing, values of labels corresponding to selected part of special subsets, among labels (LABEL) respectively corresponding to subsets based on a SD (Subset Difference) scheme to which the hierarchical tree is applied, and that allows to calculate values of other intermediate labels by applying a trap-door one-way permutation F based on a value of at least one of the intermediate label;

a label generating step of generating the labels corresponding to the special subsets by operation processing based on the intermediate labels, and further generating labels not corresponding to the special subsets by an operation based on the generated labels; and
a labels-for-supply determining step of determining labels for supply to receivers corresponding to terminal nodes of the hierarchical tree, the labels including
a special subset-noncorresponding label that does not corresponding to the special subset, and
an intermediate label from which label corresponding to the special subset can be calculated by operation processing.

**2.** The information processing method according to Claim 1,
**characterized by** further comprising:

a ciphertext generating step of generating ciphertexts by executing encryption processing while selectively applying subset keys derived from the respective labels corresponding to the subsets, which are generated in the label generating step, for supplying to the receiver.

**3.** The information processing method according to Claim 1,
**characterized in that**:

the label generating step includes
a step of calculating the values of the labels corresponding to the special subsets by performing hash processing on the intermediate labels.

**4.** The information processing method according to Claim 1,
**characterized in that**:

the label generating step includes
a step of generating other labels by pseudo-random number generating processing performed on the values of the labels corresponding to the special subsets.

**5.** The information processing method according to Claim 1,
**characterized in that**:

the intermediate label generating step is
a step of selecting a value $x_1 \in Z^*_M$ randomly, in a hierarchical tree with 2N-1 nodes, calculating node-corresponding values $x_1$ to $x_{2N-1}$ in the hierarchical tree with 2N-1 nodes, by applying either of the following equations, to which an inverse permutation $F^{-1}$ of a trap-door one-way permutation F is applied, while incrementing i by one up to i = 2 to 2N-1 using i as a counter, and further setting calculated values as the values of the intermediate labels (IL) from which the special subset-corresponding labels can be calculated:

[Equation 1]

$$x_i = (x_{\lfloor i/2 \rfloor} + i)^d \bmod M$$

where $\lfloor i \rfloor$ represents the largest integer equal to i or less, or

[Equation 2]

$$x_i = (x_{\lfloor i/2 \rfloor} + h(i))^d \bmod M$$

where $\lfloor i \rfloor$ represents the largest integer equal to i or less,
where M, d are a modulus M and a secret exponent d as cryptographic parameters.

**6.** The information processing method according to Claim 1, **characterized in that**:

the special subset selected in the intermediate label generating step is at least one of a first special subset and a second special subset;
the first special subset is one of subsets $S_{i,j}$ and having a direct descendant parent-child relationship between a node i and a node j, the subsets $S_{i,j}$ being defined as subsets that are obtained by excluding a subtree rooted at a node j that is lower than a node i from a subtree rooted at the node i in the hierarchical tree; and
the second special subset is a subset $S_{1,\phi}$ defined as an entire-tree set having a root including all leaves of the hierarchical tree as a top.

**7.** The information processing method according to Claim 1, **characterized in that**:

the labels-for-supply determining step is
a step of specifying one of the intermediate labels for supply to the receiver corresponding to the terminal node of the hierarchical tree as being an intermediate label corresponding to a lowermost one of subsets $S_{i,j}$ constituting the first special subset(s).

**8.** The information processing method according to any of Claims 1 to 7, **characterized in that**:

the intermediate label generating step is
a step of setting labels corresponding to selected part of special subsets, among labels (LABEL) respectively corresponding to subsets set in accordance with a Basic LSD (Basic Layered Subset Difference) scheme having a subset management configuration based on layers separated by a single Special Level set in the hierarchical tree, as values calculable from the intermediate labels (IL) corresponding to the special subsets.

**9.** The information processing method according to any of Claims 1 to 7, **characterized in that**:

the intermediate label generating step is
a step of setting labels corresponding to selected part of special subsets, among labels (LABEL) respectively corresponding to subsets set in accordance with a General LSD (General Layered Subset Difference) scheme having a subset management configuration based on layers separated by a plurality of Special Levels set in the hierarchical tree, as values calculable from the intermediate labels (IL) corresponding to the special subsets.

**10.** A decryption processing method for executing decrypting processing of ciphertexts encrypted by subset keys respectively corresponding to subsets set based on a SD (Subset Difference) scheme which is a Broadcast Encryption scheme based on a hierarchical tree configuration, the decryption processing
method being **characterized by** comprising:

a ciphertext selecting step of selecting a ciphertext generated by applying a subset key derivable by pseudo-random number generating processing based on a label held therein or a label calculable from an intermediate label held therein, from the ciphertexts;
a label calculating step of calculating a label corresponding to a special subset by executing operation processing on the intermediate label held if the subset key to be applied to the ciphertext cannot be derived by the pseudo-random number generating processing based on the label held;
a step of generating the subset key by the pseudo-random number generating processing based on the label held or the label calculated; and
a decrypting step of executing the decrypting processing of the ciphertext by applying the generated subset key.

**11.** The decryption processing method according to Claim 10, **characterized in that**:

the label calculating step includes
a step of calculating another intermediate label by executing a trap-door one-way permutation F on the intermediate label held.

**12.** The decryption processing method according to Claim 10,

**characterized in that**:

the label calculating step includes
a step of executing calculation of the label by performing hash processing on the intermediate label held or the another intermediate label obtained by executing the trap-door one-way permutation F on the intermediate label held.

**13.** The decryption processing method according to Claim 10,
**characterized in that**:

in the label calculating step, the subset key to be applied to the ciphertext is
a subset key calculable by the pseudo-random number generating processing based on a label corresponding to either a first special subset and a second special subset;
the first special subset is one of subsets $S_{i,j}$ and having a direct descendant parent-child relationship between a node i and a node j, the subsets $S_{i,j}$ being defined as subsets that are obtained by excluding a subtree rooted at the node j that is lower than the node i from a subtree rooted at the node i in the hierarchical tree; and
the second special subset is a subset $S_{1,\phi}$ defined as an entire-tree set having a root including all leaves of the hierarchical tree as a top; and
the label calculating step is
a step of calculating the label corresponding to the special subset by performing operation processing on the intermediate label held if the label corresponding to the special subset is not held.

**14.** The decryption processing method according to Claim 10,
**characterized in that**:

the label calculating step is
a step of calculating a label corresponding to a special subset including nodes in a path from a node to which a receiver for executing the decrypting processing is assigned to a root in the hierarchical tree, by performing operation processing on the intermediate label held.

**15.** An information processing method for executing generating processing of ciphertexts in which only specific selected equipment can perform decryption using a Broadcast Encryption scheme based on a hierarchical tree configuration, the information processing method being **characterized by** comprising:

a ciphertext generating step of generating ciphertexts by executing encryption processing while selectively applying subset keys respectively corresponding to subsets set based on a SD (Subset Difference) scheme to which a hierarchical tree is applied;

wherein the subset keys to be applied in the ciphertext generating step are subset keys calculable from the labels (LABEL) respectively corresponding to the subsets, and are set such that values of labels corresponding to selected part of special subsets can be calculated by operation processing based on intermediate labels (IL) and that the intermediate labels allow to calculate values of other intermediate labels by applying a trap-door one-way permutation F based on a value of at least one intermediate label.

**16.** The information processing method according to Claim 15,
**characterized by** further comprising:

a subset key generating step of generating subset keys,

wherein the subset key generating step is
processing of generating the subset keys by pseudo-random number generating processing based on the labels (LABEL) respectively corresponding to the subsets.

**17.** The information processing method according to Claim 15, **characterized by** further comprising:

a subset key generating step of generating subset keys,

wherein the subset key generating step includes:

an intermediate label generating step of generating the intermediate labels corresponding to the special subsets based on an operation expression to which an inverse permutation $F^{-1}$ of a trap-door one-way permutation F using $x_1 \in Z^*_M$, and a modulus M and a secret exponent d as cryptographic parameters are applied;
a label generating step of generating labels corresponding to the special subsets by operation processing based on the intermediate labels, and further generating labels not corresponding to the special subsets by an operation based on the generated labels; and
a step of calculating the subset keys by operation processing based on the labels.

**18.** The information processing method according to Claim 17,
**characterized in that**:

the special subset selected in the intermediate label generating step is at least one of a first special subset and a second special subset;
the first special subset is one of subsets $S_{i,j}$ and having a direct descendant parent-child relationship between a node i and a node j, the subsets $S_{i,j}$ being defined as subsets that are obtained by excluding a subtree rooted at the node j that is lower than the node i from a subtree rooted at the node i in the hierarchical tree; and
the second special subset is a subset $S_{1,\phi}$ defined as an entire-tree set having a root including all leaves of the hierarchical tree as a top.

**19.** The information processing method according to Claim 18,
**characterized in that**:

the intermediate label generating step is
a step of setting values of labels corresponding to selected part of special subsets, among labels (LABEL) corresponding to subsets set based on a Basic LSD (Basic Layered Subset Difference) scheme having a subset management configuration based on layers separated by a single Special Level set in the hierarchical tree, as values calculable from the intermediate labels (IL) corresponding to the special subsets.

**20.** The information processing method according to Claim 18,
**characterized in that**:

the intermediate label generating step is
a step of setting values of labels corresponding to selected part of special subsets, among labels (LABEL) corresponding to subsets set based on a General LSD (General Layered Subset Difference) scheme having a subset management configuration based on layers separated by a plurality of Special Levels set in the hierarchical tree, as values calculable from the intermediate labels (IL) corresponding to the special subsets.

**21.** An information processing apparatus for generating a hierarchical tree applied to ciphertext supplying processing in which only specific selected equipment can perform decryption using a Broadcast Encryption scheme based on a hierarchical tree configuration, the information processing apparatus being **characterized by** comprising:

intermediate label generating means for generating intermediate labels (IL), which are defined as having values that allow to calculate, by operation processing, values of labels corresponding to selected part of special subsets, among labels (LABEL) respectively corresponding to subsets based on a SD (Subset Difference) scheme to which the hierarchical tree is applied, and that allows to calculate values of other intermediate labels by applying a trap-door one-way permutation F based on a value of at least one of the intermediate label;
label generating means for generating the labels corresponding to the special subsets by operation processing based on the intermediate labels, and further generating labels not corresponding to the special subsets by an operation based on the generated labels; and
labels-for-supply determining means for determining labels for supply to receivers corresponding to terminal nodes of the hierarchical tree, the labels including
a special subset-noncorresponding label that does not corresponding to the special subset, and
an intermediate label from which label corresponding to the special subset can be calculated by operation processing.

**22.** The information processing apparatus according to Claim 21, **characterized by** further comprising:

ciphertext generating means for generating ciphertexts by executing encryption processing while selectively applying subset keys derived from the respective labels corresponding to subsets, which are generated by the label generating means, for supplying to the receiver.

**23.** The information processing apparatus according to Claim 21, **characterized in that**:

the label generating means is
configured to calculate the values of the labels corresponding to the special subsets by performing hash processing on the intermediate labels.

**24.** The information processing apparatus according to Claim 21, **characterized in that**:

the label generating means is
configured to generate other labels by pseudo-random number generating processing performed on the values of the labels corresponding to the special subsets.

**25.** The information processing apparatus according to Claim 21, **characterized in that**:

the intermediate label generating means is
configured to select a value $x_1 \in Z^*_M$ randomly, in a hierarchical tree with 2N-1 nodes, calculating node-corresponding values $x_1$ to $x_{2N-1}$ in the hierarchical tree with 2N-1 nodes by applying either of the following equations, to which an inverse permutation $F^{-1}$ of a trap-door one-way permutation F is applied, while incrementing i by one up to i = 2 to 2N-1 using i as a counter, and further set calculated values as the values of the intermediate labels (IL) from which the special subset-corresponding labels can be calculated:

[Equation 3]

$$x_i = (x_{\lfloor i/2 \rfloor} + i)^d \bmod M$$

where $\lfloor i \rfloor$ represents the largest integer equal to i or less, or

[Equation 4]

$$x_i = (x_{\lfloor i/2 \rfloor} + h(i))^d \bmod M$$

where $\lfloor i \rfloor$ represents the largest integer equal to i or less,
where M, d are a modulus M and a secret exponent d as cryptographic parameters.

**26.** The information processing apparatus according to Claim 15, **characterized in that**:

the special subset selected by the intermediate label generating means is at least one of a first special subset and a second special subset;
the first special subset is one of subsets $S_{i,j}$ and having a direct descendant parent-child relationship between a node i and a node j, the subsets $S_{i,j}$ being defined as subsets that are obtained by excluding a subtree rooted at the node j that is lower than the node i from a subtree rooted at the node i in the hierarchical tree; and
the second special subset is a subset $S_{1,\phi}$ defined as an entire-tree set having a root including all leaves of the hierarchical tree as a top.

**27.** The information processing apparatus according to Claim 21, **characterized in that**:

the labels-for-supply determining means is
configured to specify one of the intermediate labels for supply to the receiver corresponding to the terminal node of the hierarchical tree as being an intermediate label corresponding to a lowermost one of subsets $S_{i,j}$ constituting the first special subset(s).

**28.** The information processing apparatus according to any of Claims 21 to 27, **characterized in that**:

the intermediate label generating means is
configured to set labels corresponding to selected part of special subsets, among labels (LABEL) respectively corresponding to subsets set in accordance with a Basic LSD (Basic Layered Subset Difference) scheme having a subset management configuration based on layers separated by a single Special Level set in the hierarchical tree, as values calculable from the intermediate labels (IL) corresponding to the special subsets.

**29.** The information processing apparatus according to any of Claims 21 to 27, **characterized in that**:

the intermediate label generating means is
configured to set labels corresponding to selected part of special subsets, among labels (LABEL) respectively corresponding to subsets set in accordance with a General LSD (General Layered Subset Difference) scheme having a subset management configuration based on layers separated by a plurality of Special Levels set in the hierarchical tree, as values calculable from the intermediate labels (IL) corresponding to the special subsets.

**30.** An information processing apparatus for executing decrypting processing of ciphertexts encrypted by subset keys respectively corresponding to subsets set based on a SD (Subset Difference) scheme which is a Broadcast Encryption scheme based on a hierarchical tree configuration, the information processing apparatus being **characterized by** comprising:

ciphertext selecting means for selecting a ciphertext generated by applying a subset key derivable by pseudo-random number generating processing based on a label held therein or a label calculable from an intermediate label held therein, from the ciphertexts;
label calculating means for calculating a label corresponding to a special subset by executing operation processing on the intermediate label held if the subset key to be applied to the ciphertext cannot be derived by the pseudo-random number generating processing based on the label held;
means for generating the subset key by the pseudo-random number generating processing based on the label held or the label calculated; and
decrypting means for executing the decrypting processing of the ciphertext by applying the generated subset key.

**31.** The information processing apparatus according to Claim 30, **characterized in that**:

the label calculating means is
configured to calculate another intermediate label by executing a trap-door one-way permutation F on the intermediate label held.

**32.** The information processing apparatus according to Claim 30, **characterized in that**:

the label calculating means is
configured to execute calculation of the label by performing hash processing on the intermediate label held or the another intermediate label obtained by executing the trap-door one-way permutation F on the intermediate label held.

**33.** The information processing apparatus according to Claim 30, **characterized in that**:

in the label generating means,
the subset key to be applied to the ciphertext is
a subset key calculable by the pseudo-random number generating processing based on a label corresponding to either a first special subset or a second special subset;
the first special subset is one of subsets $S_{i,j}$ and having a direct descendant parent-child relationship between a node i and a node j, the subsets $S_{i,j}$ being defined as subsets that are obtained by excluding a subtree rooted at the node j that is lower than the node i from a subtree rooted at the node i in the hierarchical tree; and
the second special subset is a subset $S_{1,\phi}$ defined as an entire-tree set having a root including all leaves of the hierarchical tree as a top; and

the label calculating means is configured to calculate the label corresponding to the special subset by operation processing on the intermediate label held, if the label corresponding to the special subset is not held.

**34.** The information processing apparatus according to Claim 30, **characterized in that**:

the label calculating means is configured to calculate a label corresponding to a special subset including nodes in a path from a node to which a receiver for executing the decrypting processing is assigned to a root in the hierarchical tree, by performing operation processing on the intermediate label held.

**35.** An information processing apparatus for executing generating processing of ciphertexts in which only specific selected equipment can perform decryption using a Broadcast Encryption scheme based on a hierarchical tree configuration, the information processing apparatus being **characterized by** comprising:

ciphertext generating means for generating ciphertexts by executing encryption processing while selectively applying subset keys respectively corresponding to subsets set based on a SD (Subset Difference) scheme, to which a hierarchical tree is applied,
wherein the subset keys to be applied in the ciphertext generating means are subset keys calculable from the labels (LABEL) respectively corresponding to the subsets, and set such that values of labels corresponding to selected part of special subsets can be calculated by operation processing based on intermediate labels (IL) and that the intermediate labels allow to calculate values of other intermediate labels by applying a trap-door one-way permutation F based on a value of at least one intermediate label.

**36.** The information processing apparatus according to Claim 35, **characterized by** further comprising:

subset key generating means for generating the subset keys,

wherein the subset key generating means is configured to generate the subset keys by pseudo-random number generating processing based on the labels (LABEL) respectively corresponding to the subsets.

**37.** The information processing apparatus according to Claim 35, **characterized by** further comprising:

subset key generating means for generating the subset keys,

wherein the subset key generating means is configured to generate the intermediate labels corresponding to the special subsets based on an operation expression to which an inverse permutation $F^{-1}$ of a trap-door one-way permutation F using $x_1 \in Z^*_M$, and a modulus M and a secret exponent d as cryptographic parameters are applied, generate the labels corresponding to the special subsets by operation processing based on the intermediate labels, further generate labels not corresponding to the special subsets by an operation based on the generated labels, and calculate the subset keys by performing operation processing based on the generated labels.

**38.** The information processing apparatus according to Claim 35, **characterized in that**:

the special subsets include at least one of a first special subset and a second special subset;
the first special subset is one of subsets $S_{i,j}$ and having a direct descendant parent-child relationship between a node i and a node j, the subsets $S_{i,j}$ being defined as subsets that are obtained by excluding a subtree rooted at the node j that is lower than the node i from a subtree rooted at the node i in the hierarchical tree; and
the second special subset is a subset $S_{1,\phi}$ defined as an entire-tree set having a root including all leaves of the hierarchical tree as a top.

**39.** The information processing apparatus according to Claim 35, **characterized in that**:

the subset is
a subset set according to a Basic LSD (Basic Layered Subset Difference) scheme having a subset management configuration based on layers separated by a single Special Level set in the hierarchical tree.

**40.** The information processing apparatus according to Claim 35, **characterized in that**:

the subset is

a subset set according to a General LSD (General Layered Subset Difference) scheme having a subset management configuration based on layers separated by a plurality of Special Levels set in the hierarchical tree.

**41.** A computer program for generating a hierarchical tree applied to ciphertext supplying processing in which only specific selected equipment can perform decryption using a Broadcast Encryption scheme based on a hierarchical tree configuration, the computer program being **characterized by** comprising:

an intermediate label generating step of generating intermediate labels (IL), which are defined as having values that allow to calculate, by operation processing, values of labels corresponding to selected part of special subsets, among labels (LABEL) respectively corresponding to subsets based on a SD (Subset Difference) scheme to which the hierarchical tree is applied, and that allows to calculate values of other intermediate labels by applying a trap-door one-way permutation F based on a value of at least one of the intermediate label;
a label generating step of generating the labels corresponding to the special subsets by operation processing based on the intermediate labels, and further generating labels not corresponding to the special subsets by an operation based on the generated labels; and
a labels-for-supply determining step of determining labels for supply to receivers corresponding to terminal nodes of the hierarchical tree, the labels including
a special subset-noncorresponding label that does not corresponding to the special subset, and
an intermediate label from which label corresponding to the special subset can be calculated by operation processing.

**42.** A computer program for executing decrypting processing of ciphertexts encrypted by subset keys respectively corresponding to subsets set based on a SD (Subset Difference) scheme which is a Broadcast Encryption scheme based on a hierarchical tree configuration, the computer program being **characterized by** comprising:

a ciphertext selecting step of selecting a ciphertext generated by applying a subset key derivable by pseudo-random number generating processing based on a label held therein or a label calculable from an intermediate label held therein, from the ciphertexts;
a label calculating step of calculating a label corresponding to a special subset by executing operation processing on the intermediate label held if the subset key to be applied to the ciphertext cannot be derived by the pseudo-random number generating processing based on the label held;
a step of generating the subset key by the pseudo-random number generating processing based on the label held or the label calculated; and
a decrypting step of executing the decrypting processing of the ciphertext by applying the generated subset key.

**43.** A computer program for executing generating processing of ciphertexts in which only specific selected equipment can perform decryption using a Broadcast Encryption scheme based on a hierarchical tree configuration, the computer program **characterized by** comprising:

a ciphertext generating step of generating ciphertexts by executing encryption processing while selectively applying subset keys respectively corresponding to subsets set based on a SD (Subset Difference) scheme to which a hierarchical tree is applied;
wherein the subset keys to be applied in the ciphertext generating step are subset keys calculable from the labels (LABEL) respectively corresponding to the subsets, and are set such that values of labels corresponding to selected part of special subsets can be calculated by operation processing based on intermediate labels (IL) and that the intermediate labels allow to calculate values of other intermediate labels by applying a trap-door one-way permutation F based on a value of at least one intermediate label.

FIG. 1

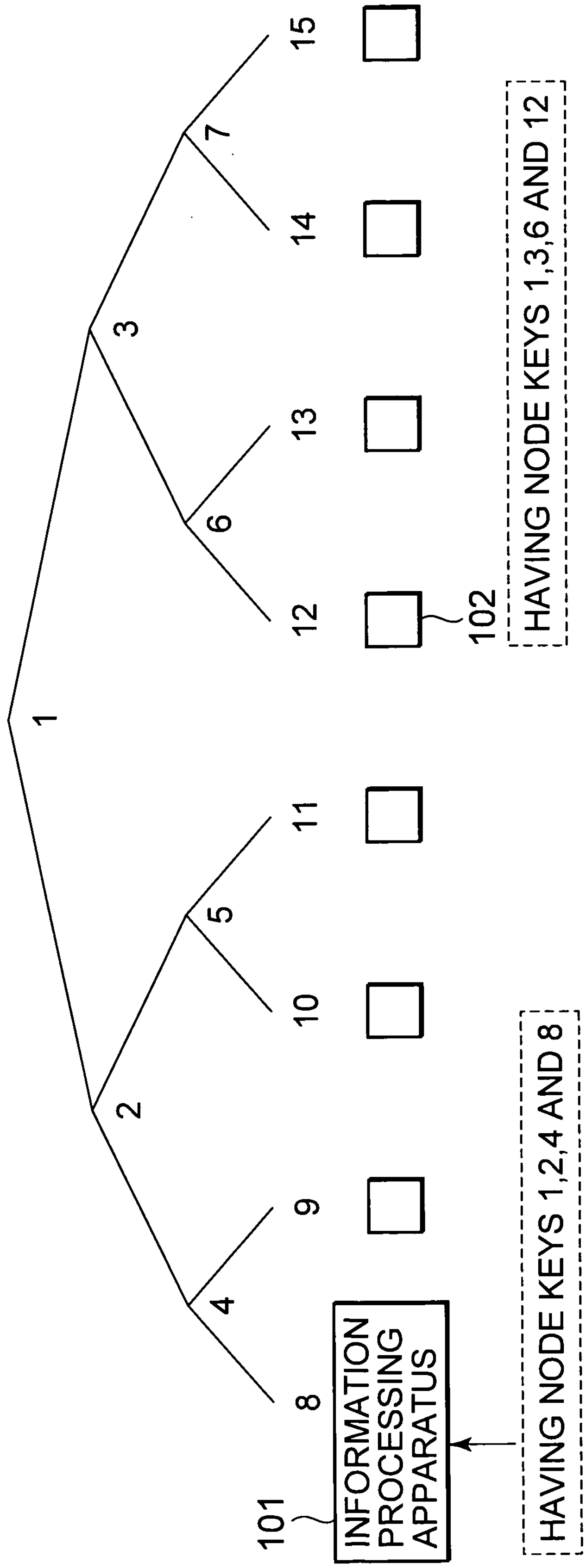
1
2
3
4
5
6
7
8
9
10
11
12
13
14
15
101
INFORMATION PROCESSING APPARATUS
102
HAVING NODE KEYS 1,2,4 AND 8
HAVING NODE KEYS 1,3,6 AND 12

FIG. 2

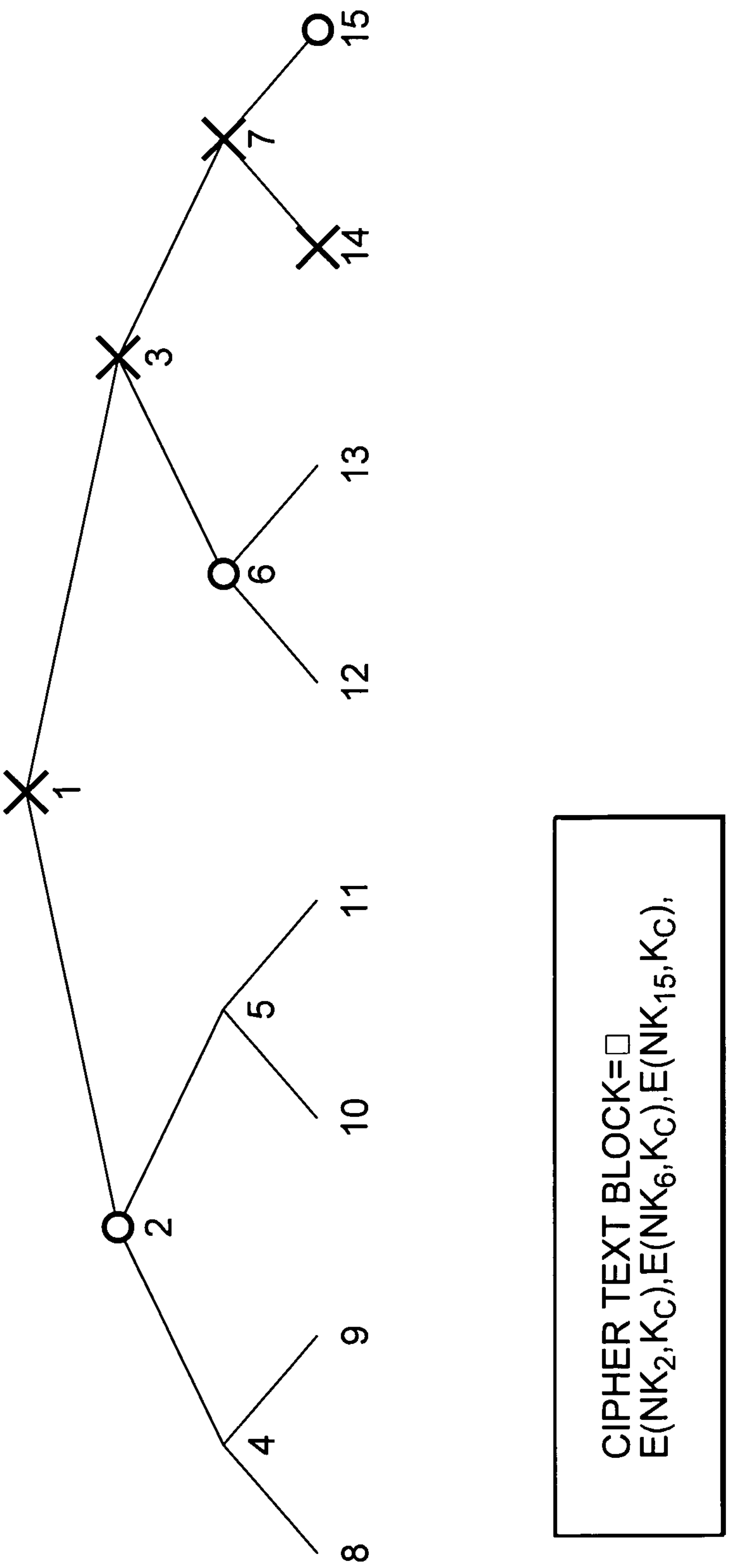
1
2
3
4
5
6
7
8
9
10
11
12
13
14
15
CIPHER TEXT BLOCK=□
$E(NK_2,K_C),E(NK_6,K_C),E(NK_{15},K_C),$

FIG. 3

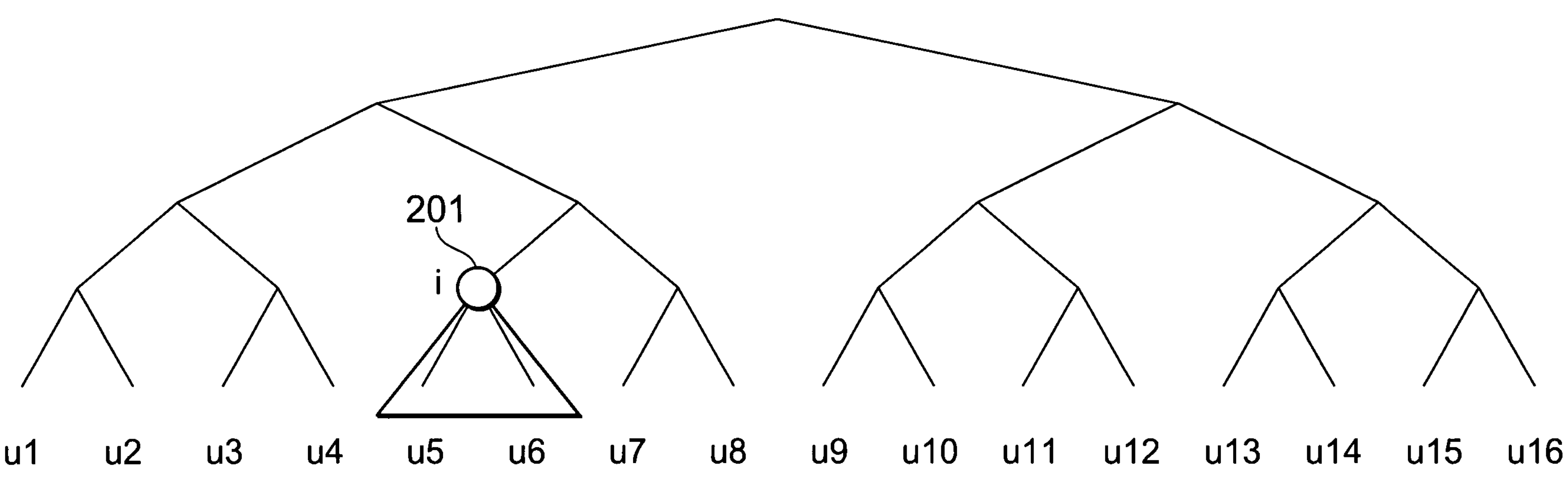


A "NODE" IS USED TO REPRESENT "SET CONSISTING OF LEAVES OF SUBTREE ROOTED AT THE NODE"
Ex) NODE i == SUBSET i ($S_i$) == {u5.u6}

SUCH SET IS DEFINED AS TO ALL NODES OF TREE

NUMBER OF SUBSETS TO WHICH CERTAIN RECEIVER BELONGS = NUMBER OF KEYS WHICH EACH RECEIVER HOLDS = logN+1

# FIG. 4

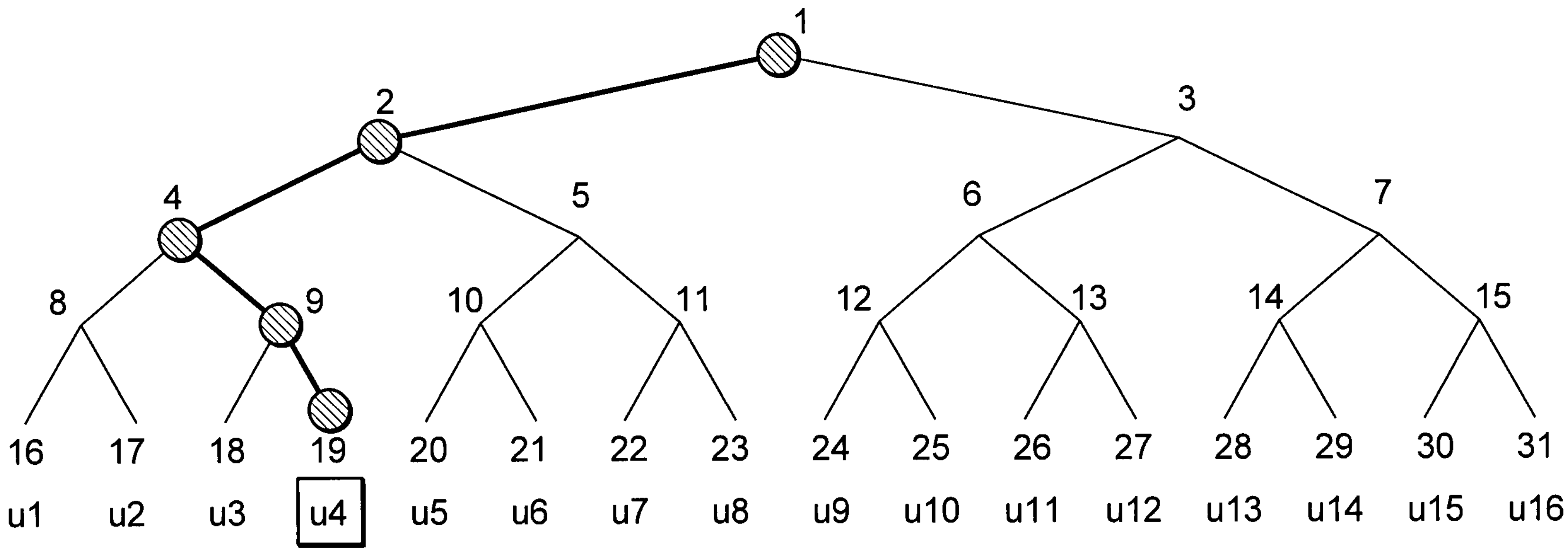


NODE KEYS OWNED BY u4: NODE KEYS FOR NODES 1, 2, 4, 9 AND 19

FIG. 5

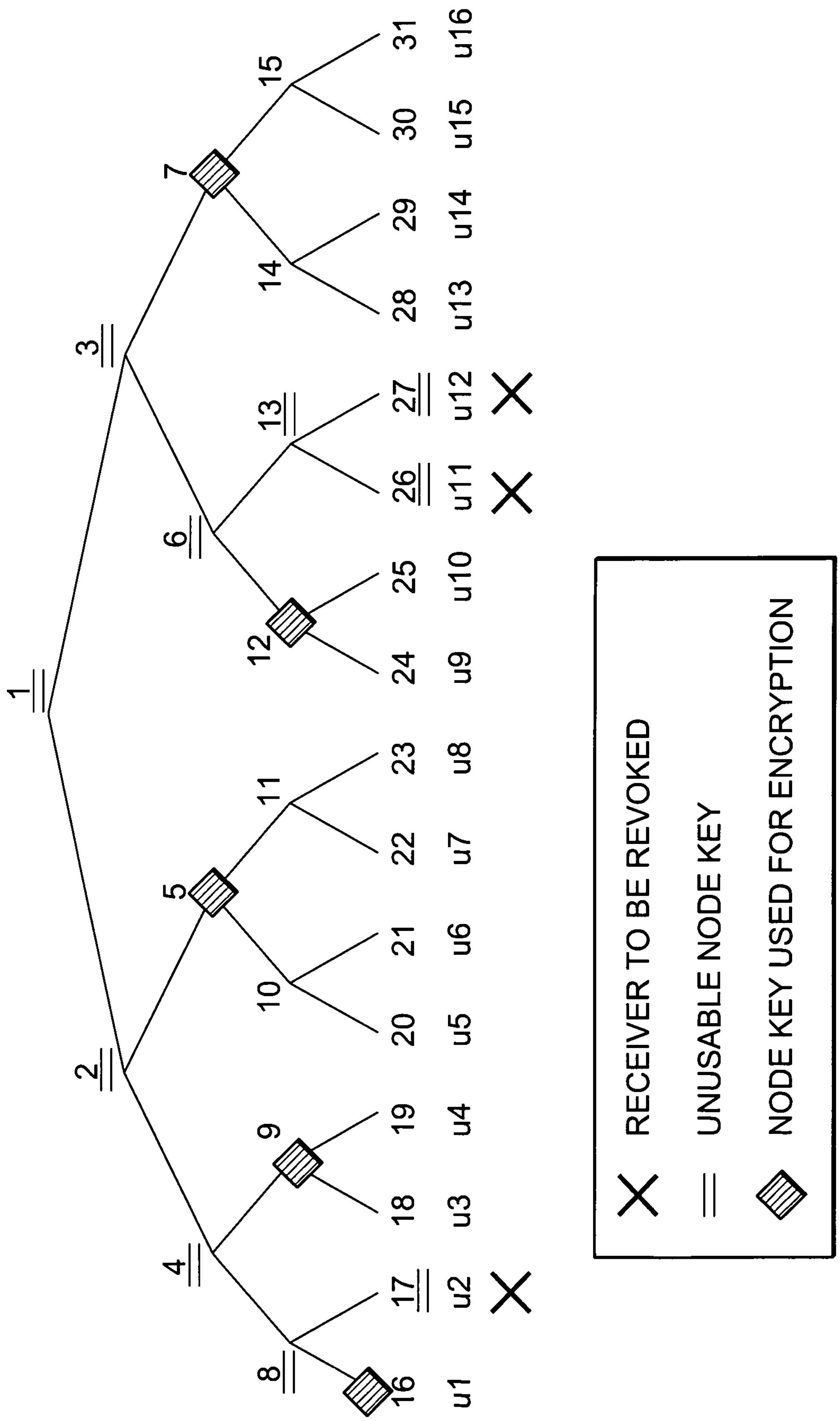
RECEIVER TO BE REVOKED
UNUSABLE NODE KEY
NODE KEY USED FOR ENCRYPTION

# FIG. 6

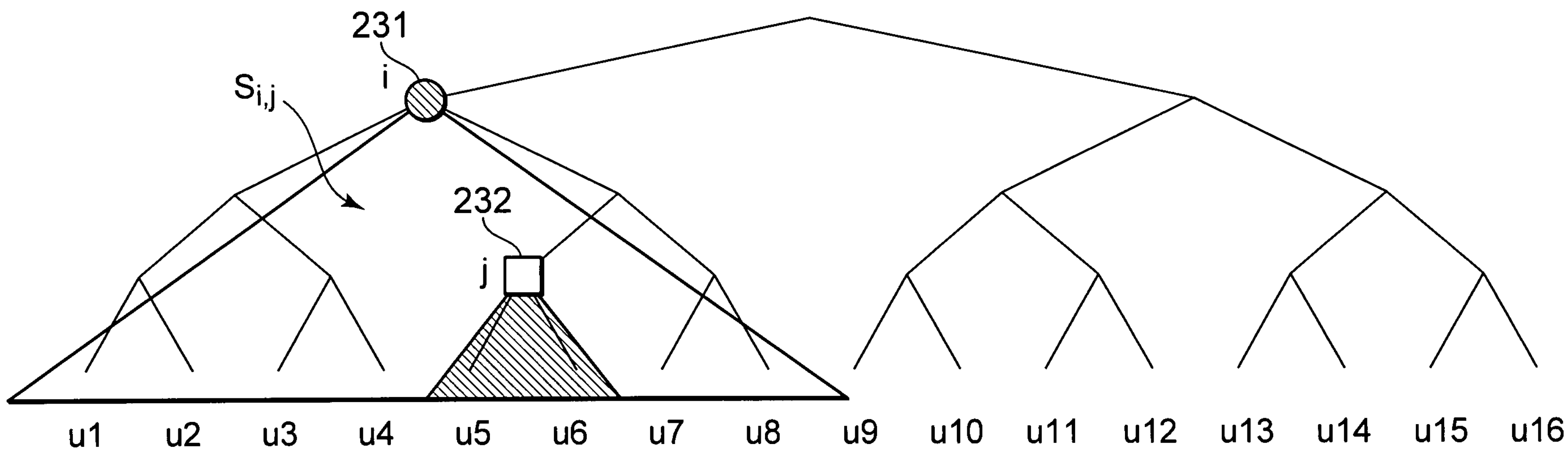


"TWO NODES" ARE USED TO REPRESENT "SET CONSISTING OF LEAVES OF SUBTREE ROOTED AT FIRST NODE - SET CONSISTING OF LEAVES OF SUBTREE ROOTED AT SECOND NODE"
Ex) NODE i,j == SUBSET i,j ($S_{i,j}$) == {u1,...,u8} – {u5,u6} = {u1,u2,u3,u4,u7,u8}

SUCH SET IS DEFINED AS TO ALL NODE PAIRS (i,j) WHERE i IS ANCESTOR OF j

FIG. 7

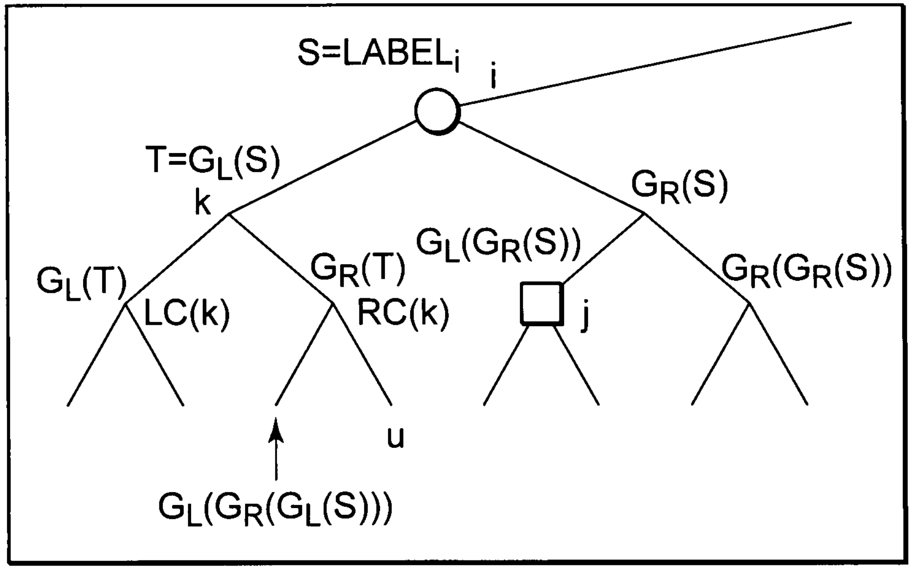
S=LABELi
i
T=GL(S)
k
GR(S)
GL(T)
LC(k)
GR(T)
RC(k)
GL(GR(S))
j
GR(GR(S))
u
GL(GR(GL(S)))

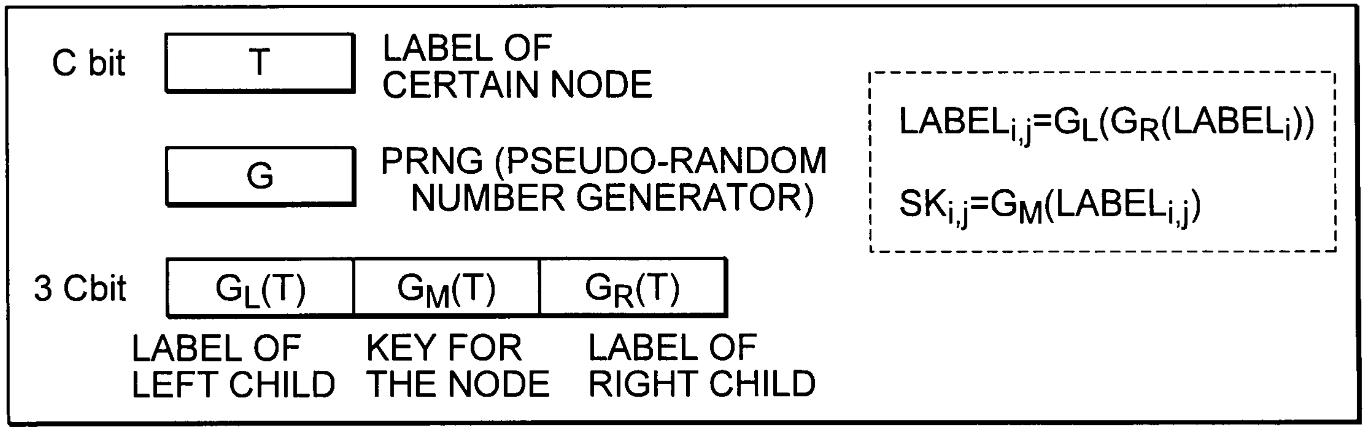
C bit
T
LABEL OF CERTAIN NODE
G
PRNG (PSEUDO-RANDOM NUMBER GENERATOR)
3 Cbit
GL(T)
GM(T)
GR(T)
LABEL OF LEFT CHILD
KEY FOR THE NODE
LABEL OF RIGHT CHILD
LABELi,j=GL(GR(LABELi))
SKi,j=GM(LABELi,j)

FIG. 8

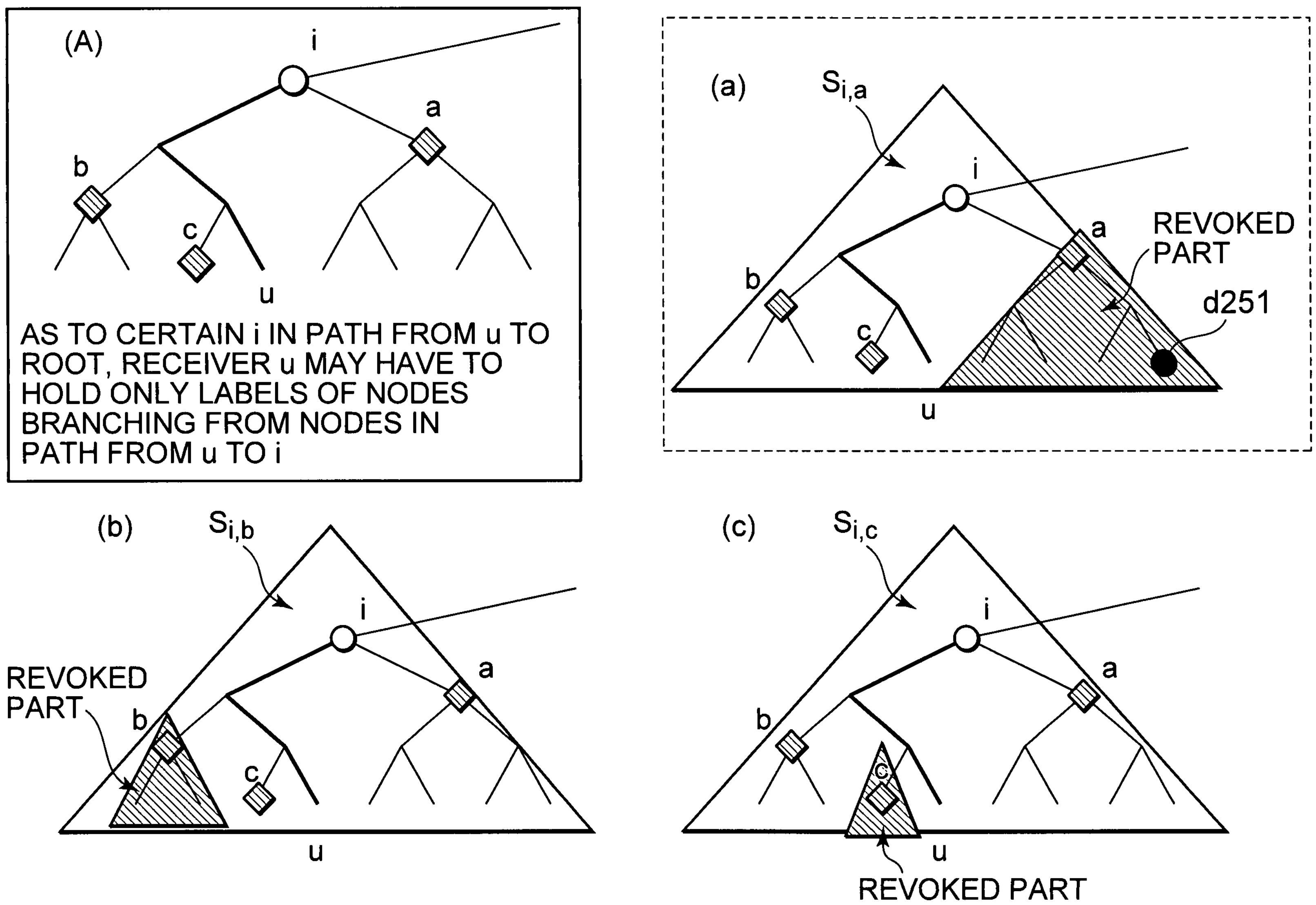
(A)
i
a
b
c
u
AS TO CERTAIN i IN PATH FROM u TO ROOT, RECEIVER u MAY HAVE TO HOLD ONLY LABELS OF NODES BRANCHING FROM NODES IN PATH FROM u TO i
(a)
$S_{i,a}$
i
a
b
c
u
REVOKED PART
d251
(b)
$S_{i,b}$
i
a
b
c
u
REVOKED PART
(c)
$S_{i,c}$
i
a
b
c
u
REVOKED PART

FIG. 9

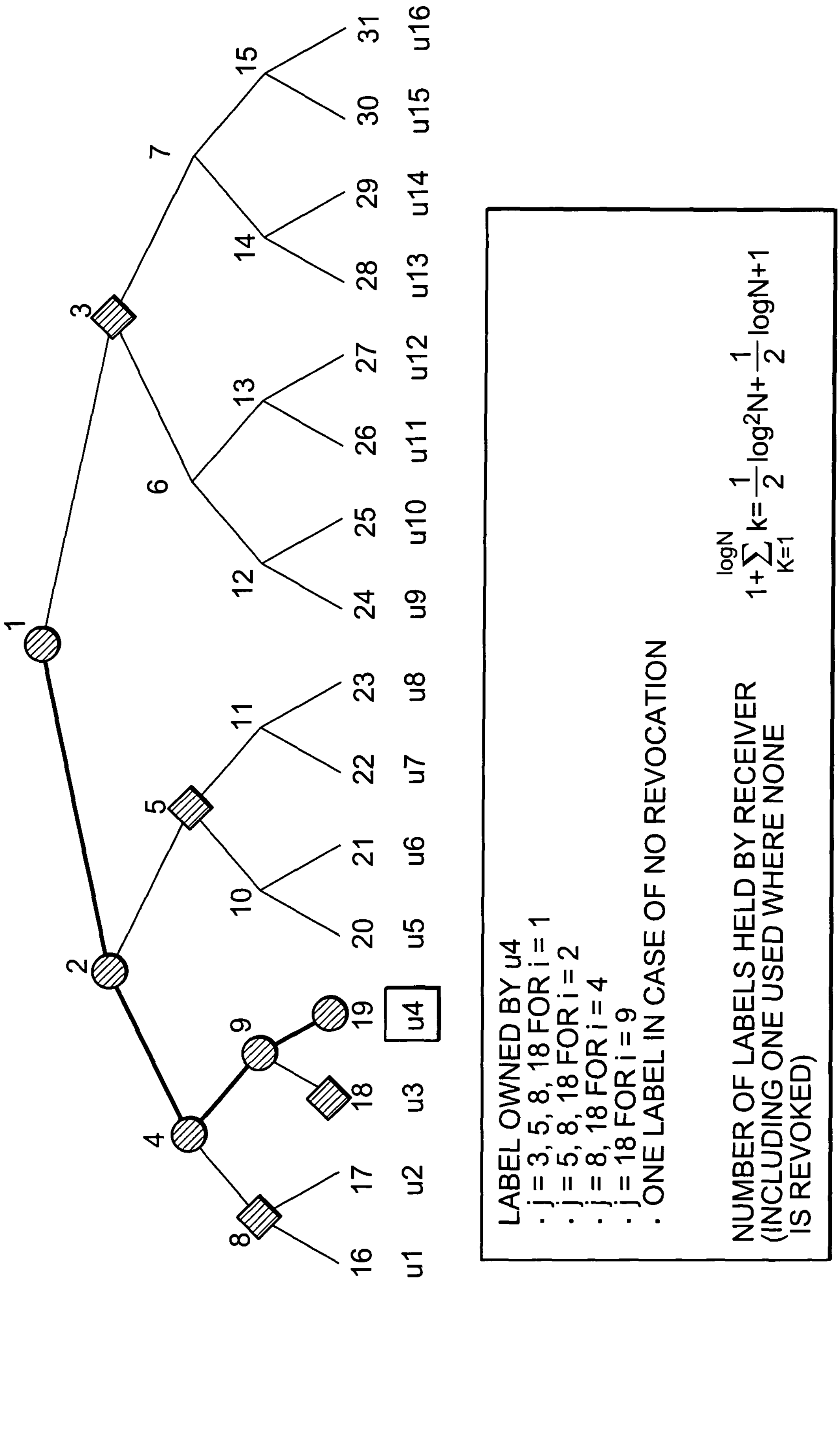
1
2
3
4
5
6
7
8
9
10
11
12
13
14
15
16 17 18 19 20 21 22 23 24 25 26 27 28 29 30 31
u1 u2 u3 u4 u5 u6 u7 u8 u9 u10 u11 u12 u13 u14 u15 u16
LABEL OWNED BY u4
· j = 3, 5, 8, 18 FOR i = 1
· j = 5, 8, 18 FOR i = 2
· j = 8, 18 FOR i = 4
· j = 18 FOR i = 9
· ONE LABEL IN CASE OF NO REVOCATION
NUMBER OF LABELS HELD BY RECEIVER (INCLUDING ONE USED WHERE NONE IS REVOKED)
$1+\sum_{K=1}^{\log N} k=\frac{1}{2}\log^2 N+\frac{1}{2}\log N+1$

FIG. 10

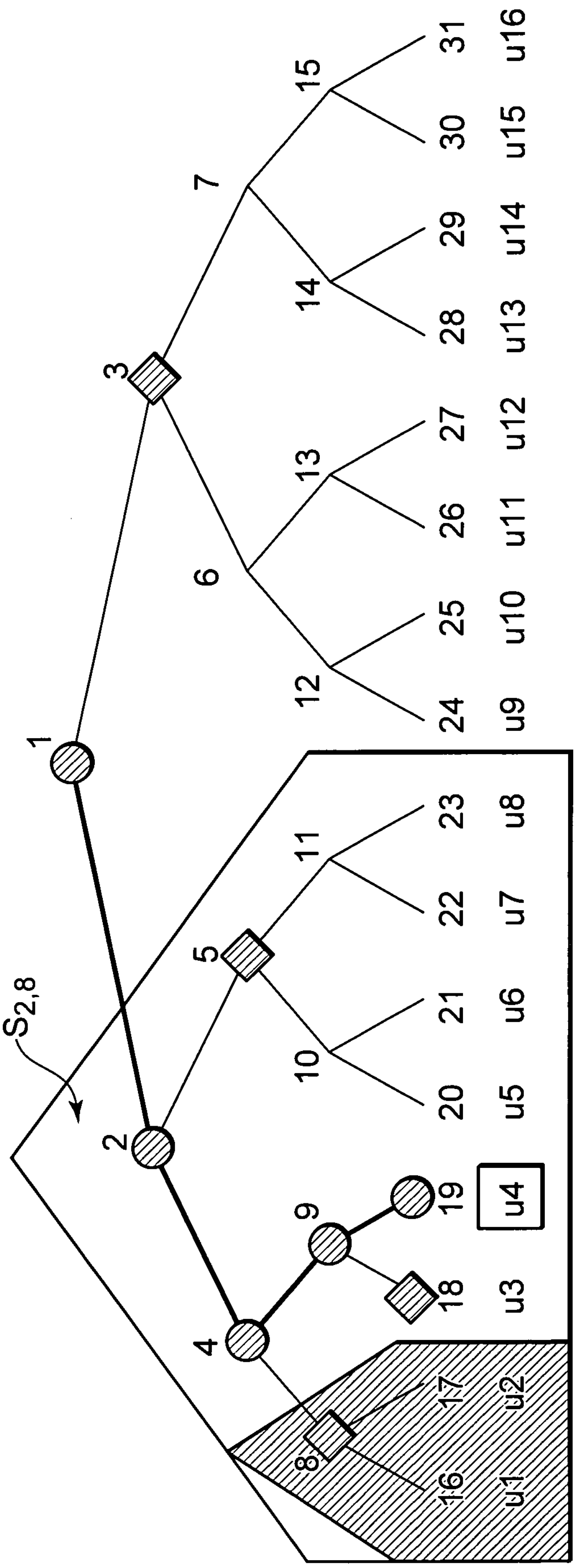
$S_{2,8}$
1
2
3
4
5
6
7
8
9
10
11
12
13
14
15
16
17
18
19
20
21
22
23
24
25
26
27
28
29
30
31
u1
u2
u3
u4
u5
u6
u7
u8
u9
u10
u11
u12
u13
u14
u15
u16

FIG. 11

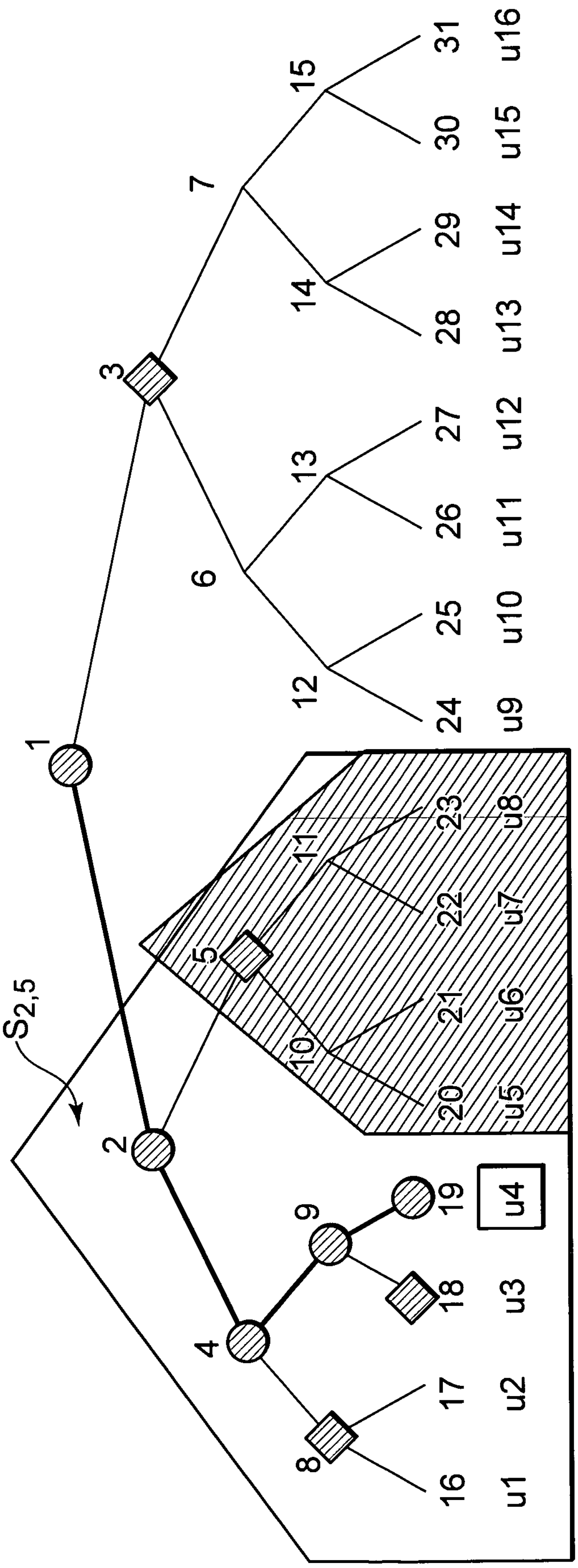
$S_{2,5}$
1
2
3
4
5
6
7
8
9
10
11
12
13
14
15
16
17
18
19
20
21
22
23
24
25
26
27
28
29
30
31
u1
u2
u3
u4
u5
u6
u7
u8
u9
u10
u11
u12
u13
u14
u15
u16

FIG. 12

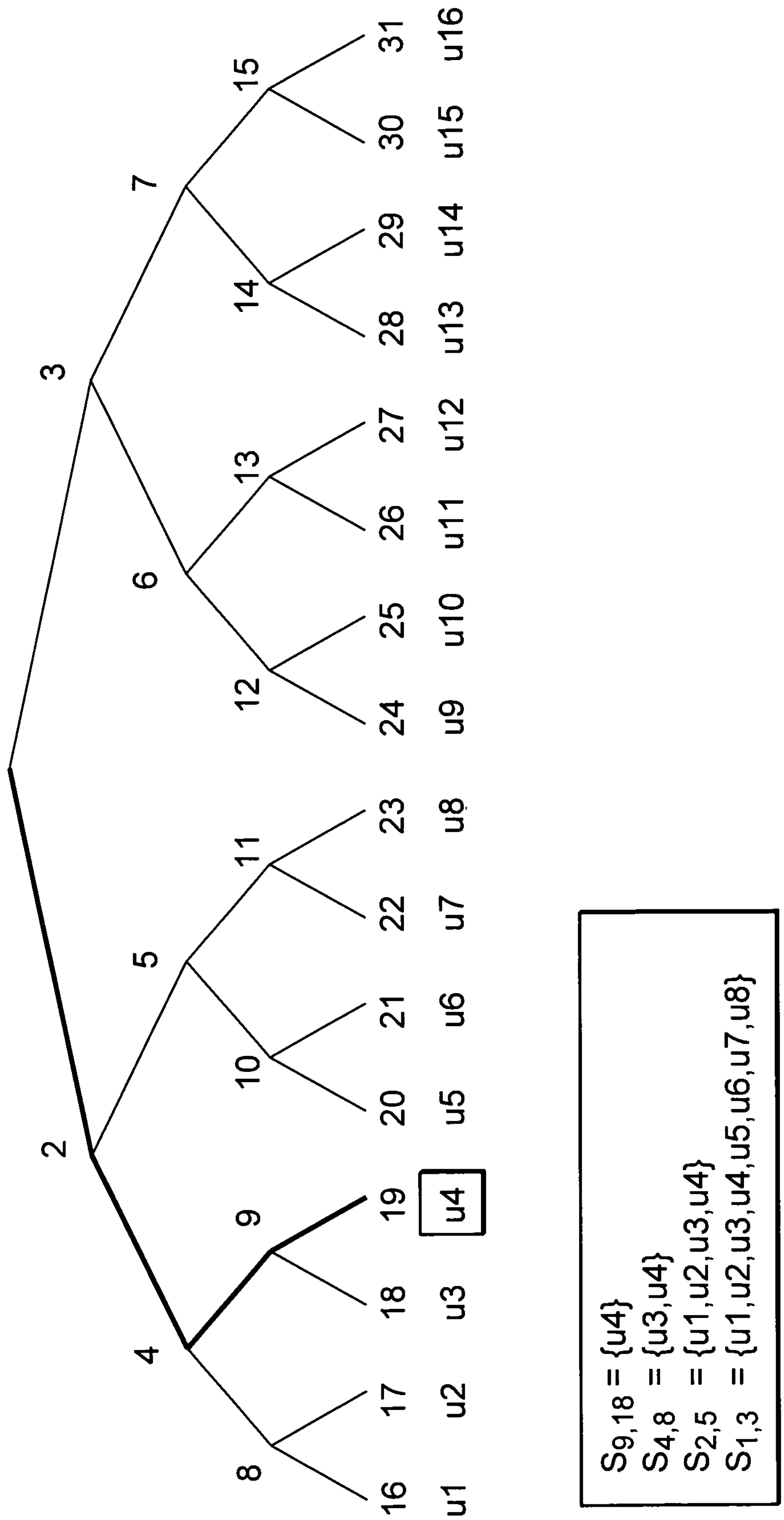
1
2
3
4
5
6
7
8
9
10
11
12
13
14
15
16 17 18 19 20 21 22 23 24 25 26 27 28 29 30 31
u1 u2 u3 u4 u5 u6 u7 u8 u9 u10 u11 u12 u13 u14 u15 u16
$S_{9,18}$ = {u4}
$S_{4,8}$ = {u3,u4}
$S_{2,5}$ = {u1,u2,u3,u4}
$S_{1,3}$ = {u1,u2,u3,u4,u5,u6,u7,u8}

FIG. 13

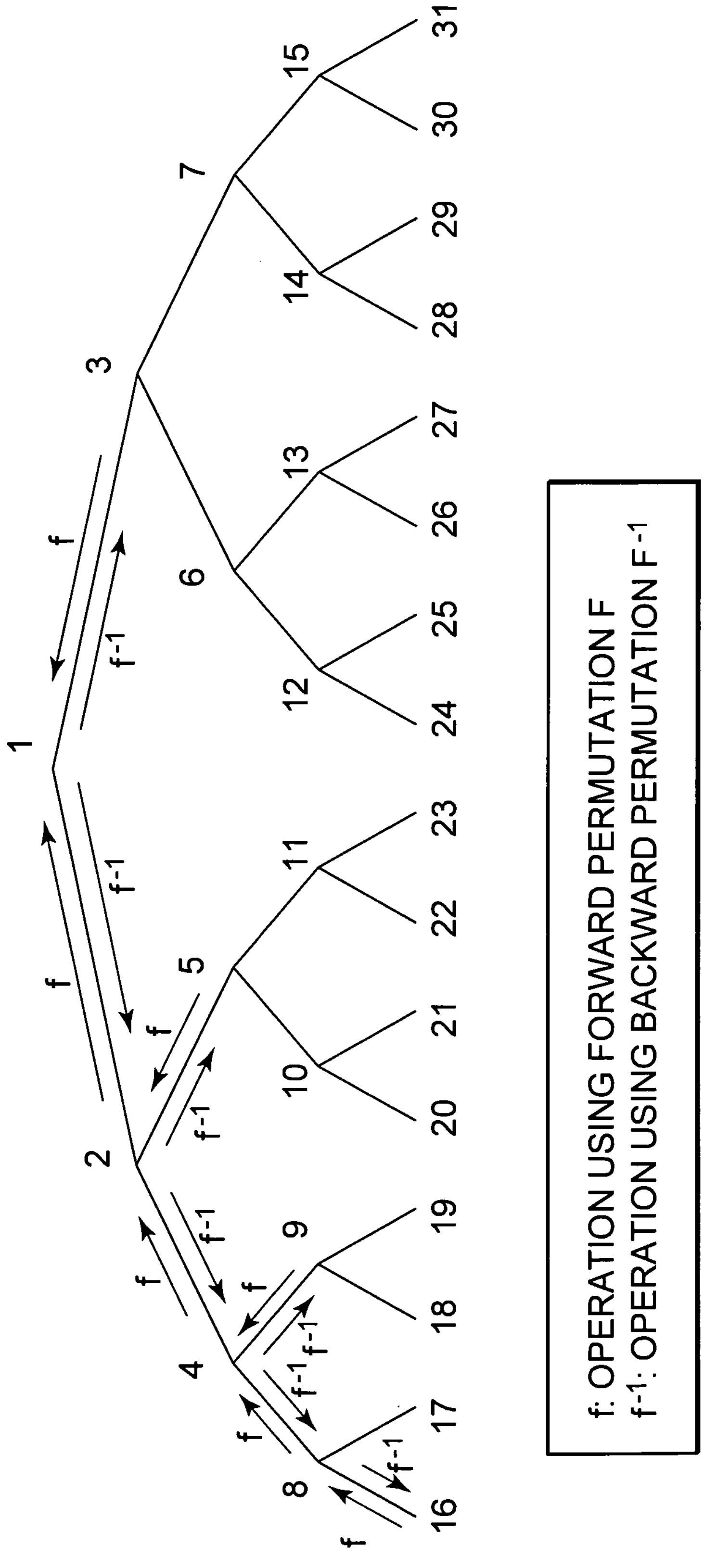
1
2
3
4
5
6
7
8
9
10
11
12
13
14
15
16
17
18
19
20
21
22
23
24
25
26
27
28
29
30
31
f
$f^{-1}$
f: OPERATION USING FORWARD PERMUTATION F
$f^{-1}$: OPERATION USING BACKWARD PERMUTATION $F^{-1}$

FIG. 14

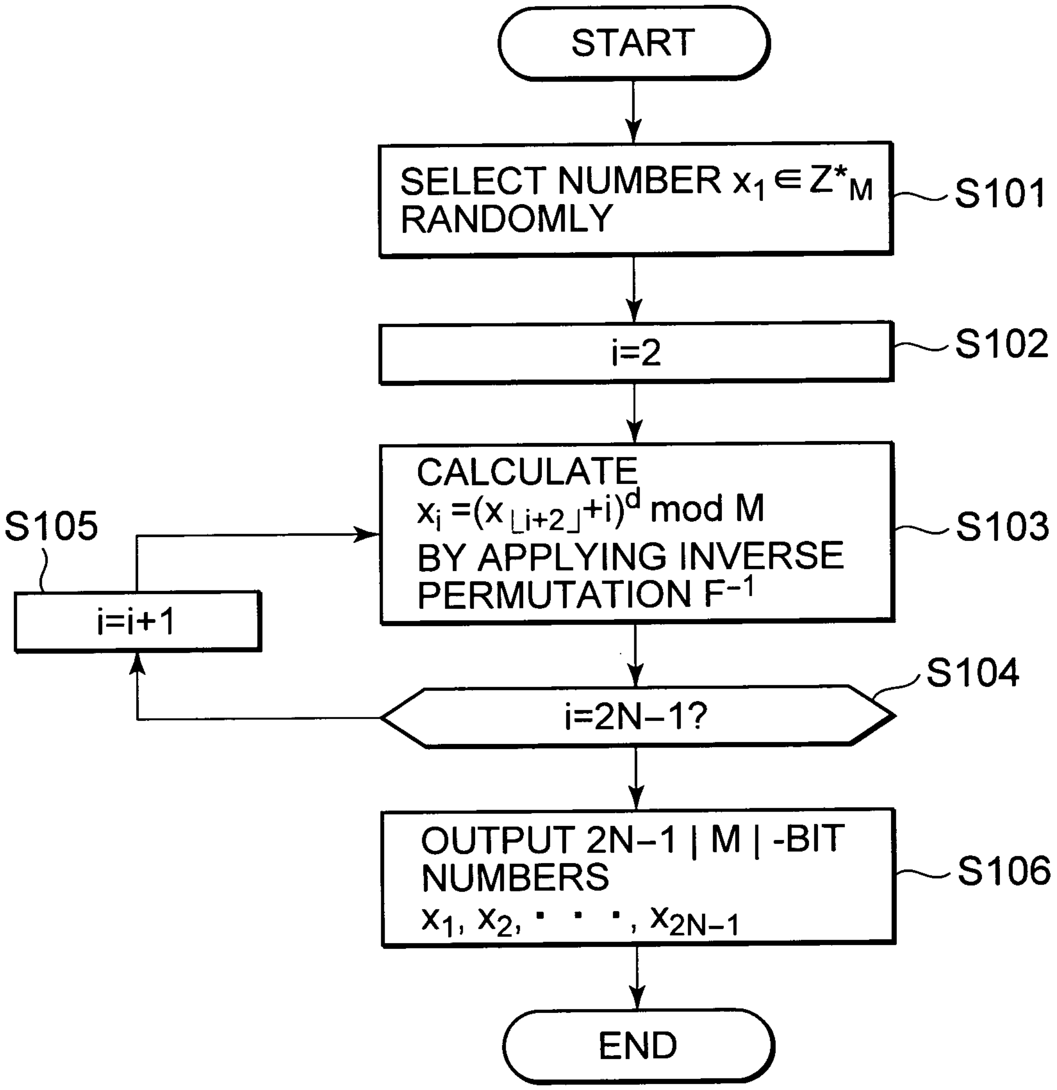
START
SELECT NUMBER x1∈Z*M RANDOMLY
S101
i=2
S102
CALCULATE
xi =(x⌊i+2⌋+i)d mod M
BY APPLYING INVERSE PERMUTATION F-1
S103
S105
i=i+1
i=2N-1?
S104
OUTPUT 2N-1 | M | -BIT NUMBERS
x1, x2, · · ·, x2N-1
S106
END

FIG. 15

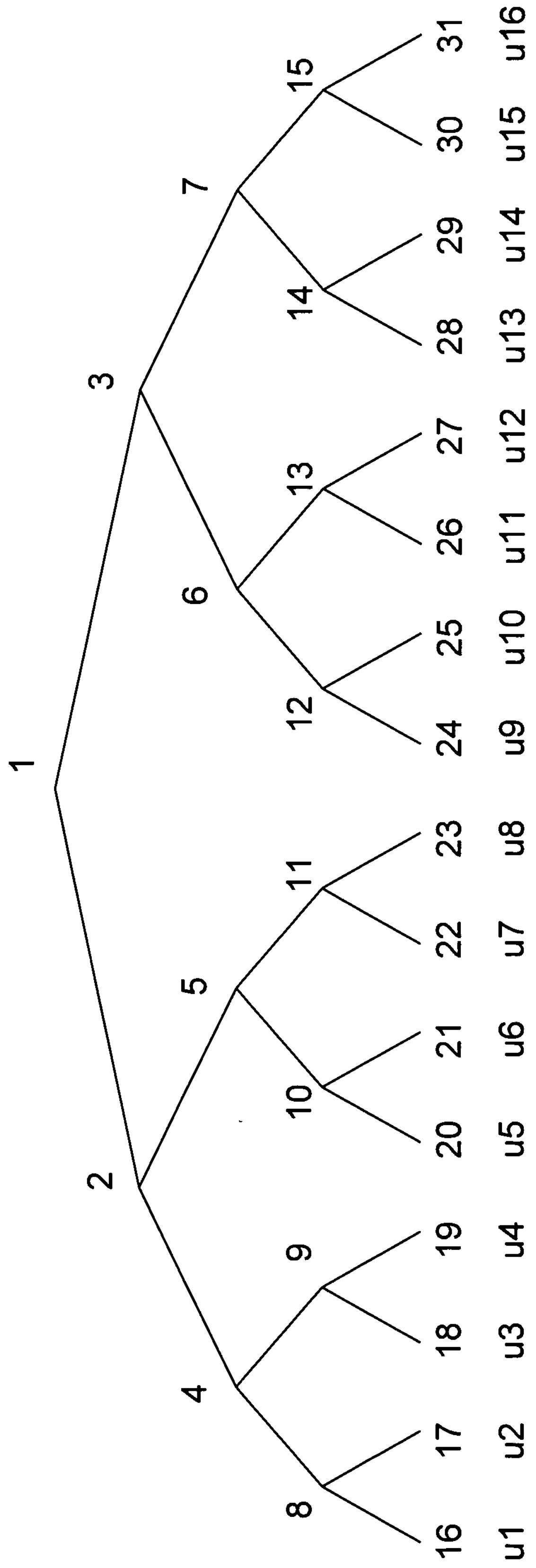
1
2
3
4
5
6
7
8
9
10
11
12
13
14
15
16
17
18
19
20
21
22
23
24
25
26
27
28
29
30
31
u1
u2
u3
u4
u5
u6
u7
u8
u9
u10
u11
u12
u13
u14
u15
u16

# FIG. 16

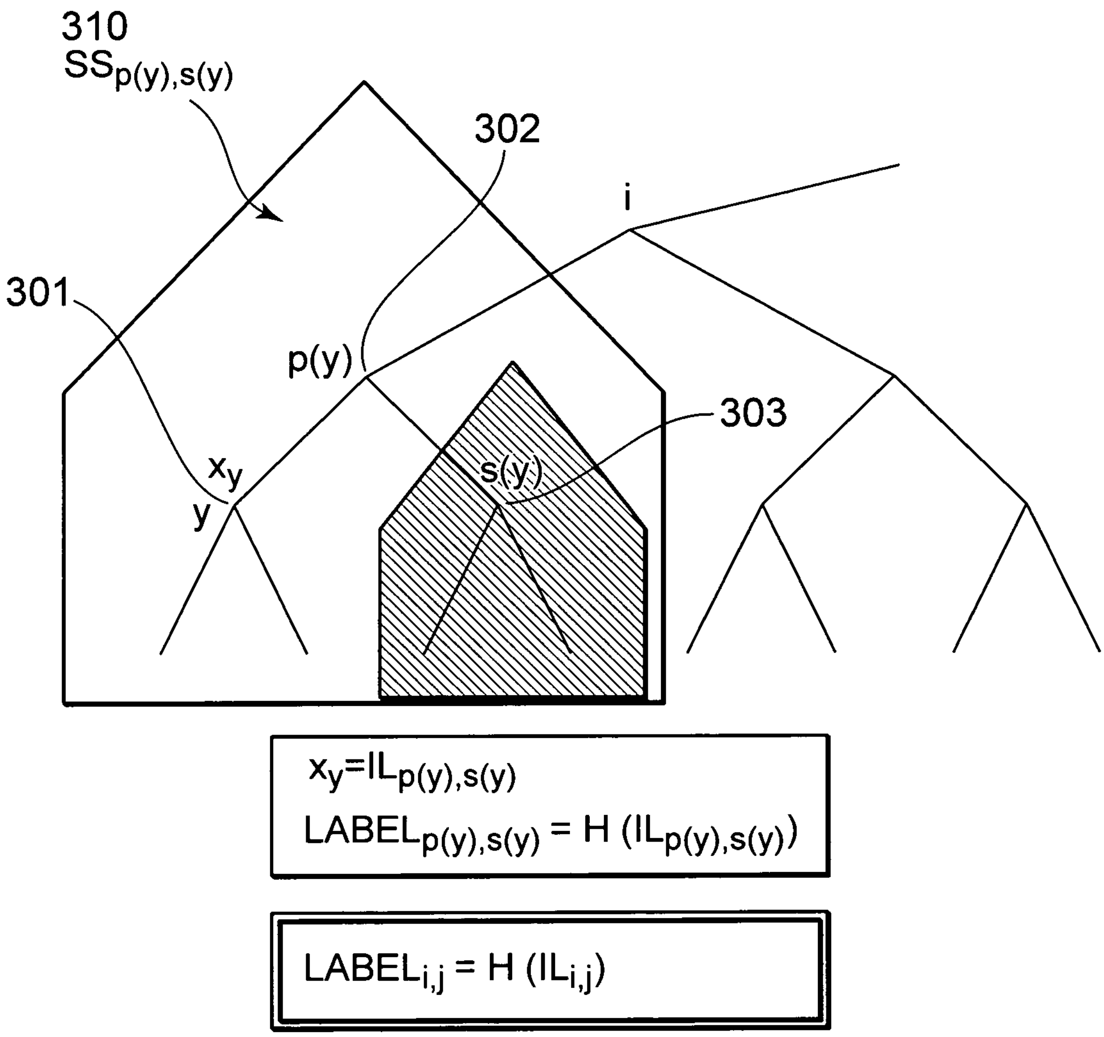
310
SSp(y),s(y)
302
i
301
p(y)
303
xy
s(y)
y
xy=ILp(y),s(y)
LABELp(y),s(y) = H (ILp(y),s(y))
LABELi,j = H (ILi,j)

FIG. 17

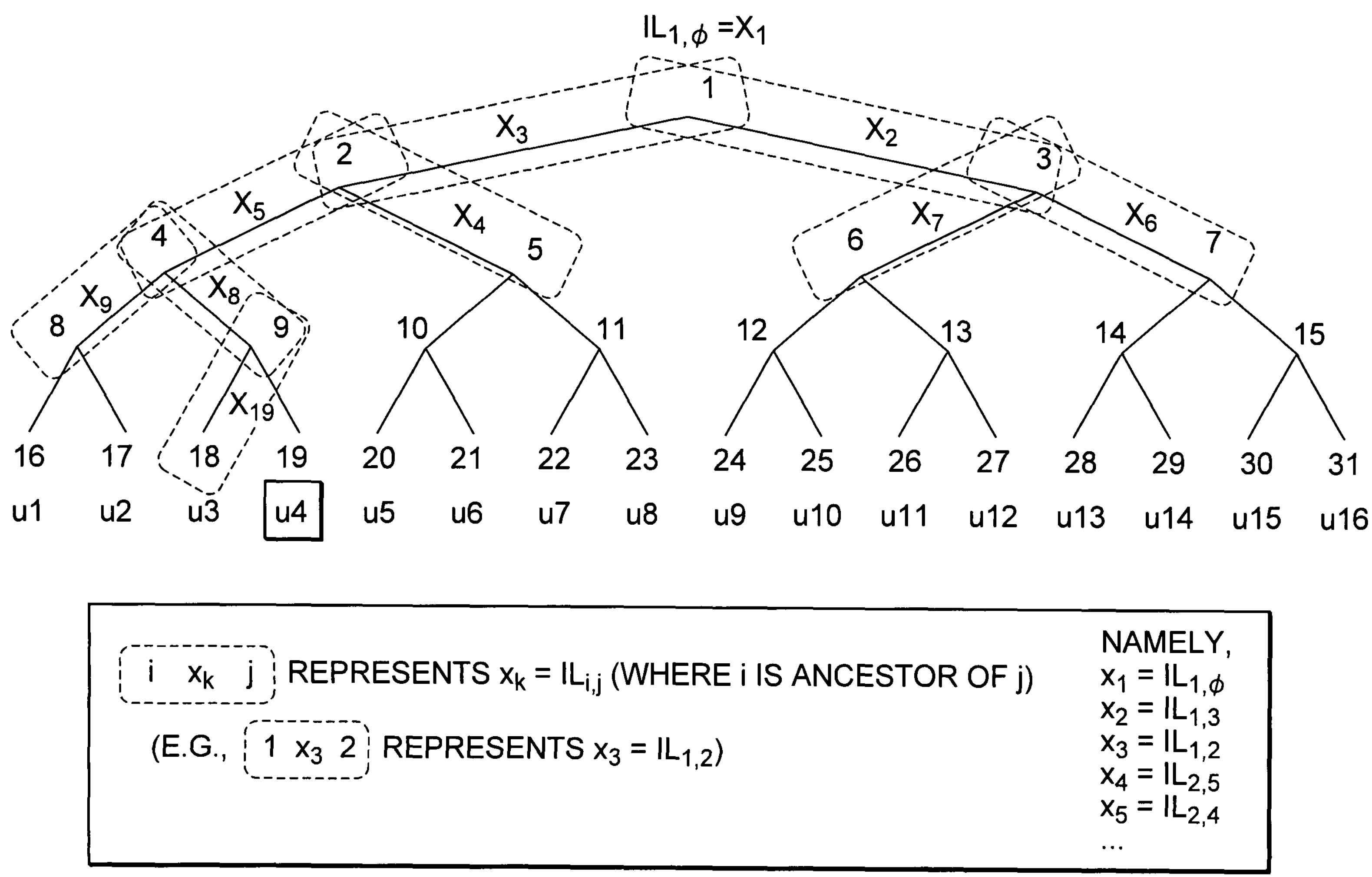
$IL_{1,\phi} = X_1$
1
2
3
4
5
6
7
8
9
10
11
12
13
14
15
$X_2$
$X_3$
$X_4$
$X_5$
$X_6$
$X_7$
$X_8$
$X_9$
$X_{19}$
16 17 18 19 20 21 22 23 24 25 26 27 28 29 30 31
u1 u2 u3 u4 u5 u6 u7 u8 u9 u10 u11 u12 u13 u14 u15 u16
i $x_k$ j REPRESENTS $x_k = IL_{i,j}$ (WHERE i IS ANCESTOR OF j)
(E.G., 1 $x_3$ 2 REPRESENTS $x_3 = IL_{1,2}$)
NAMELY,
$x_1 = IL_{1,\phi}$
$x_2 = IL_{1,3}$
$x_3 = IL_{1,2}$
$x_4 = IL_{2,5}$
$x_5 = IL_{2,4}$
...

FIG. 18

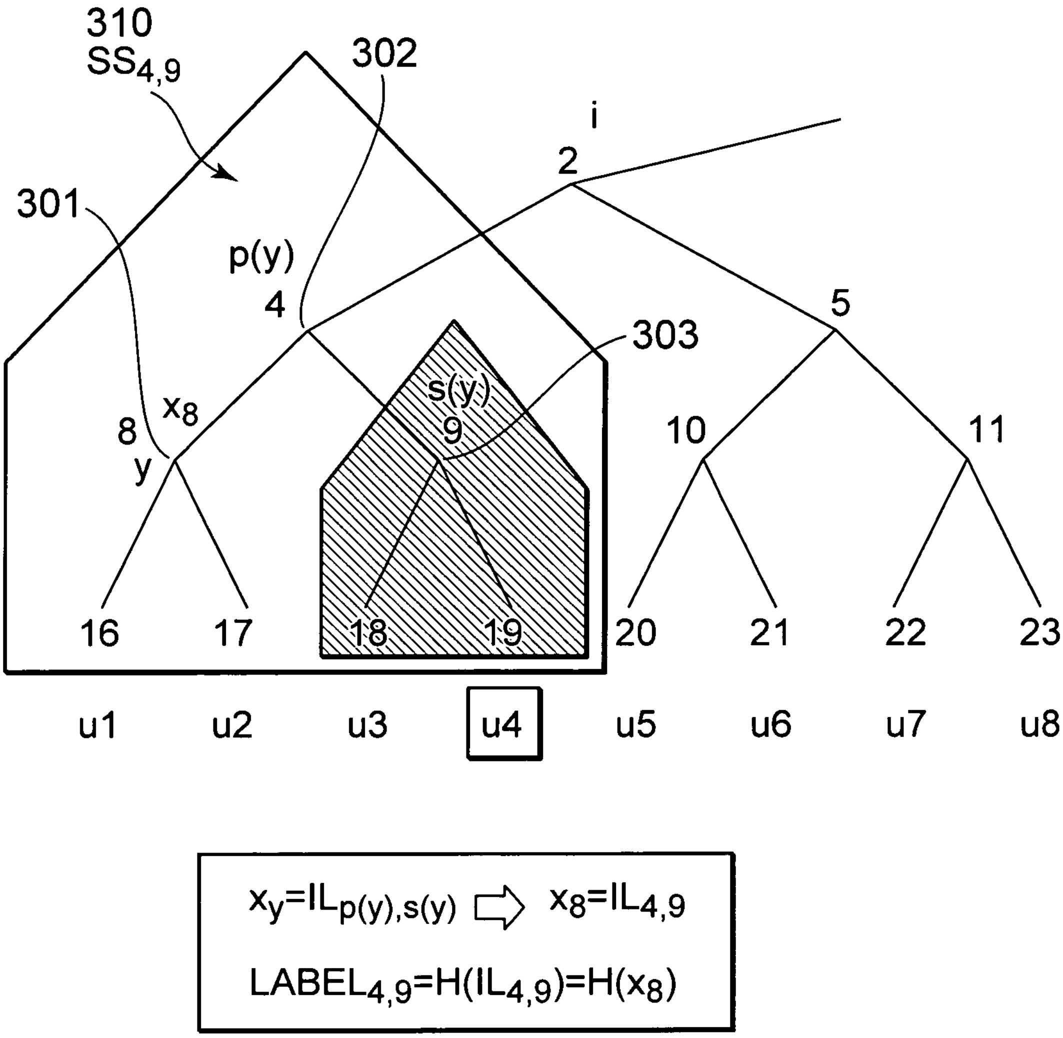
310
$SS_{4,9}$
302
i
2
301
p(y)
4
5
303
s(y)
9
$x_8$
8
y
10
11
16
17
18
19
20
21
22
23
u1
u2
u3
u4
u5
u6
u7
u8
$x_y = IL_{p(y),s(y)}$ ⇨ $x_8 = IL_{4,9}$
$LABEL_{4,9} = H(IL_{4,9}) = H(x_8)$

FIG. 19

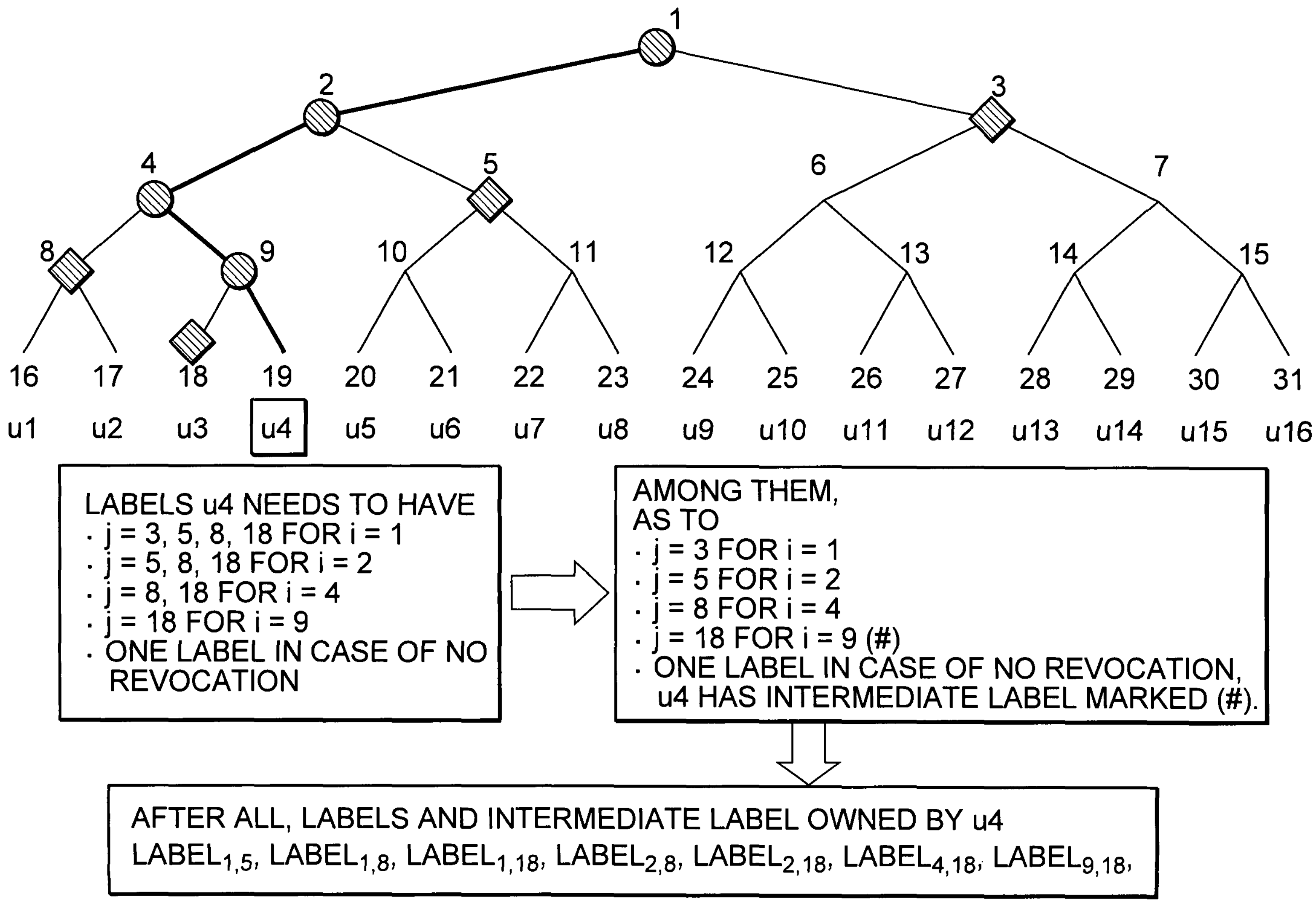
1
2
3
4
5
6
7
8
9
10
11
12
13
14
15
16 17 18 19 20 21 22 23 24 25 26 27 28 29 30 31
u1 u2 u3 u4 u5 u6 u7 u8 u9 u10 u11 u12 u13 u14 u15 u16
LABELS u4 NEEDS TO HAVE
· j = 3, 5, 8, 18 FOR i = 1
· j = 5, 8, 18 FOR i = 2
· j = 8, 18 FOR i = 4
· j = 18 FOR i = 9
· ONE LABEL IN CASE OF NO REVOCATION
AMONG THEM, AS TO
· j = 3 FOR i = 1
· j = 5 FOR i = 2
· j = 8 FOR i = 4
· j = 18 FOR i = 9 (#)
· ONE LABEL IN CASE OF NO REVOCATION, u4 HAS INTERMEDIATE LABEL MARKED (#).
AFTER ALL, LABELS AND INTERMEDIATE LABEL OWNED BY u4
$LABEL_{1,5}$, $LABEL_{1,8}$, $LABEL_{1,18}$, $LABEL_{2,8}$, $LABEL_{2,18}$, $LABEL_{4,18}$, $LABEL_{9,18}$,

FIG. 20

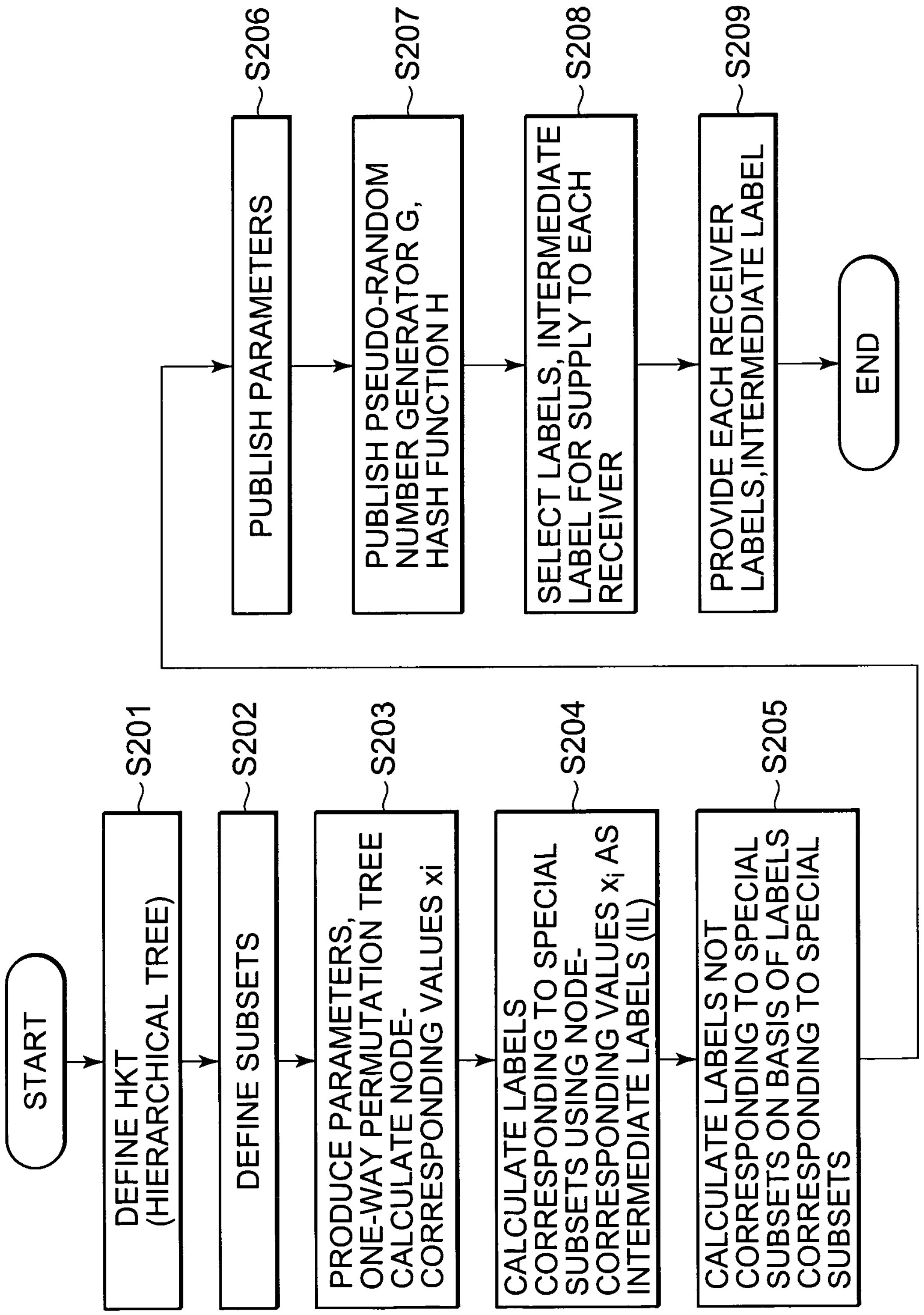
START
DEFINE HKT (HIERARCHICAL TREE)
S201
DEFINE SUBSETS
S202
PRODUCE PARAMETERS, ONE-WAY PERMUTATION TREE CALCULATE NODE-CORRESPONDING VALUES xi
S203
CALCULATE LABELS CORRESPONDING TO SPECIAL SUBSETS USING NODE-CORRESPONDING VALUES $x_i$ AS INTERMEDIATE LABELS (IL)
S204
CALCULATE LABELS NOT CORRESPONDING TO SPECIAL SUBSETS ON BASIS OF LABELS CORRESPONDING TO SPECIAL SUBSETS
S205
PUBLISH PARAMETERS
S206
PUBLISH PSEUDO-RANDOM NUMBER GENERATOR G, HASH FUNCTION H
S207
SELECT LABELS, INTERMEDIATE LABEL FOR SUPPLY TO EACH RECEIVER
S208
PROVIDE EACH RECEIVER LABELS,INTERMEDIATE LABEL
S209
END

FIG. 21

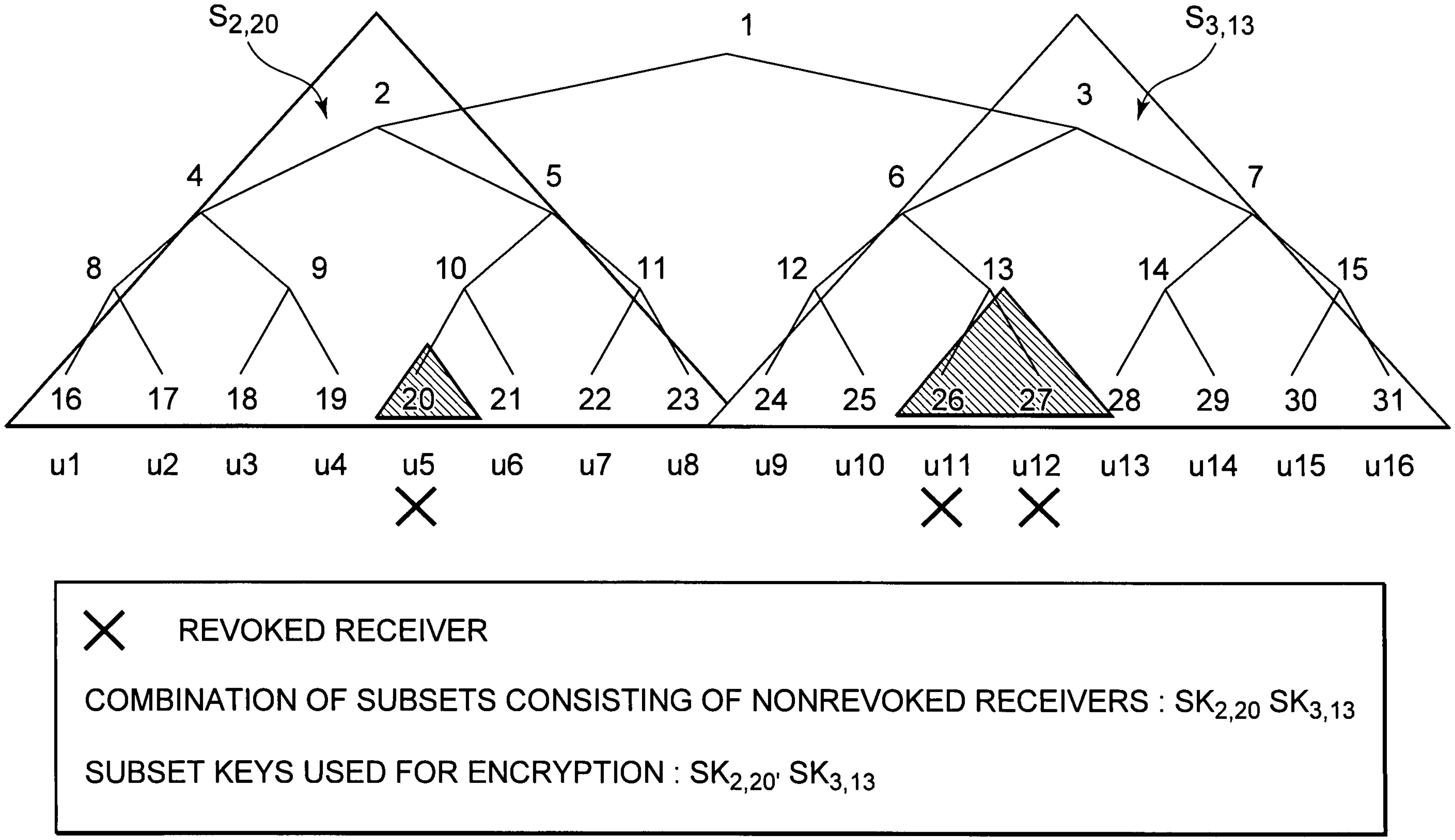
S2,20
S3,13
1
2
3
4
5
6
7
8
9
10
11
12
13
14
15
16
17
18
19
20
21
22
23
24
25
26
27
28
29
30
31
u1
u2
u3
u4
u5
u6
u7
u8
u9
u10
u11
u12
u13
u14
u15
u16
REVOKED RECEIVER
COMBINATION OF SUBSETS CONSISTING OF NONREVOKED RECEIVERS : SK2,20 SK3,13
SUBSET KEYS USED FOR ENCRYPTION : SK2,20' SK3,13

FIG. 22

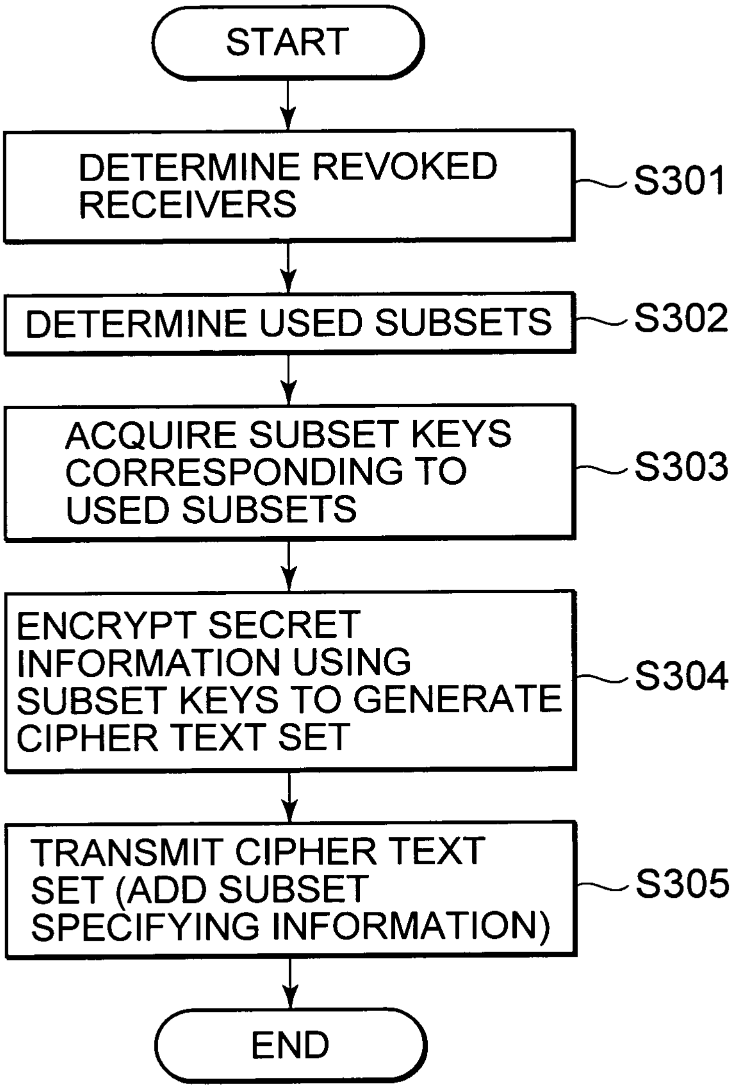
START
DETERMINE REVOKED RECEIVERS
S301
DETERMINE USED SUBSETS
S302
ACQUIRE SUBSET KEYS CORRESPONDING TO USED SUBSETS
S303
ENCRYPT SECRET INFORMATION USING SUBSET KEYS TO GENERATE CIPHER TEXT SET
S304
TRANSMIT CIPHER TEXT SET (ADD SUBSET SPECIFYING INFORMATION)
S305
END

FIG. 23

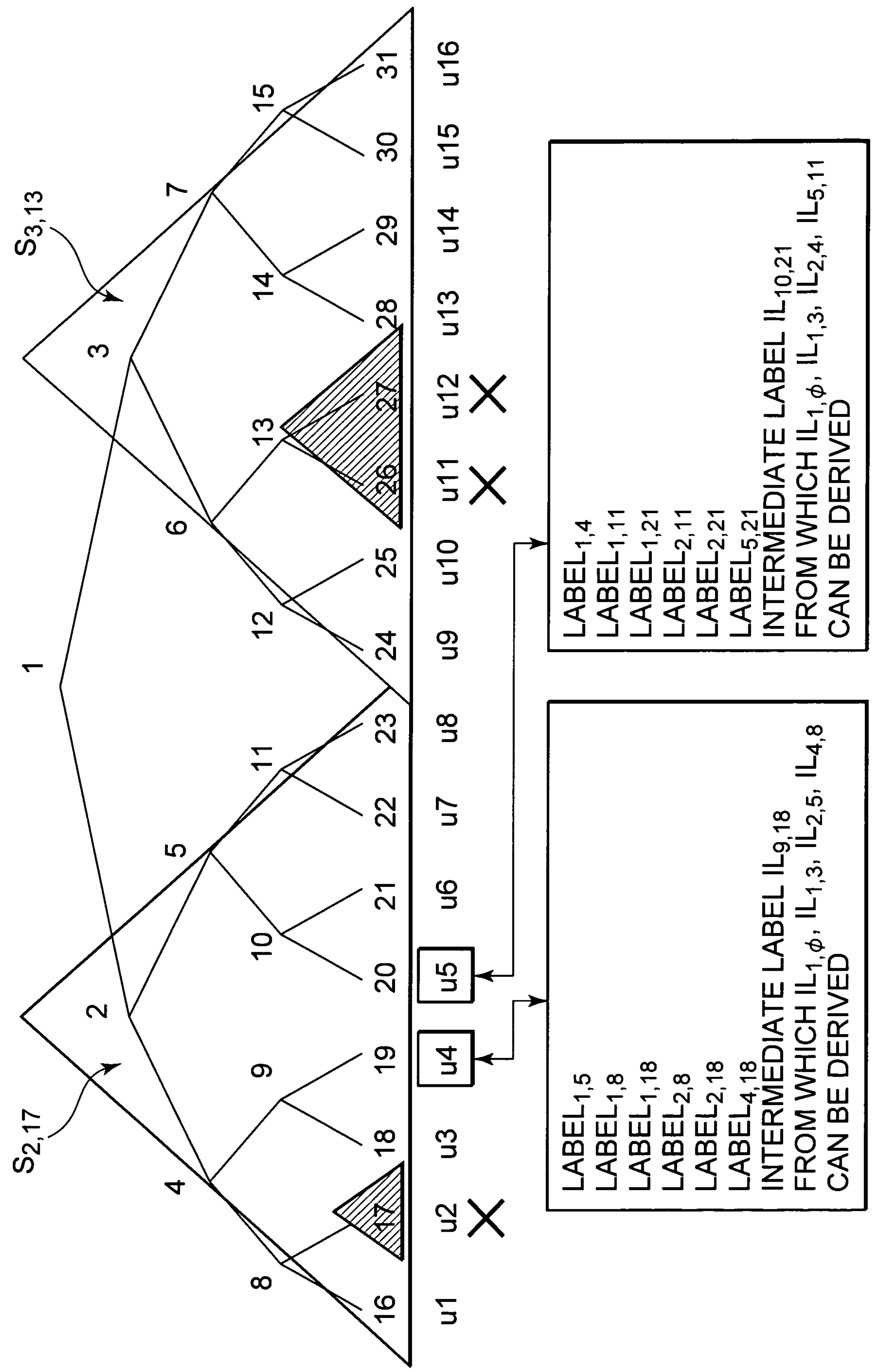
$S_{2,17}$
$S_{3,13}$
1
2
3
4
5
6
7
8
9
10
11
12
13
14
15
16
17
18
19
20
21
22
23
24
25
26
27
28
29
30
31
u1
u2
u3
u4
u5
u6
u7
u8
u9
u10
u11
u12
u13
u14
u15
u16
$LABEL_{1,5}$
$LABEL_{1,8}$
$LABEL_{1,18}$
$LABEL_{2,8}$
$LABEL_{2,18}$
$LABEL_{4,18}$
INTERMEDIATE LABEL $IL_{9,18}$
FROM WHICH $IL_{1,\phi}$, $IL_{1,3}$, $IL_{2,5}$, $IL_{4,8}$
CAN BE DERIVED
$LABEL_{1,4}$
$LABEL_{1,11}$
$LABEL_{1,21}$
$LABEL_{2,11}$
$LABEL_{2,21}$
$LABEL_{5,21}$
INTERMEDIATE LABEL $IL_{10,21}$
FROM WHICH $IL_{1,\phi}$, $IL_{1,3}$, $IL_{2,4}$, $IL_{5,11}$
CAN BE DERIVED

FIG. 24

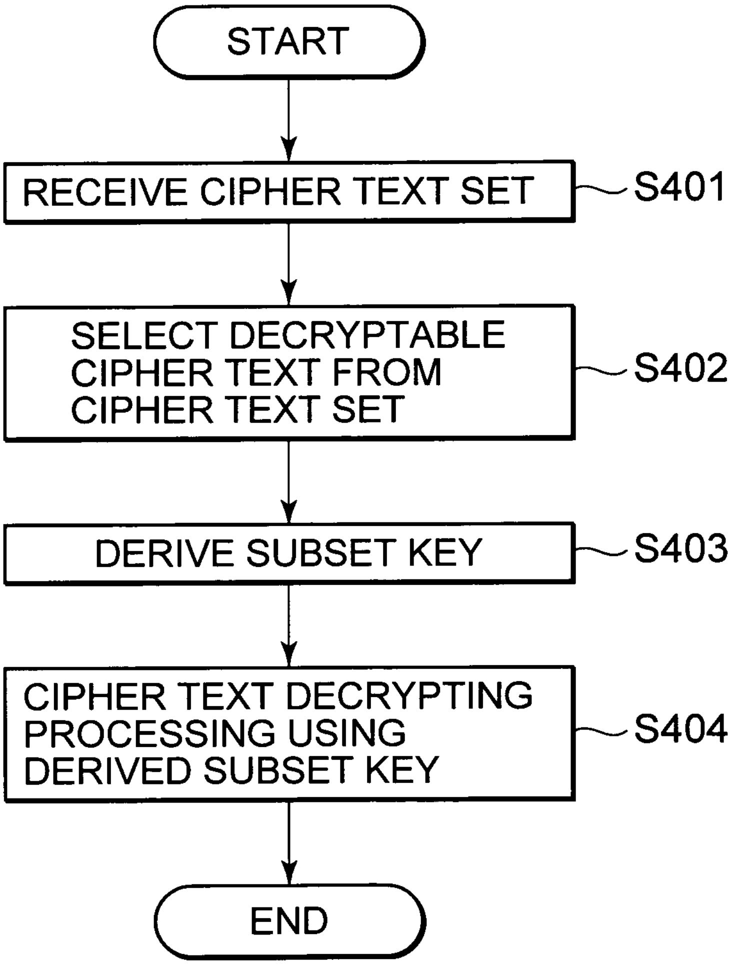
START
RECEIVE CIPHER TEXT SET
S401
SELECT DECRYPTABLE CIPHER TEXT FROM CIPHER TEXT SET
S402
DERIVE SUBSET KEY
S403
CIPHER TEXT DECRYPTING PROCESSING USING DERIVED SUBSET KEY
S404
END

FIG. 25

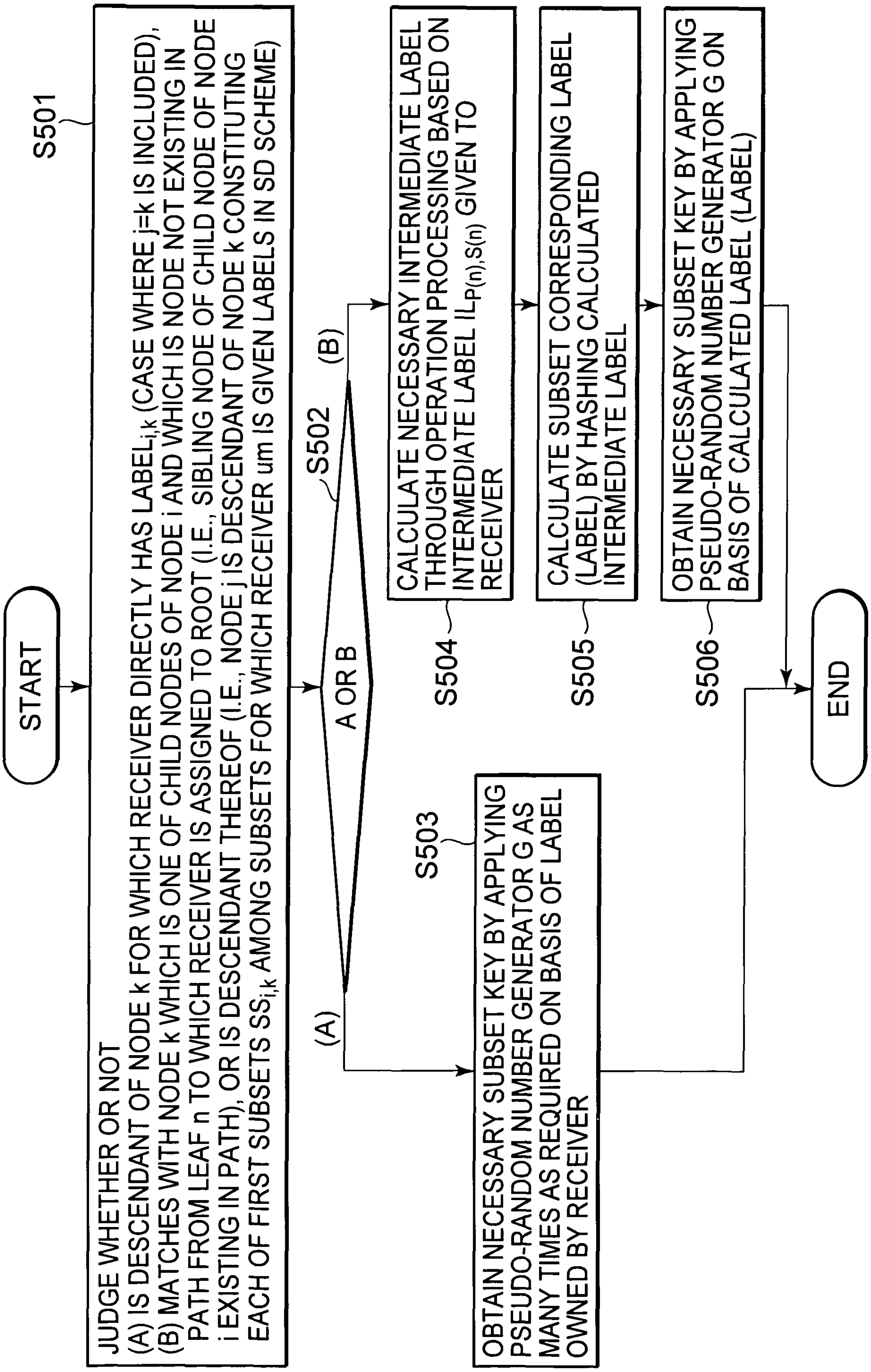
START
S501
JUDGE WHETHER OR NOT
(A) IS DESCENDANT OF NODE k FOR WHICH RECEIVER DIRECTLY HAS LABEL$_{i,k}$ (CASE WHERE j=k IS INCLUDED),
(B) MATCHES WITH NODE k WHICH IS ONE OF CHILD NODES OF NODE i AND WHICH IS NODE NOT EXISTING IN PATH FROM LEAF n TO WHICH RECEIVER IS ASSIGNED TO ROOT (I.E., SIBLING NODE OF CHILD NODE OF NODE i EXISTING IN PATH), OR IS DESCENDANT THEREOF (I.E., NODE j IS DESCENDANT OF NODE k CONSTITUTING EACH OF FIRST SUBSETS SS$_{i,k}$ AMONG SUBSETS FOR WHICH RECEIVER um IS GIVEN LABELS IN SD SCHEME)
S502
A OR B
(A)
(B)
S503
OBTAIN NECESSARY SUBSET KEY BY APPLYING PSEUDO-RANDOM NUMBER GENERATOR G AS MANY TIMES AS REQUIRED ON BASIS OF LABEL OWNED BY RECEIVER
S504
CALCULATE NECESSARY INTERMEDIATE LABEL THROUGH OPERATION PROCESSING BASED ON INTERMEDIATE LABEL $IL_{P(n),S(n)}$ GIVEN TO RECEIVER
S505
CALCULATE SUBSET CORRESPONDING LABEL (LABEL) BY HASHING CALCULATED INTERMEDIATE LABEL
S506
OBTAIN NECESSARY SUBSET KEY BY APPLYING PSEUDO-RANDOM NUMBER GENERATOR G ON BASIS OF CALCULATED LABEL (LABEL)
END

FIG. 26

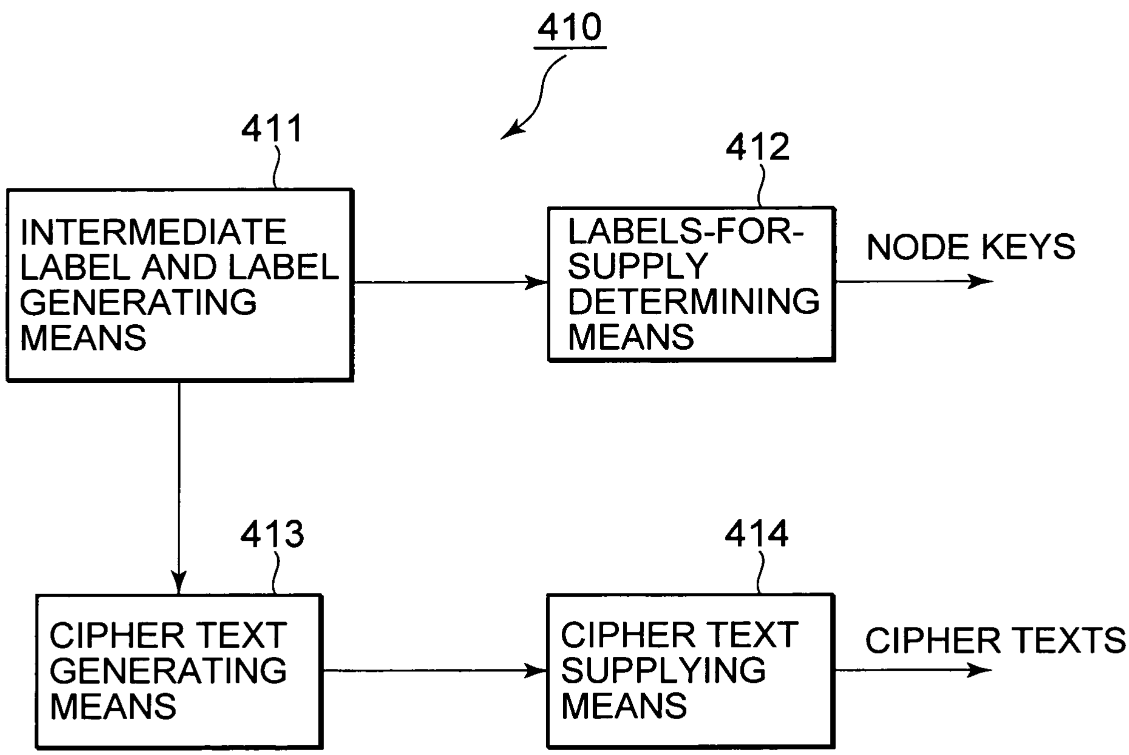
410
411
412
INTERMEDIATE LABEL AND LABEL GENERATING MEANS
LABELS-FOR-SUPPLY DETERMINING MEANS
NODE KEYS
413
414
CIPHER TEXT GENERATING MEANS
CIPHER TEXT SUPPLYING MEANS
CIPHER TEXTS

FIG. 27

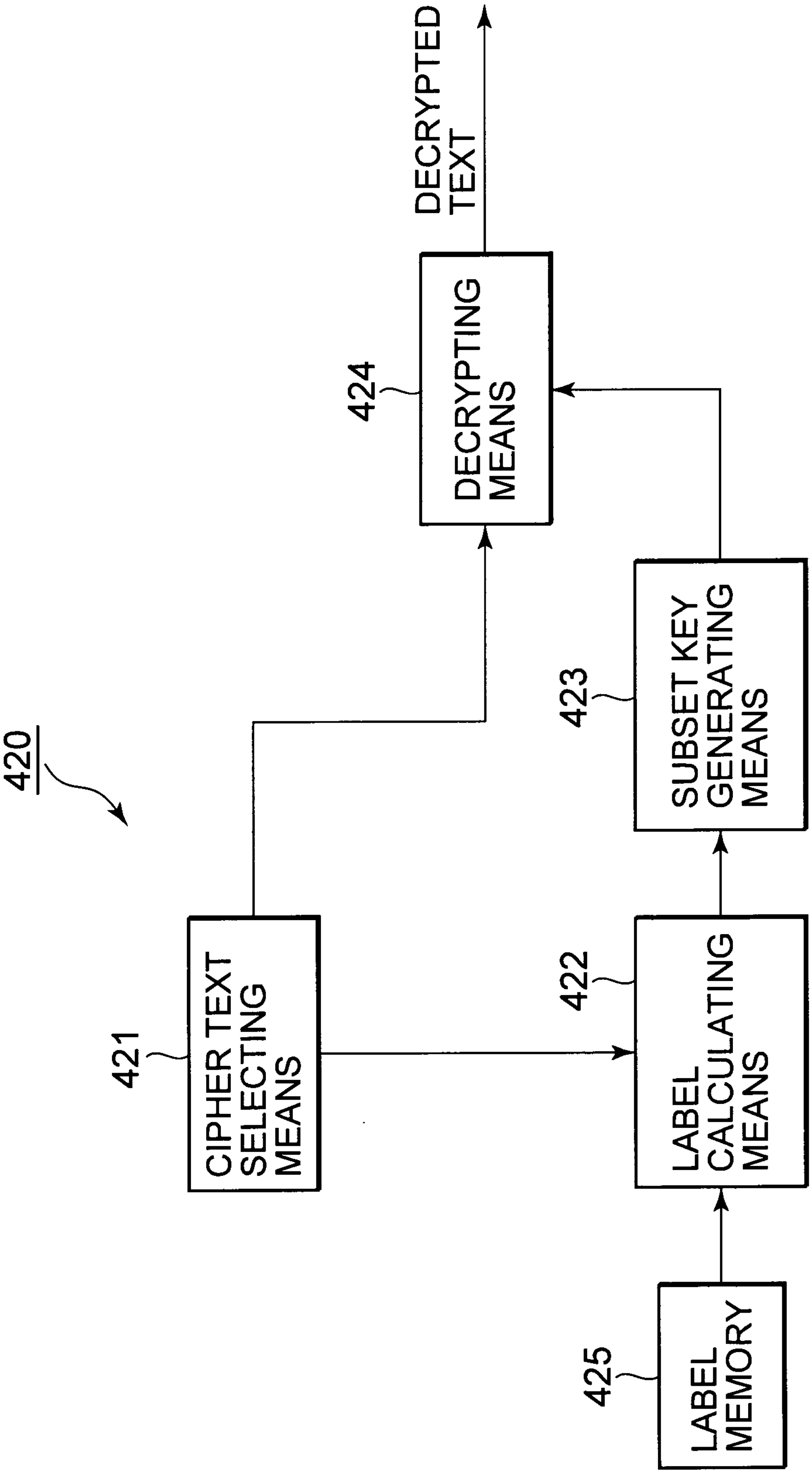
420
421
CIPHER TEXT SELECTING MEANS
422
LABEL CALCULATING MEANS
423
SUBSET KEY GENERATING MEANS
424
DECRYPTING MEANS
DECRYPTED TEXT
425
LABEL MEMORY

FIG. 28

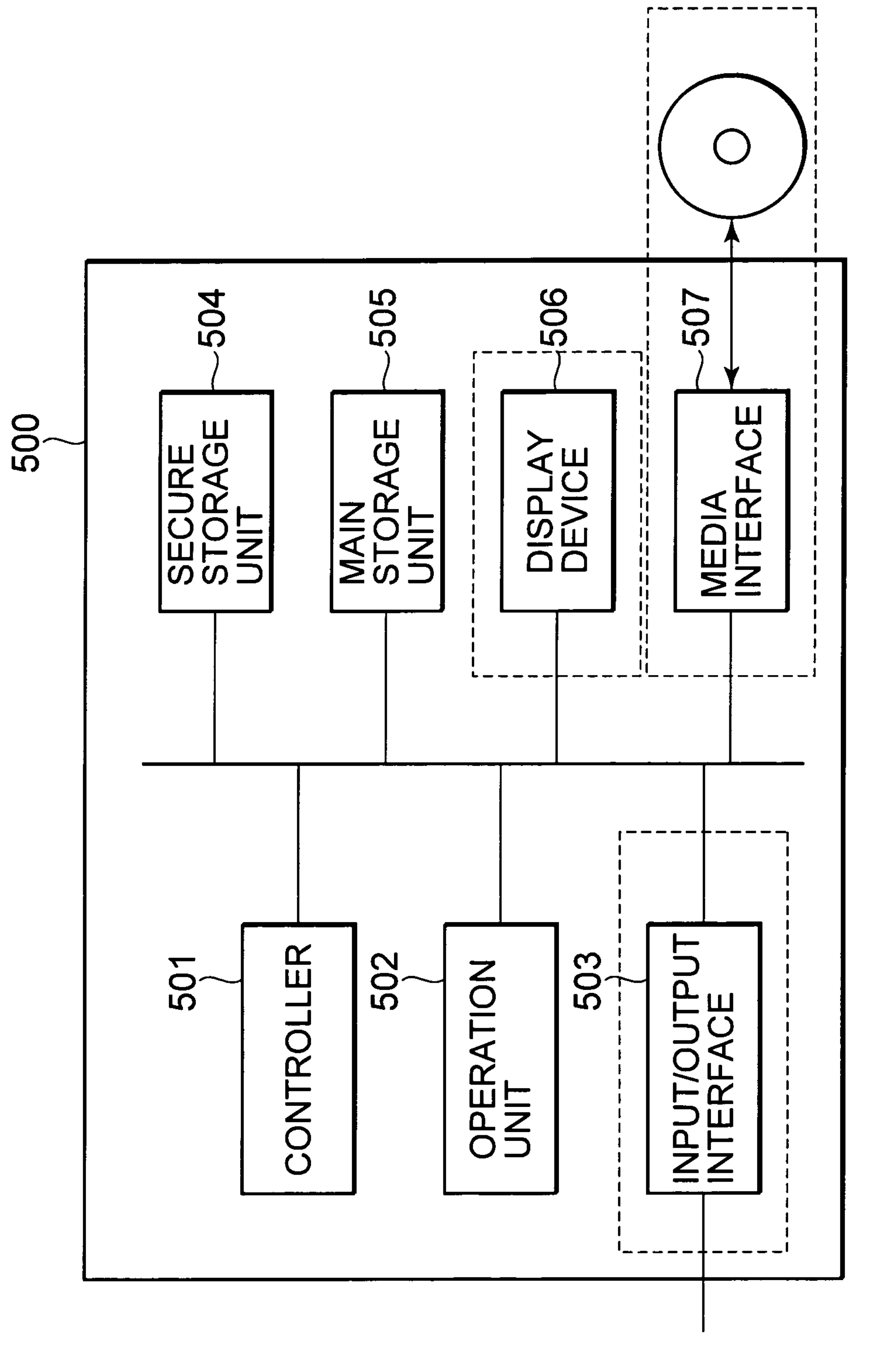
500
501
CONTROLLER
502
OPERATION UNIT
503
INPUT/OUTPUT INTERFACE
504
SECURE STORAGE UNIT
505
MAIN STORAGE UNIT
506
DISPLAY DEVICE
507
MEDIA INTERFACE

FIG. 29

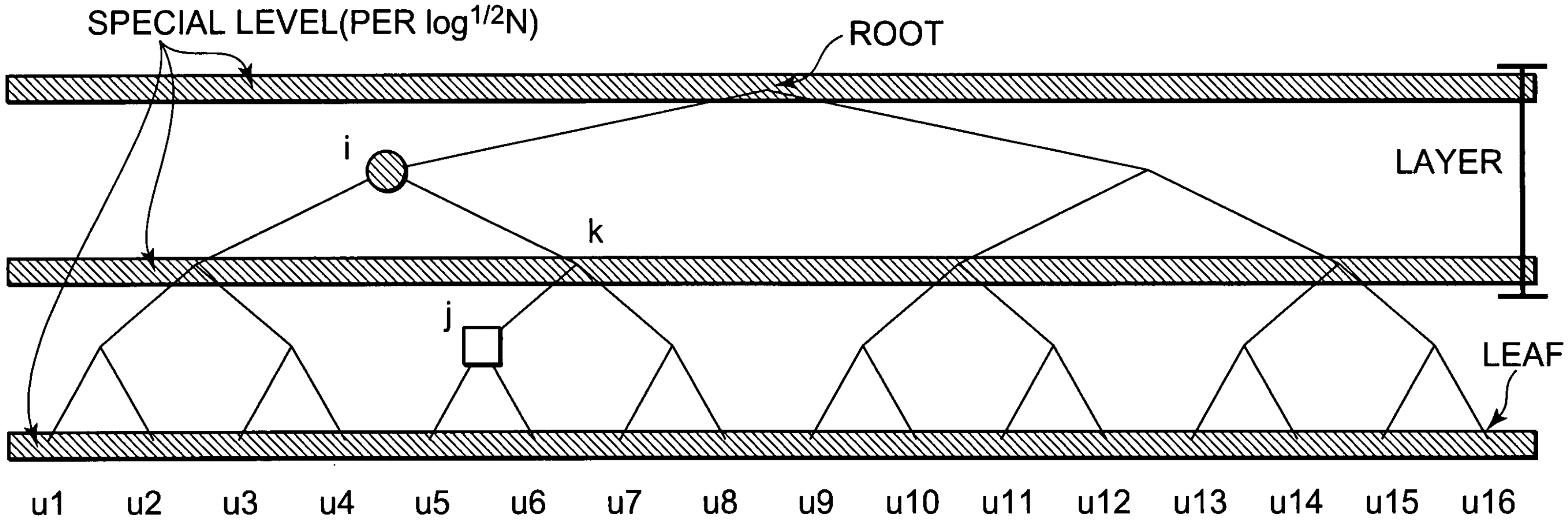


AMONG ALL SUBSET DIFFERENCE SETS $S_{i,j}$, ANY SET SATISFYING AT LEAST ONE OF CONDITIONS

· BOTH i AND j BELONG TO SAME LAYER

· i IS AT SPECIAL LABEL

IS DEFINED

IN ABOVE EXAMPLE, $S_{i,j}$ IS NOT DEFINED. IT IS REPRESENTED AS UNION OF TWO SETS, SUCH AS

$S_{i,j} = S_{i,k} \cup S_{k,j}$

→AMOUNTS OF COMMUNICATION DATA DOUBLES AT MAXIMUM COMPARED WITH THAT OF SD

ONE KIND OF SPECIAL LEVEL IN Basic LSD. PLURAL KINDS OF SPECIAL LEVELS IN General LSD

# FIG. 30

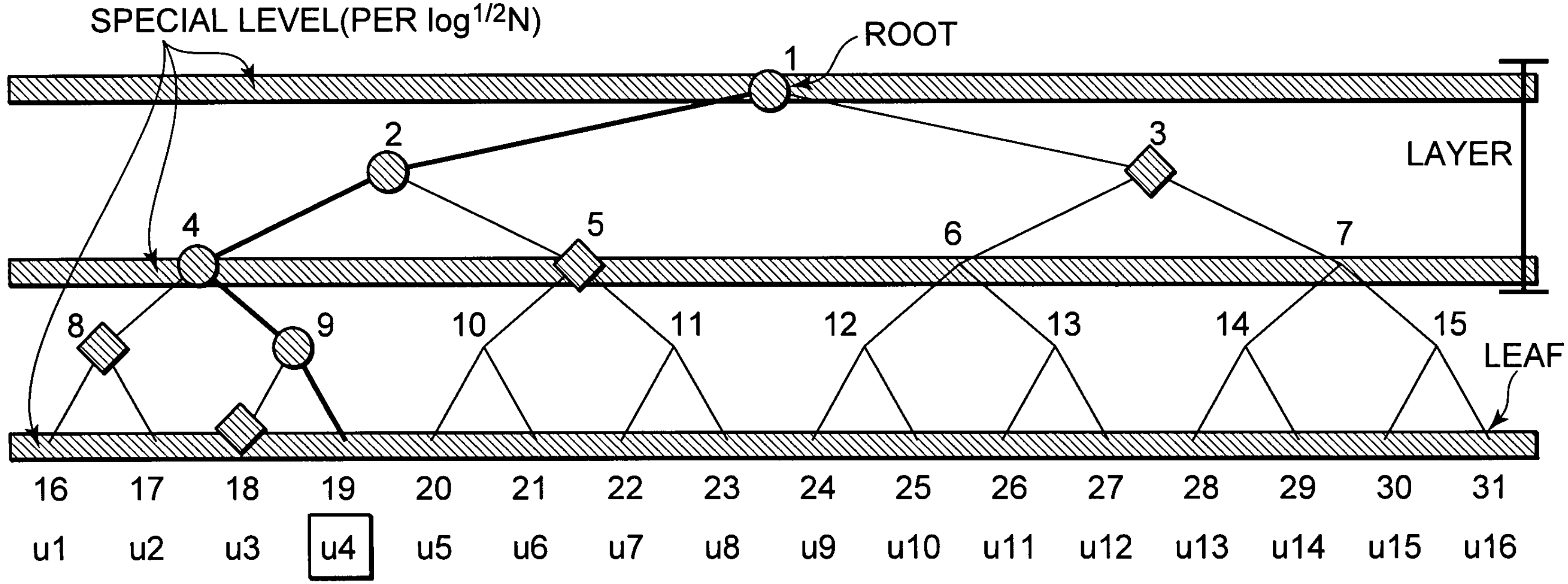


LABELS OWNED BY u4
- j = 3, 5, 8, 18 FOR i = 1
- j = 5 FOR i = 2
- j = 8, 18 FOR i = 4
- j = 18 FOR i = 9
- ONE LABEL ($LABEL_{1,\phi}$) IN CASE OF NO REVOCATION

NUMBER OF LABELS HELD BY RECEIVER (INCLUDING ONE USED WHERE NONE ARE REVOKED) $\log^{3/2}N+1$

FIG. 31

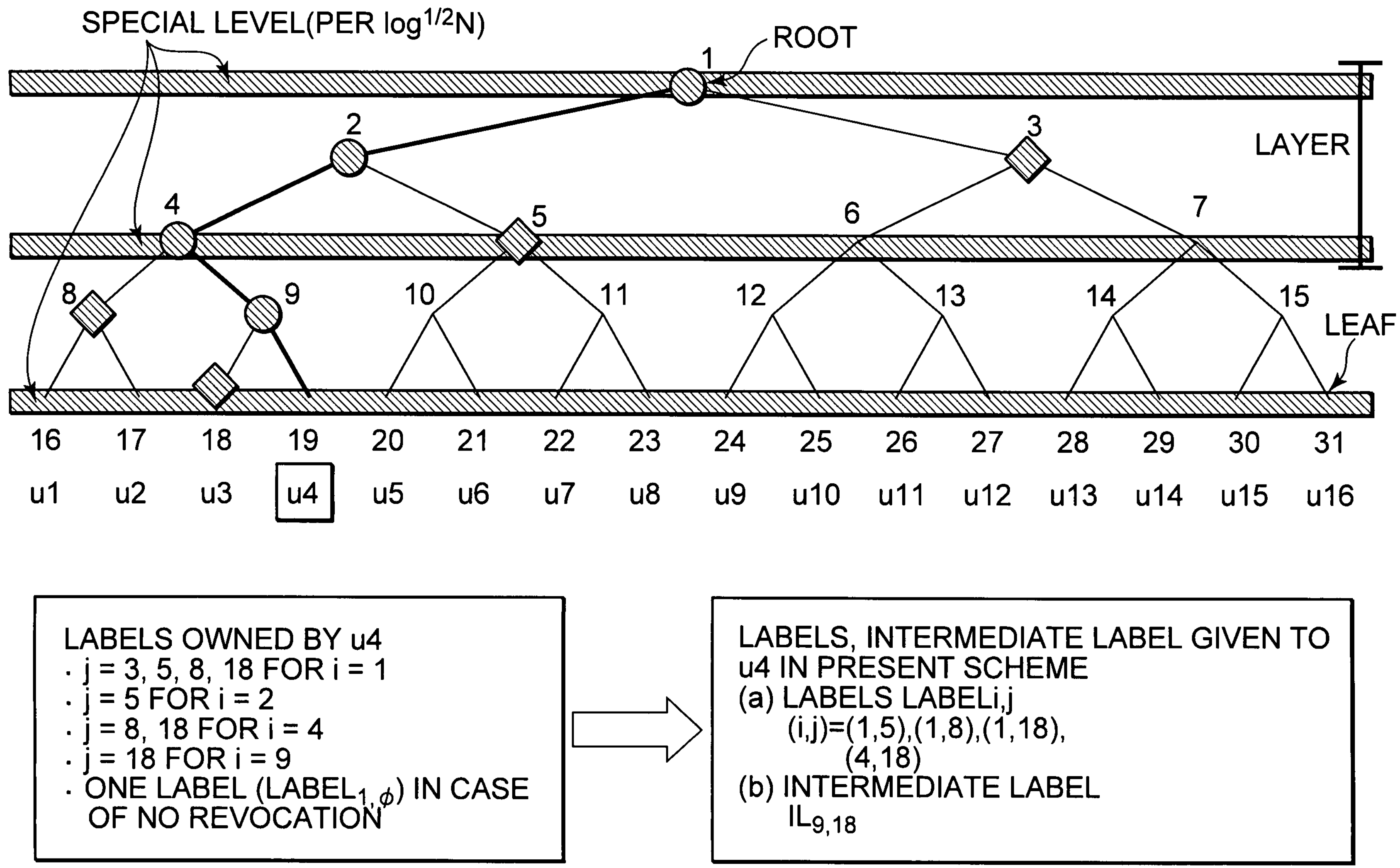

SPECIAL LEVEL(PER $\log^{1/2}N$)
ROOT
LAYER
LEAF
1
2
3
4
5
6
7
8
9
10
11
12
13
14
15
16 17 18 19 20 21 22 23 24 25 26 27 28 29 30 31
u1 u2 u3 u4 u5 u6 u7 u8 u9 u10 u11 u12 u13 u14 u15 u16
LABELS OWNED BY u4
· j = 3, 5, 8, 18 FOR i = 1
· j = 5 FOR i = 2
· j = 8, 18 FOR i = 4
· j = 18 FOR i = 9
· ONE LABEL ($LABEL_{1,\phi}$) IN CASE OF NO REVOCATION
LABELS, INTERMEDIATE LABEL GIVEN TO u4 IN PRESENT SCHEME
(a) LABELS LABELi,j
(i,j)=(1,5),(1,8),(1,18),(4,18)
(b) INTERMEDIATE LABEL
$IL_{9,18}$

**INTERNATIONAL SEARCH REPORT**

International application No.
PCT/JP2005/002787

A. CLASSIFICATION OF SUBJECT MATTER
Int.Cl[7] H04L9/08, G06F12/14

According to International Patent Classification (IPC) or to both national classification and IPC

B. FIELDS SEARCHED

Minimum documentation searched (classification system followed by classification symbols)
Int.Cl[7] H04L9/08, G06F12/14

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | Tomoyuki ASANO, "SD/LSD Broadcast Encryption Hoshiki no Label no Sakugen Shuho", 2004 Nen Ango to Joho Security Symposium Yokoshu, Vol.I of II, pages 77 to 82, 27 January, 2004 (27.01.04), particularly, 2 improvement relating to SD, 4 improvement relating to LSD | 10,13,14,30,33,34,42<br>1-9,11,12,15-29,31,32,35-41,43 |
| Y | Ryo NOJIMA et al., "Ichihokosei Kansu ni yoru Mokukozo Kagikannri Hoshiki no Koritsuka", 2004 Nen Ango to Joho Security Symposium Yokoshu, Vol.I of II, pages 189 to 194, 27 January, 2004 (27.01.04), particularly, 1 introduction, 3.1 proposal system, 4 conclusion | 1-9,11,12,15-29,31,32,35-41,43 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 12 July, 2005 (12.07.05) | 02 August, 2005 (02.08.05) |
| Name and mailing address of the ISA/<br>Japanese Patent Office<br>Facsimile No. | Authorized officer<br><br>Telephone No. |

Form PCT/ISA/210 (second sheet) (January 2004)

INTERNATIONAL SEARCH REPORT

International application No.
PCT/JP2005/002787

C (Continuation). DOCUMENTS CONSIDERED TO BE RELEVANT

| Category* | Citation of document, with indication, where appropriate, of the relevant passages | Relevant to claim No. |
|---|---|---|
| Y | Wakaha OGATA et al., "RSA Ango o Riyo shita Koritsutekina Mokukozo Kanri Hoshiki", 2004 Nen Ango to Joho Security Symposium Yokoshu, Vol.I of II, pages 195 to 199, 27 January, 2004 (27.01.04), particularly, 3 proposal system | 5,25 |
| A | WO 02/060116 A2 (INTERNATIONAL BUSINESS MACHINES CORP.), 01 August, 2002 (01.08.02), All pages | 1-43 |

Form PCT/ISA/210 (continuation of second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001352322 A


### Non-patent literature cited in the description


- *Advances in Cryptography - Crypto 2001,* 2001, vol. 2139, 41-62
- *Advances in Cryptography - Crypto 2002,* 2002, vol. 2442, 47-60
- **A.J. MENEZES ; P.C. VAN OORSCHOT ; S.A. VANSTONE.** Handbook of Applied Cryptography. CRC Press, 1996